# EUROPEAN PATENT SPECIFICATION

(11) **EP 3 065 042 B1**
(45) Date of publication and mention of the grant of the patent: **07.11.2018**
(21) Application number: 15003243.1
(22) Date of filing: 13.11.2015
(51) Int. Cl.: B64C 39/02, B64D 47/08, G06F 3/041, H04N 5/232, G06F 3/0481, G06F 3/0346, G06F 3/0484, G06F 3/0488, G05D 1/00

(54) **MOBILE TERMINAL AND METHOD FOR CONTROLLING THE SAME**
TRAGBARES ENDGERÄT UND VERFAHREN ZUR STEUERUNG DAVON
TERMINAL MOBILE ET SON PROCÉDÉ DE COMMANDE

(30) Priority: 13.02.2015 US 201562115982 P; 15.05.2015 KR 20150068223; 11.06.2015 KR 20150082823
(43) Date of publication of application: 07.09.2016
(73) Proprietor: LG Electronics Inc., Seoul 07336 (KR)
(72) Inventor: CHO, Taehoon, Seoul 06772 (KR); JEONG, Jaewoo, Seoul 06772 (KR)
(74) Representative: Beyer, Andreas

(56) References cited:
- EP-A2- 2 835 964
- US-A1- 2010 305 778
- US-A1- 2014 313 332
- US-B1- 8 903 568

## Description

### BACKGROUND OF THE INVENTION

### 1. Field of the Invention

The present disclosure relates to a mobile terminal capable of controlling an unmanned aerial vehicle.

### 2. Description of the Related Art

Mobile terminals include all types of devices configured to have a battery and a display unit, and display information on the touchscreen using power supplied from the battery, and formed to allow a user to hand-carry it. The mobile terminal can record and play a video and display a graphic user interface (GUI), and includes a laptop computer, a portable phone, glasses, a watch, a game machine, and the like capable of displaying screen information.

As it becomes multifunctional, a mobile terminal can capture still images or moving images, play music or video files, play games, receive broadcast and the like, so as to be implemented as an integrated multimedia player. Moreover, efforts are ongoing to support and increase the functionality of mobile terminals. Such efforts include software and hardware improvements, as well as changes and improvements in the structural components.

In recent years, various technologies for controlling the driving of an electronic device connected to a mobile terminal in a wireless manner have been developed. In case of controlling an unmanned aerial vehicle for which its flight is remotely controlled with a remote control device having move keys, a user can be unable to easily recognize the flight location of the unmanned aerial vehicle, thereby causing inconvenience in manipulation in a desired direction.

US 8 903 568 B1 discloses a remote control method and apparatus for controlling the state of a movable object and/or a load carried thereon. In particular, a movable object being capable of moving automatically and/or along a predetermined/fixed path or a track is suggested therein.

Document US2010/0305778 A1 discloses an adaptive user interface for semiautomatic operation.

### SUMMARY OF THE INVENTION

Accordingly, one aspect of the present disclosure is to provide a mobile terminal capable of more intuitively controlling an unmanned aerial vehicle.

In order to accomplish the foregoing task of the present disclosure, a mobile terminal according to an embodiment may perform wireless communication with an unmanned aerial vehicle having a camera configured to capture an external environment during flight, and the mobile terminal may include a body, a touchscreen mounted on one surface of the body to receive a touch input, a wireless communication unit configured to perform wireless communication with the unmanned aerial vehicle, a sensing unit configured to sense the posture and movement of the body, and a controller configured to form a flight control command of the unmanned aerial vehicle based on the touch input and the movement in a first mode in which the touchscreen is disposed in a length direction with respect to gravity, and form a capture control command of the camera based on the touch input along with the flight control command in a second mode in which the touchscreen is disposed in a width direction with respect to gravity.

According to an example associated with the present disclosure, a first mode and a second mode may be switched by the rotation of the mobile terminal body, and a control command may be formed in various ways in the first and the second mode, respectively, In other words, when a focus-me mode is activated in the second mode, the camera of the unmanned aerial vehicle may continuously capture a user of the mobile terminal, thereby allowing the user to sense his or her own location by himself or herself, and image a surrounding environment including the user.

According to an example associated with the present disclosure, the flight of an unmanned aerial vehicle may be controlled based on the movement of the body in the first mode, and the flight direction and flight speed of the unmanned aerial vehicle may be controlled by a touch in the second mode, thereby allowing more fine manipulation.

According to an example associated with the present disclosure, the touchscreen may be divided into a first control region for controlling flight and a second control region for controlling a function of the camera in the second mode to control each function in an independent manner. Furthermore, a desired region may be extended on the display unit, thereby allowing more precise control.

In order to accomplish the foregoing task of the present disclosure, a mobile terminal according to another embodiment may perform wireless communication with an unmanned aerial vehicle having a camera configured to capture an external environment during flight, and the mobile terminal may include a body, a touchscreen mounted on one surface of the body to receive a touch input, a sensing unit configured to sense the movement of the body, a wireless communication unit configured to perform wireless communication with the unmanned aerial vehicle, and a controller, and when a flight path containing the information of a capture target object to be captured by the camera is set, the controller may control the touchscreen to display a capture mode icon corresponding to a plurality of capture modes for capturing the capture target object in an automatic control mode, and form a flight control command and a capture control command for controlling the camera based on a capture mode selected by a touch applied to the touchscreen and the flight path, and change the flight path and the capture mode based on the touch input and the movement sensed in the automatic control mode. Accordingly, the user can switch to a manual control mode from an automatic control mode in case of need while controlling an unmanned aerial vehicle to change the flight path and capture mode.

According to an embodiment, the controller may control the touchscreen to display a capture mode icon corresponding to at least one capture mode based on the flight path in the automatic control mode, and information associated with the capture mode may be stored in a memory unit or received from a specific server. Accordingly, an unmanned aerial vehicle may be controlled by a presets control command, and thus it may not be required for the user to manually form a control command of the unmanned aerial vehicle.

According to an embodiment, when the flight path contains a plurality of index locations, and the selected index location corresponds to a capture target object, the controller may select a capture mode for capturing the index location based on information associated with an index location selected from the plurality of index locations, and the touchscreen may display the index location and an icon corresponding to the selected capture mode on a map screen. According to an embodiment, a user can select a capture mode suitable to each index location, thereby receiving a more stable capture image.

According to an embodiment of the present disclosure, the touchscreen can be disposed in a horizontal or vertical direction through the rotation of the mobile terminal to activate different modes, thereby forming different control commands transmitted to an unmanned aerial vehicle based on different control modes.

In case of a vertical mode, the flight direction and flight speed of an unmanned aerial vehicle may be controlled using an inclination of the body, and flight may be controlled in a more precise manner in case of a horizontal mode.

Furthermore, in case of a vertical mode, the flight as well as camera may be controlled based on a touch applied to the divided display unit, thereby imaging a desired region using an unmanned aerial vehicle in a more accurate manner.

Furthermore, a location captured by an unmanned aerial vehicle may be seen in real time through the camera, thereby more easily moving the unmanned aerial vehicle to a desired region.

Furthermore, an unmanned aerial vehicle may be controlled by selecting a flight control command and a capture control command previously set based on a specific criteria in an automatic control mode, and thus may not be necessarily controlled in a manual control mode, and allowed to capture when flying a region that is unseen by the user based on a capture mode suitable to the characteristics of a flight path, thereby acquiring a stable capture image.

Further scope of applicability of the present invention will become apparent from the detailed description given hereinafter. However, the detailed description and specific examples, while indicating preferred embodiments, are given by illustration only, since various changes and modifications within the scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1A is a block diagram illustrating a mobile terminal associated with the present disclosure;
FIGS. 1B and 1C are conceptual views in which a mobile terminal associated with the present disclosure is seen from different directions;
FIG. 2A is a flow chart illustrating a control method of a mobile terminal according to an embodiment of the present disclosure;
FIG. 2B is a conceptual view illustrating the control method of FIG. 2A;
FIG. 3A is a conceptual view illustrating the movement of a mobile terminal forming a flight control command;
FIG. 3B is a conceptual view illustrating the movement of a mobile terminal for controlling an unmanned aerial vehicle;
FIG. 3C is a conceptual view illustrating the flight of an unmanned aerial vehicle corresponding to the movement of a mobile terminal illustrated in FIG. 3C;
FIGS. 4A through 4C are conceptual views illustrating a control method of a mobile terminal for controlling an unmanned aerial vehicle in a vertical mode according to an embodiment;
FIGS. 5A through 5D are conceptual views illustrating a control method of controlling the flight of an unmanned aerial vehicle in a vertical mode;
FIGS. 6A through 6D are conceptual view illustrating a control method for controlling the unmanned aerial vehicle in a horizontal mode;
FIGS. 7A through 7E are conceptual views illustrating a control method of forming a flight control command and a capture control command in a horizontal mode;
FIGS. 8A and 8B are conceptual views illustrating a control method for controlling a camera of an unmanned aerial vehicle;
FIGS. 9A through 9E are conceptual views illustrating a control method of controlling an unmanned aerial vehicle based on a touch applied to the touchscreen 151 partitioned according to another embodiment;
FIGS. 10A and 10B are conceptual views illustrating a control method when a second control region for controlling a camera is extended;
FIGS. 11A through 11C are conceptual views illustrating a control method according to another embodiment in a horizontal mode;
FIG. 12A is a flow chart illustrating a control method of a mobile terminal according to an embodiment of the present disclosure, and FIGS. 12B and 12C are conceptual views illustrating the control method of FIG. 12A;
FIGS. 12D and 12E are conceptual views illustrating a control method of forming a flight control command and a capture control command based on a touch input and the movement of the body in a manual control mode;
FIG. 13 is a conceptual view illustrating a control method of limiting a manual control mode;
FIG. 14 is a conceptual view illustrating an execution screen in case of a horizontal mode;
FIGS. 15A and 15B are conceptual views illustrating a control method of setting a flight path according to another embodiment;
FIGS. 16A through 16H are conceptual views illustrating a capture mode when a capture target object is set;
FIGS. 17A through 17H are conceptual views illustrating a capture mode for capturing a flight path according to various embodiments;
FIGS. 18A through 18C are conceptual views illustrating a control method for setting a flight path of an unmanned aerial vehicle according to another embodiment;
FIG. 19A is a flow chart illustrating a control method of setting a capture mode on a flight path, and FIGS. 19B and 19C are conceptual views illustrating the control method of FIG. 19A;
FIG. 20A is a conceptual view illustrating a control method of a mobile terminal for controlling a plurality of cameras mounted on an unmanned aerial vehicle;
FIG. 20B is a conceptual view illustrating a control method of a capture image captured by a plurality of cameras;
FIG. 20C is a conceptual view illustrating an embodiment in which a plurality of mobile terminals are connected to an unmanned aerial vehicle in a wireless manner;
FIGS. 21A through 21G are conceptual views illustrating a control method of setting a capture mode based on a specific manual;
FIG. 22 is a conceptual view illustrating a control method of controlling an unmanned aerial vehicle according to another embodiment;
FIGS. 23A through 23D are conceptual views illustrating a control method of editing a flight path; and
FIG. 24A is a flow chart illustrating a control method of controlling a flight path for charging an unmanned aerial vehicle, and FIG. 24B is a conceptual view illustrating the control method of FIG. 24A.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like. However, it may be easily understood by those skilled in the art that the configuration according to the exemplary embodiments of this specification can also be applied to stationary terminals such as digital TV, desktop computers and the like, excluding a case of being applicable only to the mobile terminals.

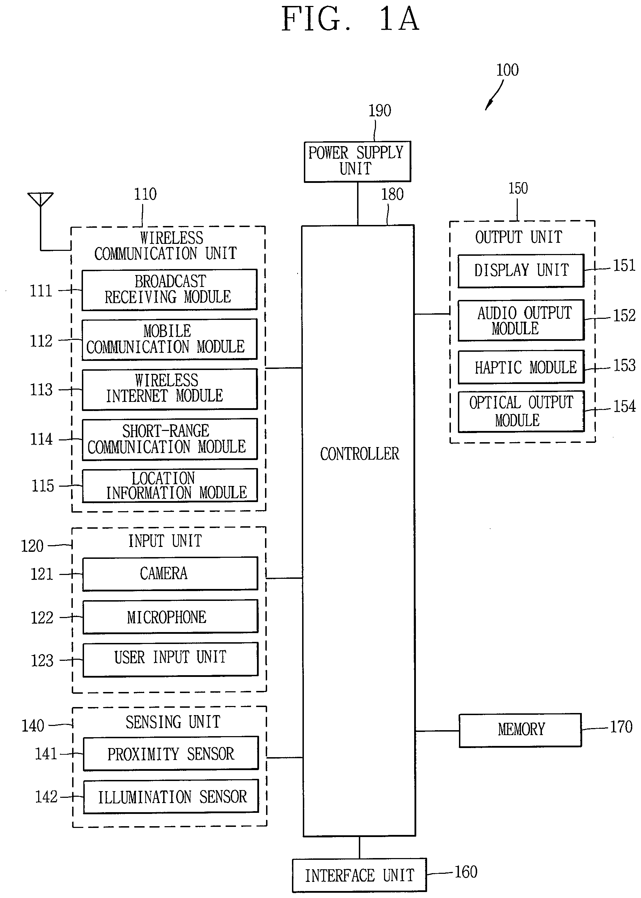

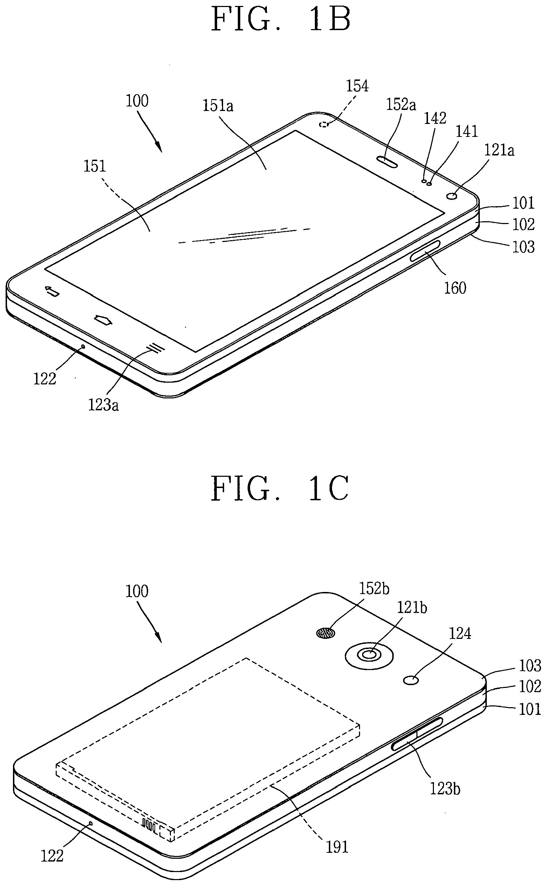

Referring to FIGS. 1A through 1C, FIG. 1A is a block diagram of a mobile terminal illustrating a mobile terminal associated with the present disclosure, and FIGS. 1B and 1C are conceptual views in which an example of the mobile terminal is seen from different directions. The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located. For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone (refer to reference numeral 122), a battery gauge, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). Further, the mobile terminal disclosed herein may utilize information in such a manner of combining information sensed by at least two sensors of those sensors.

The output unit 150 may be configured to output an audio signal, a video signal or a tactile signal. The output unit 150 may include a touchscreen 151, an audio output module 152, a haptic module 153, an optical output module 154 and the like. The touchscreen 151 can have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). Further, the application programs may be stored in the memory 170, installed in the mobile terminal 100, and executed by the controller 180 to perform an operation (or a function) of the mobile terminal 100.

The controller 180 can typically control an overall operation of the mobile terminal 100 in addition to the operations associated with the application programs. The controller 180 can provide or process information or functions appropriate for a user by processing signals, data, information and the like, which are input or output by the aforementioned components, or activating the application programs stored in the memory 170.

The controller 180 can control at least part of the components illustrated in FIG. 1A, in order to drive the application programs stored in the memory 170. In addition, the controller 180 can drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration. First, considering the wireless communication unit 110, the broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), etc.) Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies. Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which can exchange data with the mobile terminal 100 (or to cooperate with the mobile terminal 100). The short-range communication module 114 may sense (recognize) a wearable device, which can communicate with the mobile terminal), near the mobile terminal 100. In addition, when the sensed wearable device is a device which is authenticated to communicate with the mobile terminal 100 according to an embodiment of the present disclosure, the controller 180 can transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of another module of the wireless communication unit 110 to obtain data for the position of the mobile terminal in a substitutional or additional manner. The location information module 115 may be a module used to acquire the position (or current position) of the mobile terminal, and may not be necessarily limited to a module for directly calculating or acquiring the position of the mobile terminal.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the touchscreen 151. Further, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). Further, the microphone 122 may include assorted noise removing algorithms to remove noise generated in the course of receiving the external audio signal.

The user input unit 123 may receive information input by a user. When information is input through the user input unit 123, the controller 180 can control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. Further, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 can control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). Further, the controller 180 can process data (or information) corresponding to the proximity touches and the proximity touch patterns sensed by the proximity sensor 141, and output visual information corresponding to the process data on the touch screen. In addition, the controller 180 can control the mobile terminal 100 to execute different operations or process different data (or information) according to whether a touch with respect to the same point on the touch screen is either a proximity touch or a contact touch.

A touch sensor can sense a touch (or touch input) applied onto the touch screen (or the touchscreen 151) using at least one of various types of touch methods, such as a resistive type, a capacitive type, an infrared type, a magnetic field type, and the like. As one example, the touch sensor may be configured to convert changes of pressure applied to a specific part of the touchscreen 151 or a capacitance occurring from a specific part of the touchscreen 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 can sense which region of the touchscreen 151 has been touched. Here, the touch controller may be a component separate from the controller 180 or the controller 180 itself.

Further, the controller 180 can execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program. Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 can calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor. The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The touchscreen 151 can output information processed in the mobile terminal 100. For example, the touchscreen 151 can display execution screen information of an application program driven in the mobile terminal 100 or user interface (UI) and graphic user interface (GUI) information in response to the execution screen information.

The touchscreen 151 can also be implemented as a stereoscopic touchscreen for displaying stereoscopic images. The stereoscopic touchscreen 152 may employ a stereoscopic display scheme such as stereoscopic scheme (a glass scheme), an auto-stereoscopic scheme (glassless scheme), a projection scheme (holographic scheme), or the like.

The audio output module 152 can output audio data received from the wireless communication unit 110 or stored in the memory 170 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 can generate various tactile effects the user can feel. A typical example of the tactile effect generated by the haptic module 153 may be vibration. Strength, pattern and the like of the vibration generated by the haptic module 153 can be controllable by a user selection or setting of the controller. For example, the haptic module 153 can output different vibrations in a combining manner or a sequential manner.

Besides vibration, the haptic module 153 can generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 can be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 can output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 can be implemented so the mobile terminal emits monochromatic light or light with a plurality of colors. The signal output can be terminated as the mobile terminal senses a user's event checking.

The interface unit 160 may serve as an interface with every external device connected with the mobile terminal 100. For example, the interface unit 160 can receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 can serve as a passage to allow power from the cradle to be supplied to the mobile terminal 100 therethrough or can serve as a passage to allow various command signals input by the user from the cradle to be transferred to the mobile terminal therethrough. Various command signals or power input from the cradle can operate as signals for recognizing that the mobile terminal is properly mounted on the cradle.

The memory 170 can store programs for operations of the controller 180 and temporarily store input/output data (for example, phonebook, messages, still images, videos, etc.). The memory 170 can store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 can be operated in relation to a web storage device that performs the storage function of the memory 170 over the Internet.

As aforementioned, the controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform controlling and processing associated with voice calls, data communications, video calls, and the like, or perform pattern recognition processing to recognize a handwriting input or a picture drawing input performed on the touch screen as characters or images, respectively. In addition, the controller 180 can control one or combination of those components in order to implement various exemplary embodiment disclosed herein on the mobile terminal 100.

The power supply unit 190 can receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected. As another example, the power supply unit 190 may be configured to recharge the battery in a wireless manner without use of the connection port. Here, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A touchscreen 151 can be disposed on a front surface of the terminal body to output information. As illustrated, a window 151a of the touchscreen 151 can be mounted to the front case 101 so as to form the front surface of the terminal body together with the front case 101. In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. Further, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like. Unlike the example which the plurality of cases form an inner space for accommodating such various components, the mobile terminal 100 may be configured such that one case forms the inner space. In this example, a mobile terminal 100 having a uni-body formed so synthetic resin or metal extends from a side surface to a rear surface may also be implemented.

Further, the mobile terminal 100 may include a waterproofing unit for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a touchscreen 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the touchscreen 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIG. 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The touchscreen 151 can output information processed in the mobile terminal 100. For example, the touchscreen 151 can display execution screen information of an application program driven in the mobile terminal 100 or user interface (UI) and graphic user interface (GUI) information in response to the execution screen information. The touchscreen 151 can include at least one of a liquid crystal display (LCD), a thin film transistor-liquid crystal display (TFT-LCD), an organic light emitting diode (OLED), a flexible display, a 3-dimensional (3D) display, and an e-ink display.

The touchscreen 151 can be implemented in two or more in number according to a configured aspect of the mobile terminal 100. For instance, a plurality of the display units 151 may be arranged on one surface to be spaced apart from or integrated with each other, or may be arranged on different surfaces. The touchscreen 151 can include a touch sensor which senses a touch onto the touchscreen so as to receive a control command in a touching manner. When a touch is input to the touchscreen 151, the touch sensor may be configured to sense this touch and the controller 180 can generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display on a rear surface of the window 151a or patterned directly on the rear surface of the window 151a. Or, the touch sensor may be integrally formed with the display. For example, the touch sensor may be disposed on a substrate of the display or within the display. The touchscreen 151 can form a touch screen together with the touch sensor. Here, the touch screen may serve as the user input unit 123 (see FIG. 1A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds. The window 151a of the touchscreen 151 can include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this instance, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the touchscreen 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure is not limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the touchscreen 151, or the like.

Further, as another example of the user input unit 123, a rear input unit may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the touchscreen 151, or the like. The rear input unit may be implemented into a form allowing a touch input, a push input or a combination thereof.

The rear input unit may be disposed to overlap the touchscreen 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the touchscreen 151 can be implemented to have a larger screen.

Further, the mobile terminal 100 may include a finger scan sensor which scans a user's fingerprint. The controller may use fingerprint information sensed by the finger scan sensor as an authentication means. The finger scan sensor may be installed in the touchscreen 151 or the user input unit 123. The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a. The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained. A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication. At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body. The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

Further, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the touchscreen 151 to extend the function of the mobile terminal 100. Another example of the accessory may be a touch pen for assisting or extending a touch input onto a touch screen.

A mobile terminal according to an embodiment of the present disclosure can perform wireless communication with an unmanned aerial vehicle to control a function of the unmanned aerial vehicle. Here, the unmanned aerial vehicle may be an aircraft that does not use a runway, wherein various functions such as transportation of a thing, capturing an image, low-altitude reconnaissance search can be mounted on a small-sized body formed in a relatively light weight. A mobile terminal according to an embodiment of the present disclosure may form a control command for controlling the flight of the unmanned aerial vehicle, and form a control command for controlling a camera configured to capture an external environment during flight among various electronic elements mounted on the unmanned aerial vehicle.

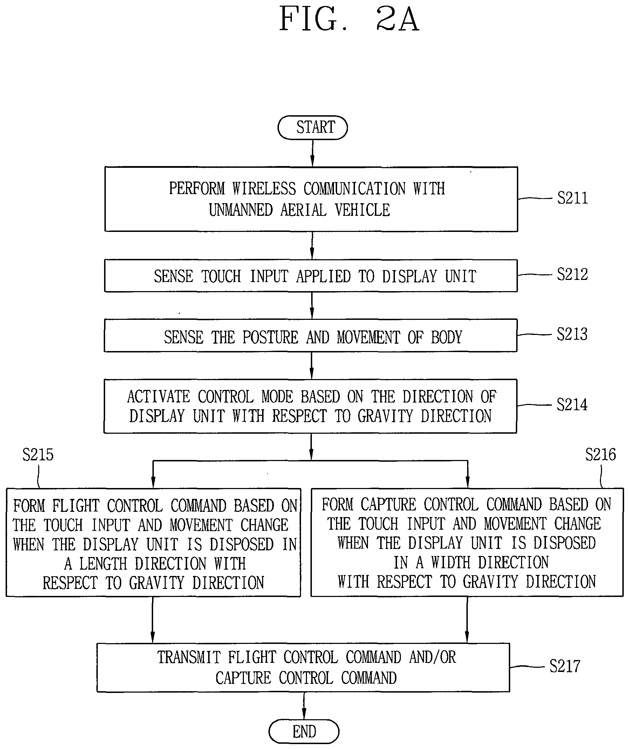

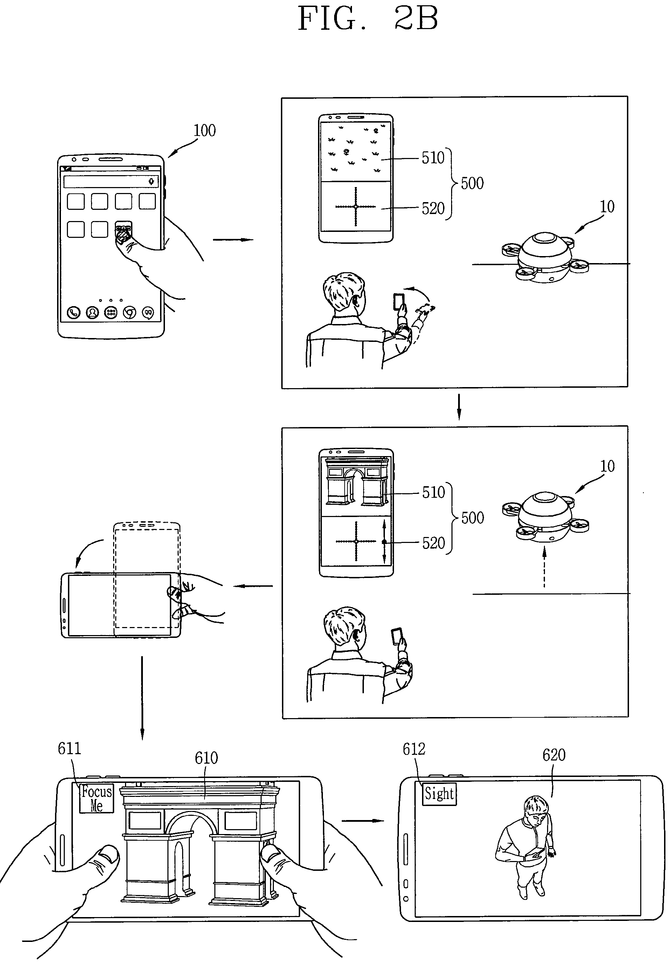

Hereinafter, a control method of controlling various functions of the unmanned aerial vehicle using the mobile terminal will be described. In particular, FIG. 2A is a flow chart illustrating a control method of a mobile terminal according to an embodiment of the present disclosure, and FIG. 2B is a conceptual view illustrating the control method of FIG. 2A.

Referring to FIGS. 2A and 2B, the mobile terminal 100 performs wireless communication with an unmanned aerial vehicle 10 having a camera (S210). For example, an application for controlling the unmanned aerial vehicle 10 may be provided on the mobile terminal. The touch screen 151 displays an icon of the application on a home screen page. The controller 180 executes the application based on a touch input applied to the icon, and displays a first control screen 500. The first control screen 500 may include a first image 510 corresponding to an image being captured by the camera of the unmanned aerial vehicle 10 and a second image 520 corresponding to a region for receiving a user's touch input to form a control command. The touch screen 151 is divided into a first and a second region to display the first and the second image 510, 520 in each region.

When the application is performed, the camera of the unmanned aerial vehicle 10 is activated to capture an external environment. In other words, the controller 180 transmits a control signal for activating the camera by the execution of the application. When the unmanned aerial vehicle 10 is supported on the ground, the first image 510 may correspond to a capture screen of the ground.

A touch input applied to the touchscreen 151 is sensed (S211). The posture and movement of the body is sensed when the application is executed (S213). Here, the posture of the body corresponds to the placement of a terminal from a specific criteria. For example, the posture may correspond to a placement sensed by the gravity sensor (G-sensor) included in the sensing unit 140. The operation mode of the mobile terminal is divided into a vertical mode and a horizontal mode based on the posture of the touchscreen 151 with respect to the direction of gravity.

The vertical mode corresponds to when the gravity direction is substantially the same as the length direction of the touchscreen 151 (or when an angle between the gravity direction and the length direction corresponds to less than a reference angle). The display direction of screen information displayed on the touchscreen 151 in the vertical mode is the same as the length direction of the touchscreen 151. Meanwhile, the horizontal mode corresponds to when the gravity direction crosses the length direction of the touchscreen 151 (or when an angle between the gravity direction and the length direction of the touchscreen 151 is larger than a reference angle). In other words, it corresponds to when the width direction of the touchscreen 151 and the gravity direction are arranged in substantially the same direction. The display direction of screen information in the horizontal mode is the same as the width direction of the touchscreen 151. In other words, the same screen information is displayed in different directions in the horizontal mode and vertical mode.

The movement is sensed by a sensing unit including the acceleration sensor, magnetic sensor, gravity sensor (G-sensor), gyroscope sensor, and the like. The sensing unit senses inclination, movement, rotation, and the like with respect to three axes perpendicular to one another defined around the center of the body. A control mode is selected based on the direction of the touchscreen 151 according to the posture of the body with respect to the gravity direction (S214). When either one of the horizontal mode and vertical mode is activated, the sensing unit senses the movement of the body based on its activated time point to form a control command. In other words, the movement of the body which is a basis of the control command corresponds to a relative change from a time point at which a specific mode is activated.

When the touchscreen is disposed such that the gravity direction crosses the length direction of the touchscreen 151, the controller 180 activates the horizontal mode and forms a flight control command based on a touch input applied to the touchscreen 151 and the sensed movement (S215). Here, the flight control command corresponds to a control command for controlling the movement of the unmanned aerial vehicle.

Referring to FIG. 2B, when an angle change of the body is sensed based on the movement of an end portion of the body when the mobile terminal is in a vertical mode while executing the application, the controller 180 forms a first flight control command of controlling flight for increasing the altitude of the unmanned aerial vehicle 10 (S215).

When the flight control command is formed, the controller 180 controls the wireless communication unit 110 to transmit the flight control command to the unmanned aerial vehicle 10. As illustrated in the drawing, upon receiving the first flight control command, the unmanned aerial vehicle 10 flies to be elevated from the ground. Furthermore, upon receiving image information captured from the camera of the unmanned aerial vehicle 10 controlled by the first flight control command, the touchscreen 151 displays first image 510 corresponding to the image information in the first region. Furthermore, the second region of the touchscreen 151 receives a touch input for forming and changing the flight control command. Furthermore, the touchscreen 151 can display a guide coordinate for guiding a touch input for forming the flight control command in the second region.

Further, when a movement corresponding to the flight control command is continuously sensed, the controller 180 controls a mode change according to the rotation of the body. The controller 180 activates a horizontal mode when the gravity direction is substantially the same as the width direction of the touchscreen 151 or an angle therebetween is less than a preset reference angle. In other words, when the body is disposed such that the gravity direction is in parallel with the width direction of the touchscreen 151, the flight control command and capture control command are formed based on a touch input applied to the touchscreen 151 and the movement of the body (S216).

In other words, the flight control command and the capture control command can be formed at the same time based on a distinguished user input (and the movement of the body) in the horizontal mode. The capture control command controls a capture range, a capture angle, and the like of the camera of the unmanned aerial vehicle 10. Furthermore, the flight of the unmanned aerial vehicle 10 for changing the capture range may be controlled based on the capture control command.

Flight control commands formed in the vertical mode and the horizontal mode can be formed by different methods and information included in the flight control commands may be distinguished from each other. This will be described in detail with reference to FIG. 2B. The controller 180 controls the wireless communication unit 110 to transmit at least one of the formed flight control command and the capture control command to the unmanned aerial vehicle 10 (S217).

Referring to FIG. 2B, the touchscreen 151 can display a capture image 610 captured and transmitted in real time by the camera of the unmanned aerial vehicle 10 in the horizontal mode. The display direction of the capture image corresponds to a width direction thereof. For example, when a touch input (multi-touch) is applied to two different regions of the touchscreen 151 at the same time in the horizontal mode, the controller 180 forms a capture control command for changing a capture range captured by the camera. The unmanned aerial vehicle 10 that has received the capture control command can control the flight of the unmanned aerial vehicle 10 and the camera to include a user of the mobile terminal in the capture range of the camera.

Specifically, when the first capture image 610 in which the user is not included is displayed on the touchscreen 151, a focus-me mode for capturing the user based on the multi-touch input is activated. In the focus-me mode, the unmanned aerial vehicle 10 is controlled to search the location of the user of the mobile terminal so as to capture the user by the camera. In other words, the camera is controlled to be located adjacent to the location of the mobile terminal to include the location of the mobile terminal in the capture range of the camera.

For example, when the focus-me mode is activated, the mobile terminal can transmit information on the location of the mobile terminal along with the capture control command. In order to capture an external device (mobile terminal) connected thereto in a wireless manner based on the capture control command in the focus-me mode, the unmanned aerial vehicle 10 rotates such that the camera faces the external device. Otherwise, when the focus-me mode is activated, the controller 180 can control the unmanned aerial vehicle 10 to rotate until sensing the user by the camera and adjust the capture range of the camera.

The location of the unmanned aerial vehicle 10 can be controlled to capture the user with only the rotation of the unmanned aerial vehicle 10 and angle adjustment of the camera without changing the location of the unmanned aerial vehicle 10 in the focus-me mode. When switched to the focus-me mode, the touchscreen 151 switches a first capture image 610 that has captured the user's surrounding environment to a second capture image 620 including the user as a subject.

In addition, the controller 180 controls the camera to continuously capture the user even when moved by a flight control command additionally received at the unmanned aerial vehicle 10 while the focus-me mode is performed. For example, when the unmanned aerial vehicle flies around another object based on an additional flight control command in the focus-me mode, the unmanned aerial vehicle is controlled to rotate with respect to an inner axis to capture the user.

In addition, the controller 180 releases the focus-me mode and activates a surrounding mode when a touch (multi-touch) input is applied again to two different regions at the same time while the focus-me mode is activated, and forms a control command for capturing the user's surrounding environment. The surrounding mode can be preset to capture a region at which the user looks. In the surrounding mode, the unmanned aerial vehicle 10 can rotate and move such that the camera is disposed away from the mobile terminal. Here, being disposed away denotes being disposed in an opposite direction to the mobile terminal contrary to being disposed toward the mobile terminal in the focus-me mode.

Further, the touchscreen 151 can display a first icon 611 for activating the focus-me mode on the first capture image 610, and display a second icon 612 for activating the surrounding mode on the second capture image 620. The controller 180 can activate the focus-me mode and the surrounding mode based on a touch applied to the first and the second icon 611, 612 to form the resultant capture control command and flight control command.

According to the present embodiment, the touchscreen 151 can be disposed in a horizontal or vertical direction through the rotation of the mobile terminal to activate a different control mode, and form a different control command transmitted to the unmanned aerial vehicle based on the different control mode. The controller 180 forms a control command for moving the unmanned aerial vehicle in a direction corresponding to the movement direction of the body. Hereinafter, a control method of controlling flight in response to the movement of the body will be described.

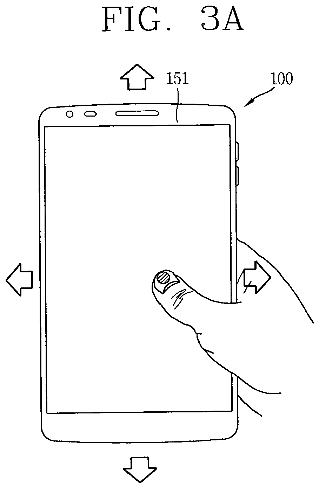

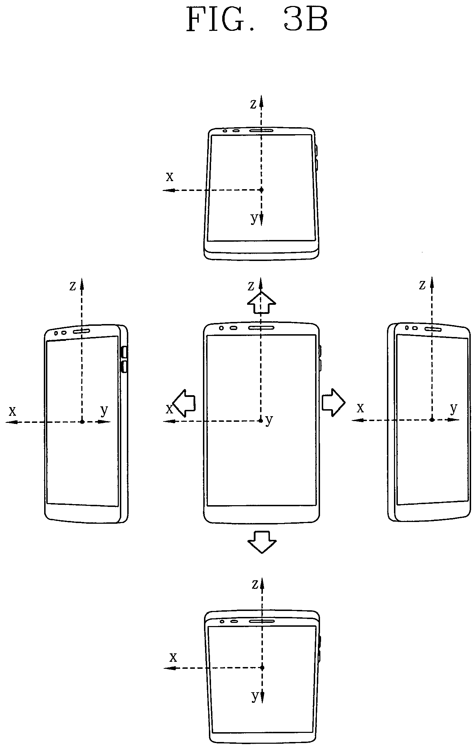

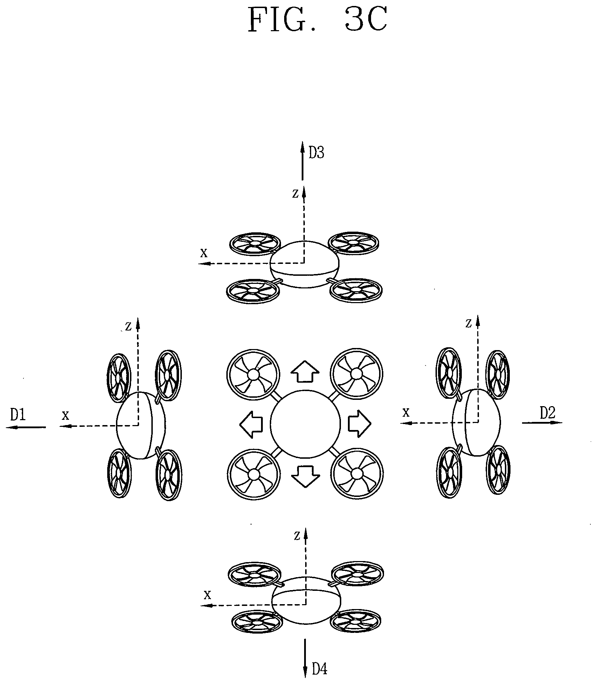

FIG. 3A is a conceptual view illustrating the movement of a mobile terminal forming a flight control command, and FIG. 3B is a conceptual view illustrating the movement of a mobile terminal for controlling an unmanned aerial vehicle, and FIG. 3C is a conceptual view illustrating the flight of an unmanned aerial vehicle corresponding to the movement of a mobile terminal illustrated in FIG. 3C.

Referring to FIGS. 3A and 3B, when the movement of the body is sensed when a touch input is applied to the touchscreen 151 in the vertical mode, a flight control command based on the movement is formed. When a touch input applied to the touchscreen 151 is released, the controller 180 does not form the flight control command for controlling the moving direction of the unmanned aerial vehicle. However, when the movement is sensed when a touch input is not applied to the touchscreen 151, the controller 180 can form a control command for moving the unmanned aerial vehicle in a height direction.

Referring to FIGS. 3B and 3C, when the body is inclined to the left with respect to the Z-axis, the body portion of the unmanned aerial vehicle moves in a first direction (D1) while being inclined to the left with respect to the Z-axis. The moving speed of the unmanned aerial vehicle increases as the inclined degree of the body increases. In other words, the controller 180 forms a flight control command including acceleration information corresponding to the inclined degree of the body. The controller 180 continuously transmits a control command including the acceleration information to the unmanned aerial vehicle while maintaining the inclination of the body. In other words, the control command may include information on the moving direction and the size of acceleration in which the unmanned aerial vehicle is to be moved. In other words, the speed of the unmanned aerial vehicle continuously increases while maintaining a state that the body of the mobile terminal is inclined.

For example, when the body maintains the same inclination, the moving speed of the unmanned aerial vehicle continuously increases with the same rate. When the inclination of the terminal body is not sensed, the controller 180 does not form a flight control command including the acceleration. In other words, the unmanned aerial vehicle maintains the previous movement since a flight control command including acceleration information is not received. The unmanned aerial vehicle flying at a specific speed continuously maintains flight at the same speed. On the contrary, when the body is inclined to the right with respect to the Z-axis, the body portion of the unmanned aerial vehicle is also inclined to the right with respect to the Z-axis to move in a second direction (D2) opposite to the first direction (D1).

When an upper end portion is inclined downward with respect to the X-axis, the unmanned aerial vehicle moves in a third direction (D3) in the state of being inclined with respect to the X-axis. Furthermore, when the body is inclined in an opposite direction with respect to the X-axis, the unmanned aerial vehicle moves along a fourth direction (D4) opposite to the third direction (D3) in the state of being inclined in an opposite direction with respect to the X-axis.

In other words, the unmanned aerial vehicle is inclined in the same direction as the inclined direction of the mobile terminal body to move in the inclined direction. Furthermore, when the inclined state of the mobile terminal is restored, the speed of the unmanned aerial vehicle 10 gradually decreases due to a resistance of the air since acceleration is not produced by the propulsion of the unmanned aerial vehicle.

According to an embodiment of the present disclosure, the unmanned aerial vehicle may be more intuitively controlled since it is controlled to move similarly to the inclination of the mobile terminal body. Hereinafter, a control method of controlling an unmanned aerial vehicle using a mobile terminal will be described using various embodiments.

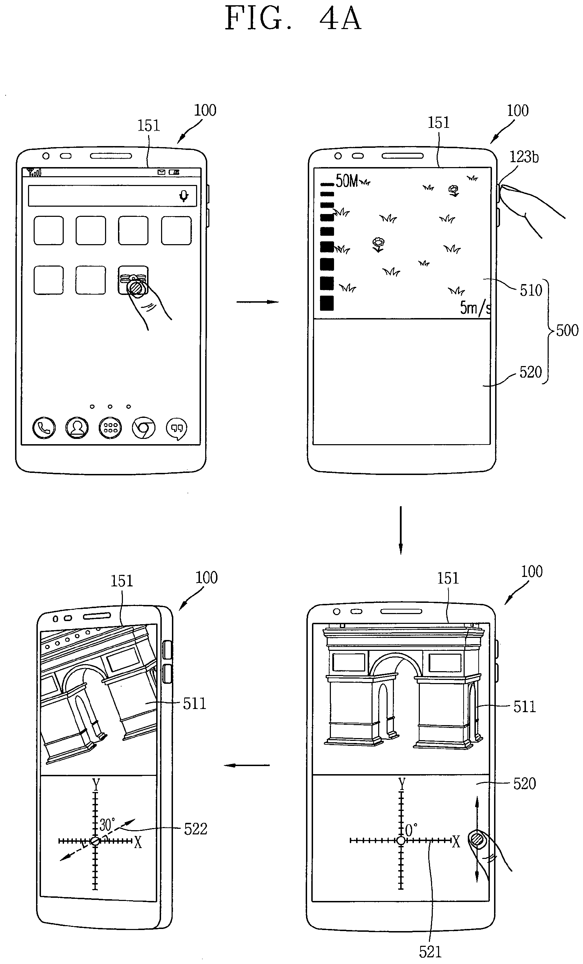

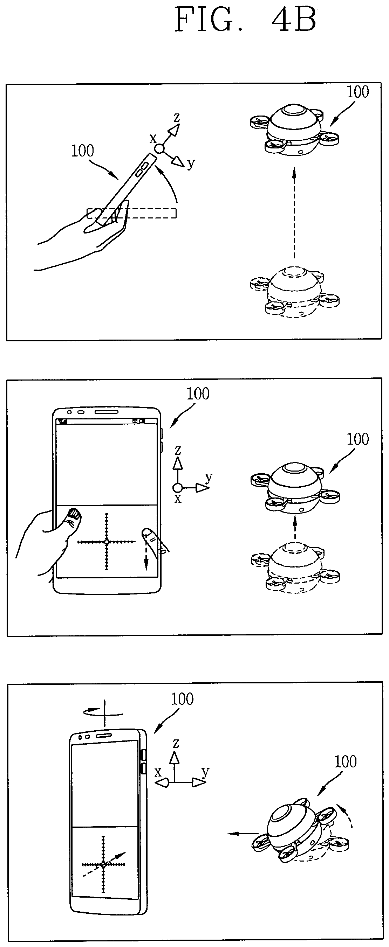

FIGS. 4A through 4C are conceptual views illustrating a control method of a mobile terminal for controlling an unmanned aerial vehicle in a vertical mode according to an embodiment. Referring to FIGS. 4A and 4B, the touchscreen 151 displays an icon corresponding to an application for controlling the unmanned aerial vehicle. The controller 180 executes an application based on a touch input applied to the icon and displays first screen information 500 which is an execution screen thereof. The first screen information 500 displays first image 510 captured by the camera of the unmanned aerial vehicle 10 in a first region of the touchscreen 151. A second region of the touchscreen 151 receives a user's touch input. A second image 520 may be displayed in the second region.

A flight control command for controlling the altitude of the unmanned aerial vehicle 10 may be formed based on a control command applied to the user input unit 123b when the application is performed. For example, when the application is not performed, the user input unit 123b may be implemented with a control module for adjusting the volume of a sound output by the audio output unit or changing a notification mode. The controller 180 forms a flight control command for increasing the altitude of the unmanned aerial vehicle 10 based on a control command applied to the user input unit 123b.

The flight control command may include flight direction and acceleration information for increasing altitude. When a control command applied to the user input unit is released, the unmanned aerial vehicle may gradually decreases an altitude increase speed. The camera of the unmanned aerial vehicle 10 transmits a capture image captured while being moved in real time to the mobile terminal. The controller 180 controls the touchscreen 151 to continuously display a third image 511 corresponding to the received capture image in the first region.

The user can sense the movement of the unmanned aerial vehicle 10 while applying a touch input for moving the unmanned aerial vehicle to the mobile terminal through a capture image displayed in the first region. When a touch is applied to the second region, the touchscreen 151 displays a guide image 521 for guiding the shape of a control command by the touch. The guide image 521 may include at least one axis to indicate an inclination of the mobile terminal and the movement of the unmanned aerial vehicle 10 corresponding thereto with respect to a specific center.

The guide image 521 may be controlled to disappear when a touch applied to the touchscreen 151 is released, but is not limited to this. The guide image 521 may be continuously displayed while an application for controlling the unmanned aerial vehicle 10 is performed or when the unmanned aerial vehicle 10 maintains an altitude above a specific reference value based on the user's setting.

As illustrated in the drawing, the guide image 521 may be comprised with an X-axis and a Y-axis crossing each other. Furthermore, the controller 180 can form a flight control command for controlling the altitude of the unmanned aerial vehicle 10 based on a touch input applied to the second region. For example, when an upper end of the body is inclined upward when a touch input is applied to the second region, the controller 180 forms a flight control command for increasing the altitude of the unmanned aerial vehicle 10. In this instance, when the touch input is continuously applied, the controller 180 controls the wireless communication unit 110 to transmit a flight control command for continuously increasing the altitude of the unmanned aerial vehicle 10 to the unmanned aerial vehicle 10.

Referring to FIG. 4B, when a touch input is consecutively applied from a touch initially applied to the second region of the touchscreen 151, a flight control command for controlling the altitude of the unmanned aerial vehicle 10 may be formed according to the direction of the touch input. Here, the touch input corresponds to a dragging type touch input, and an acceleration at which the unmanned aerial vehicle 10 moves may be controlled based on a touch range of the drag touch input. Furthermore, a flight control command for moving the unmanned aerial vehicle 10 may be formed to increase or decrease the altitude based on the drag moving direction.

For example, when a dragging touch input applied in a downward direction of the touchscreen 151 is applied when the altitude of the unmanned aerial vehicle 10 increases at a specific speed, an acceleration (force) in the direction of facing the ground is applied to the unmanned aerial vehicle 10 to gradually decrease the speed of the unmanned aerial vehicle 10 moving away from the ground. Otherwise, when the body moves along a y-axis direction while a touch is applied to the touchscreen 151, the controller 180 forms a flight control command for increasing the altitude of the unmanned aerial vehicle 10.

Further, when the inclination of the mobile terminal body 10 is sensed, the controller 180 forms a flight control command based on this. Referring to FIG. 4A, when the mobile terminal is inclined to the left, the touchscreen 151 displays a guide image 522 indicating the inclined direction and inclined angle in the second region. Furthermore, the controller 180 controls the wireless communication unit 110 to form a flight control command based on this to transmit it to the unmanned aerial vehicle 10. In this instance, the unmanned aerial vehicle 10 moves in the left direction at an acceleration corresponding to about 30 degrees. A third image 511 captured from the camera of the unmanned aerial vehicle 10 is displayed in the first region.

According to the present embodiment, the user can control an altitude change of the unmanned aerial vehicle, and change the moving speed based on a control command applied to the user input unit, and a touch input applied to the touchscreen 151. Furthermore, a current speed may be displayed while the unmanned aerial vehicle flies, thereby allowing the user to know the flight status of the unmanned aerial vehicle.

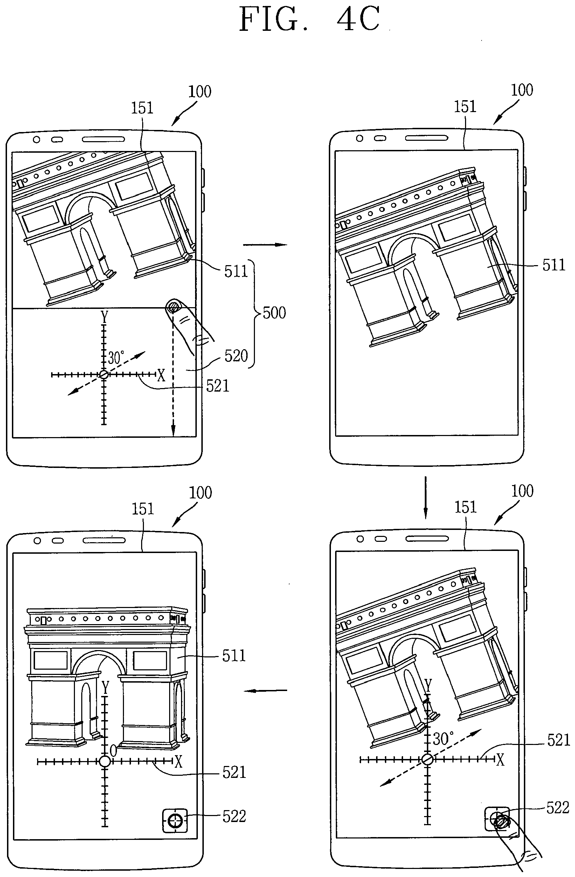

Referring to FIG. 4C, the touchscreen 151 displays first screen information 500 including a third image 511 displayed in the first region and a guide image 521 displayed in the second region. The controller 180 can change the first screen information 500 based on a preset type of touch input applied to the touchscreen 151.

For example, the third image 511 is displayed as a whole on the touchscreen based on a dragging type (or flicking type) of touch input initially applied to a boundary between the first and the second region and released from the second region. The third image 511 displayed in the first region may be enlarged and displayed as a whole on the touchscreen 151. Otherwise, the touchscreen 151 can include the third image 511, and display an image captured at a larger viewing angle.

In more detail, when a touch applied in an opposite direction to the dragging type of touch input is applied to the touchscreen 151, the controller 180 can control the touchscreen 151 to be divided into the first and the second region again and display the third image 511 in the first region. The touchscreen 151 can display the guide image 521 on the third image 511 in an overlapping manner. The guide image 521 may be deformed to indicate the inclination of the body of the mobile terminal 100 and the resultant the inclination and flight direction of the unmanned aerial vehicle 10.

Furthermore, the touchscreen 151 can further display an origin icon 522 on the third image 511. The controller 180 can form a flight control command for maintaining the horizontal position of the unmanned aerial vehicle 10 and stopping the movement thereof in one direction. Accordingly, the user can control the flight of the unmanned aerial vehicle 10 without inclining the body again in a horizontal position.

Furthermore, the controller 180 can set the inclination of the body when a touch input is applied to the origin icon 522 to a reference. The controller 180 can sense an inclination change subsequent to being applied to the origin icon 522 to form the flight control command. The unmanned aerial vehicle 10 moves in the state of being inclined to correspond to the inclination of the body based on the flight control command, and an image captured by the camera of the unmanned aerial vehicle 10 is also captured in the state of being inclined with respect to the ground according to the inclined degree of the unmanned aerial vehicle 10.

However, the controller 180 can form a capture control command for allowing the capture range of the camera to be inclined in an opposite direction to the inclined direction of the unmanned aerial vehicle 10 along with the flight control command. In this instance, the touchscreen 151 can display an image captured in a substantially horizontal state to the ground. Otherwise, the controller 180 can rotate and process an image captured from the camera of the unmanned aerial vehicle 10 in an opposite direction to the inclined angle of the body using the flight control command, and control the touchscreen 151 to display it.

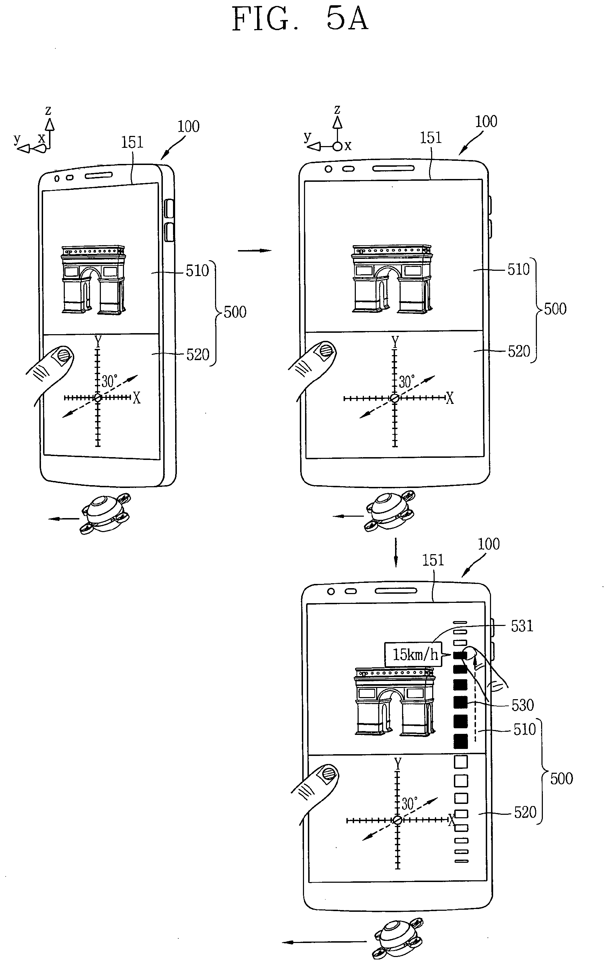

FIGS. 5A through 5D are conceptual views illustrating a control method of controlling the flight of an unmanned aerial vehicle in a vertical mode. A control method of adjusting a flight speed of the unmanned aerial vehicle based on a touch input will be described with reference to FIG. 5A. In order to control the flight of the unmanned aerial vehicle 10, the controller 180 allows the touchscreen 151 to display first screen information 500 which is an execution screen of the application in the vertical mode, and the first screen information 500 may include a first image 510 captured by the camera of the unmanned aerial vehicle 10 and a second image 520 for receiving a touch input.

While a first touch is applied to the second image 520 of the first screen information 500, the controller 180 forms a flight control command based on the movement of the body sensed by the sensing unit. The wireless communication unit transmits the formed flight control command in real time to the unmanned aerial vehicle 10. When the unmanned aerial vehicle 10 is rotated and inclined with respect to the z-axis, the unmanned aerial vehicle 10 flies in an inclined state based on the inclined angle and direction.

When the flight control command is transmitted and then the body rotates in an opposite direction with respect to the z-axis to restore the inclination to an original state, the flight speed of the unmanned aerial vehicle 10 gradually decreases. When a second touch is applied to another region of the touchscreen 151 while applying the first touch, the controller 180 forms a flight control command for controlling the flight speed of the unmanned aerial vehicle 10 based on the second touch.

The second touch may be applied to one region of the touchscreen 151, and may not be necessarily limited to the second region, and the second touch may correspond to a consecutive touch input having a touch range. For example, the second touch may correspond to a dragging type of touch input. When the second touch is applied, the touchscreen 151 displays a speed control image 530. The speed control image 530 may be formed in the shape of being extended in one direction, and said one direction may correspond to a length direction of the touchscreen 151, but is not limited to this. The speed control image 530 may be formed in a consecutive bar shape or formed in a plurality of images arranged in one direction.

The controller 180 allows a region to which the second touch is initially applied to correspond to a current speed, and forms a flight control command including speed change information corresponding to a touch range being away from the initially applied region. The speed change increases as being away from the initial touch position. Furthermore, the flight control command may include the direction information of the unmanned aerial vehicle 10 based on the moving direction of the second touch. When the second touch is applied in one direction on the speed control image 530, the controller 180 forms a flight control command for increasing a speed while maintaining a current flight direction of the unmanned aerial vehicle 10. On the contrary, when the second touch is applied in an opposite direction to the one direction, the controller 180 can form a flight control command for decreasing a current flight speed of the unmanned aerial vehicle 10. In this instance, a flight control command for allowing the unmanned aerial vehicle 10 to fly in an opposite direction may be formed as increasing a touch range of the second touch.

Alternatively, when the second touch moves in an opposite direction of the one direction, a flight control command for allowing the unmanned aerial vehicle 10 to fly at a speed corresponding to the touch range of the second touch in an opposite direction to the current flight direction of the unmanned aerial vehicle 10. In other words, a control command for controlling a forward speed when the second touch moves in an upward direction of the touchscreen 151 from an initial touch position of the second touch, and controlling a backward speed when the second touch moves in a downward direction of the touchscreen 151 from an initial touch position of the second touch is formed.

Accordingly, it is possible to switch the direction of the unmanned aerial vehicle without inclining the body.

The touchscreen 151 modifies the speed control image 530 based on a touch range from an initial touch position of the second touch. When the speed control image 530 is formed with a plurality of images, part of the plurality of images to which the second touch is applied may be modified. When the second touch is released, the controller 180 controls the touchscreen 151 to display speed information 531 indicating the flight speed of the unmanned aerial vehicle 10 by the formed flight control command. The speed information 531 may be displayed in a region adjacent to the speed control image 530, and the controller 180 controls the touchscreen 151 to allow the speed control image 530 and the speed information 531 to disappear if the second touch is not applied for a preset period of time.

The controller 180 can adjust the speed of the unmanned aerial vehicle 10 based on the inclination degree of the body or determine the flight direction of the unmanned aerial vehicle 10 according to the inclination direction of the body and control the speed of the unmanned aerial vehicle based on a touch input applied to the touchscreen 151.

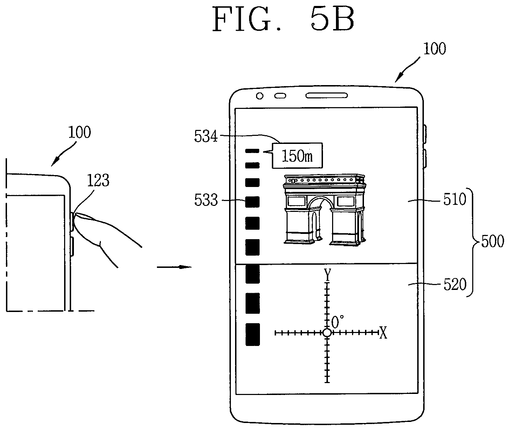

A control method of controlling the altitude of the unmanned aerial vehicle using a user input unit will be described with reference to FIG. 5B. The controller 180 can forms a flight control command for increasing or decreasing the altitude of the unmanned aerial vehicle 10 based on a control command applied to the user input unit 123b while executing the application. A control signal for adjusting the volume of a sound signal being output, changing a notification mode or the like may be formed based on a control command applied to the user input unit 123b when the application is not performed. For example, the user input unit may be configured with a pair of press switches formed to be pressed by an external force.

The controller 180 forms a flight control command for increasing or decreasing the altitude of the unmanned aerial vehicle 10 when an external force is applied to either one of the pair of press switches, and forms a flight control command for increasing the altitude when a press switch disposed at an upper portion with respect to the touchscreen 151 is pressed.

A variation of the altitude increases to correspond to a time for which the press switch is pressed. When one of the press switches is continuously pressed, the controller 180 can continuously transmit a flight control command for increasing the altitude to the unmanned aerial vehicle 10 or transmit a flight control command including an altitude change corresponding to the specific period of time to the unmanned aerial vehicle 10 when the press switch is pressed for a specific period of time and then the pressure is released.

However, a region formed with the user input unit 123b may not be necessarily limited to the drawing of FIG. 5B. A user input unit for changing the altitude of the unmanned aerial vehicle 10 may be implemented by a rear key disposed on a rear surface of the body of the mobile terminal 100.

The touchscreen 151 can display an altitude control image 533 corresponding to a period for which the user input unit 123b is pressed. The shape of the altitude control image 533 may be modified to correspond to a period of time for which the user input unit 123b is pressed. Furthermore, the touchscreen 151 can display the altitude information 534 of the unmanned aerial vehicle 10 controlled based on a flight control command by the user input unit 123b. The controller 180 can control the touchscreen 151 to allow the altitude information 534 and the altitude control image 533 to disappear unless a control command is applied to the user input unit 123b for a preset period of time.

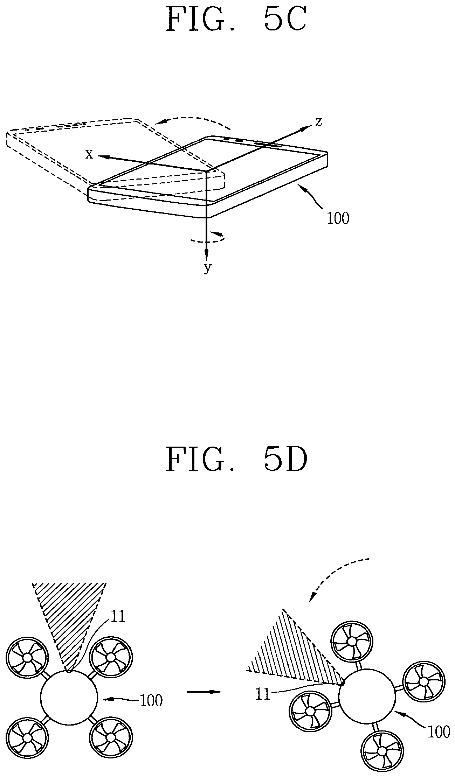

A control method of controlling the rotation of a drone will be described with reference to FIGS. 5C and 5D. A flight control command for changing the altitude of the unmanned aerial vehicle 10 is formed when the body is rotated and inclined with respect to the x-axis, a flight control command for moving the unmanned aerial vehicle 10 in a specific direction is formed when the body is rotated and inclined with respect to the z-axis. The x-axis corresponds to a width direction of the touchscreen 151, and the z-axis corresponds to a length direction of the touchscreen 151.

According to the present embodiment, when the body is rotated and inclined with respect to the y-axis, a flight control command for controlling the rotation of the unmanned aerial vehicle 10 is formed. Even in this instance, the controller 180 can sense the rotation while a touch is applied to the touchscreen 151 to form the flight control command.

The controller 180 forms a flight control command for rotating the unmanned aerial vehicle 10 by a rotation angle with respect to the y-axis. The y-axis corresponds to a direction perpendicular to a front (or rear) surface of the touchscreen 151. Further, when the body maintains the rotated state of the body at an angle which is greater than a preset reference angle (for example, about 60 degrees) but less than about 90 degrees in a state prior to the rotation of the body, a flight control command for continuously rotating the unmanned aerial vehicle 10 is transmitted while a touch is applied to the touchscreen 151. The flight control command is continuously transmitted while the touch is maintained, and thus the unmanned aerial vehicle 10 is continuously rotated in the same direction until releasing the touch.

A capture range of the camera mounted in a region of the unmanned aerial vehicle 10 may be changed based on the flight control command. Further, when the mobile terminal rotates above about 90 degrees, a horizontal mode in which the display direction of screen information displayed on the touchscreen 151 is implemented in a width direction. Hereinafter, a specific control method for controlling the unmanned aerial vehicle in a horizontal mode will be described.

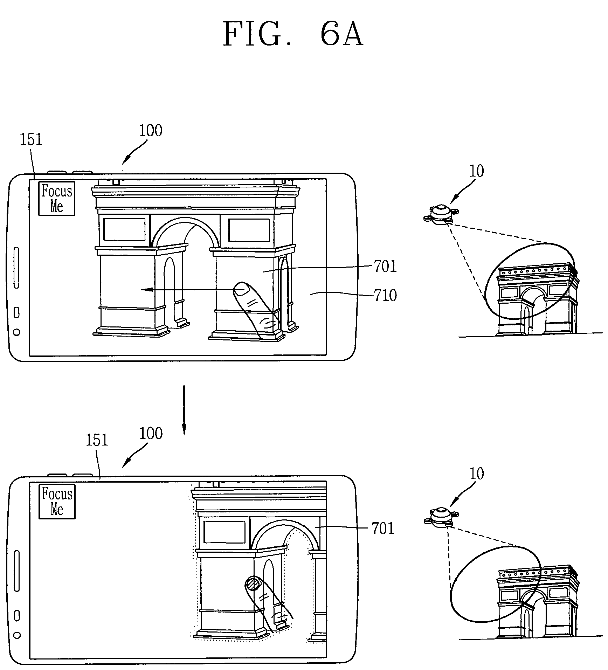

FIGS. 6A through 6D are conceptual view illustrating a control method for controlling the unmanned aerial vehicle in a horizontal mode. The controller 180 controls the touchscreen 151 to display a fourth image 650 captured by the camera of the unmanned aerial vehicle 10 in the horizontal mode. The touchscreen 151 can receive a touch input for forming a control command for controlling the unmanned aerial vehicle on the entire region thereof.

Referring to FIG. 6A, the controller 180 forms a capture control command for controlling the camera of the unmanned aerial vehicle 10 based on a touch input applied to the touchscreen 151 in the horizontal mode. For example, when a consecutive touch input moving in a specific direction is applied to the touchscreen 151, the capture control command is formed to change a capture range in response to the specific direction. The camera pan is controlled to change a capture angle in response to the direction of the touch based on the capture control command.

For example, the controller 180 forms the capture control command to move the capture range of the camera to a left region by a dragging type of touch input applied in the left direction of the touchscreen 151. Accordingly, the user can capture the left region of a subject displayed on a currently displayed image. On the contrary, the controller 180 forms a capture control command for controlling the camera to display a right region of the currently displayed fourth image 650 based on a dragging type of touch input applied to the left direction when the fourth image 650 is displayed.

Alternatively, the controller 180 can form a flight control command to move the unmanned aerial vehicle 10 in order to change the capture range based on a touch input applied to the fourth image 650. According to the present embodiment, the user can change a capture range of the camera to acquire his or her desired image based on a touch input applied to the touchscreen 151 in a horizontal mode.

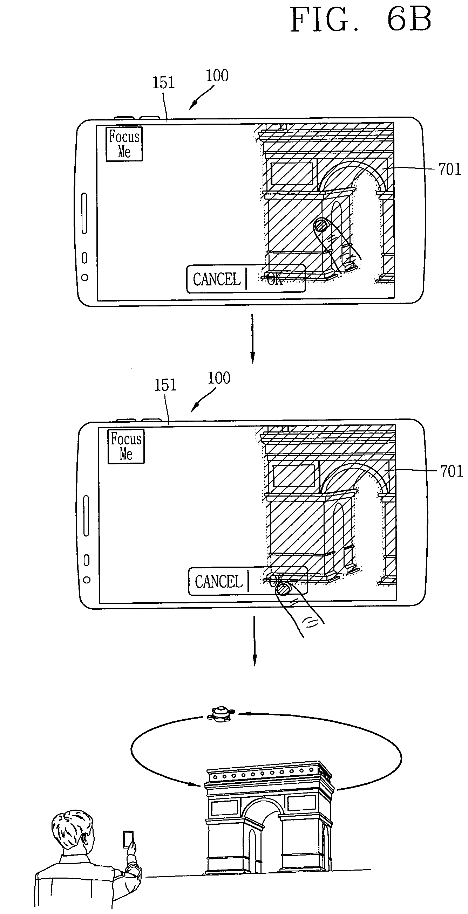

Referring to FIG. 6B, an object contained in the fourth image 650 may be selected based on the touch input. Here, the touch input may distinguish a plurality of objects with respect to a plurality of subjects contained in a capture image captured by the camera, transmit subject-related information corresponding to an object 651 selected by a touch input applied to the touchscreen 151 or search prestored related information.

The related information may correspond to the location information of a subject, a size of the subject, a type of the subject, and the like. When the subject is a specific building, a location, a width, a height of the building, a type of the building, a use of the building or the like may be received from a specific server. The touchscreen 151 can display an object 651 selected based on the touch input. For example, it is possible to display a boundary region of the object may be displayed, change the color thereof, adjust the brightness thereof, and highlight the object using various methods.

The controller 180 forms a flight control command for flying around a subject of the selected object using information on the subject to transmit it to the unmanned aerial vehicle 10. The camera of the unmanned aerial vehicle 10 may capture an image while flying around the subject. According to the present embodiment, the user can not need to individually instruct a control command for flight into a surrounding region of the subject when a specific subject is desired to be captured in various angles.

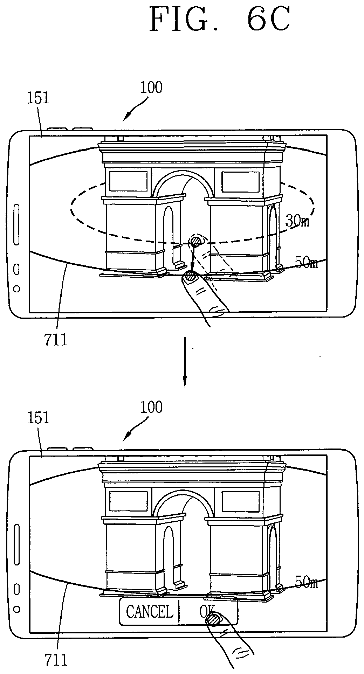

Referring to FIG. 6C, when information on a subject corresponding to a specific object selected on the fourth image 650 is collected, the controller 180 forms path information for allowing the subject to fly a surrounding region of the subject. The touchscreen 151 displays a path image 652 corresponding to the path information. The path image 652 is formed to overlap with the selected object.

The controller 180 can change the path based on a touch applied to the path image 652. For example, a larger path (i.e., a path flying in the state of being away from the subject) around the subject may be set based on a dragging type of touch input applied to the path image 652. The controller 180 changes the path image 652 based on a touch input applied to the path image 652, and forms a flight control command corresponding to the path image 652.

The controller 180 can transmit the flight control command to the unmanned aerial vehicle 10 to control the unmanned aerial vehicle 10 to fly a surrounding region of the subject. Though a circular path flying around the subject is illustrated on the drawing, the flying path of the unmanned aerial vehicle is not limited to this. For example, the controller 180 can further set an additional path based on a touch input applied to the touchscreen 151 or form the flight control command to move on a linear flight path other than a circular path.

In more detail, a flight control command controlled to fly around the subject may include a control command for controlling the rotation of the unmanned aerial vehicle to allow the camera of the unmanned aerial vehicle 10 to always capture the selected subject as well as a flight path. According to the present embodiment, the user can receive an image or video in which the selected subject is captured in various regions.

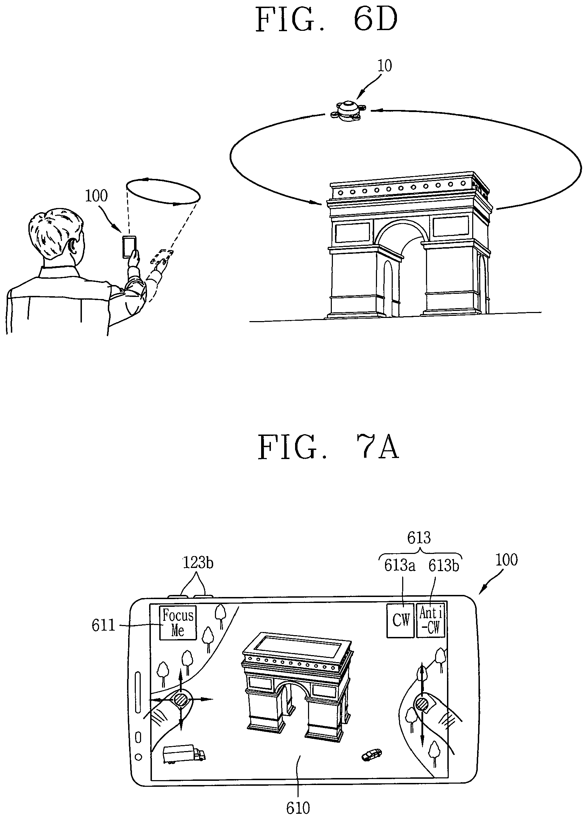

Referring to FIG. 6D, the controller 180 can set a flight path of the unmanned aerial vehicle 10 based on a specific movement of the body 10 of the mobile terminal. For example, when it is determined that the movement of the body 10 sensed by the sensing unit matches a preset control gesture, the controller 180 can form a flight control command corresponding to the control gesture, and the flight control command may correspond to a specific flight path.

For example, when the body of the mobile terminal moves on a circular flight path, the controller 180 forms a flight control command for rotating around a specific position. The touchscreen 151 can display an image for selecting an object to be centered on the touchscreen 151 subsequent to forming the flight control command. The image corresponds to a capture image currently captured by the camera of the unmanned aerial vehicle 10.

Alternatively, when a specific object is selected and then the specific gesture is sensed on the image, the controller 180 can control the wireless communication unit to transmit the flight control command to the unmanned aerial vehicle. The flight control command may include various information flying around the subject. For example, various information may include a rotating speed, a rotation direction, a distance from the subject, and the like.

However, the controller 180 can sense the movement of the mobile terminal body in real time to transmit a flight control command corresponding thereto to the unmanned aerial vehicle in real time. Accordingly, the flight control command may be formed based on the rotation speed and direction of the body. According to the present embodiment, the user can check a flight path of the unmanned aerial vehicle in real time to fly on his or her desired region.

FIGS. 7A through 7E are conceptual views illustrating a control method of forming a flight control command and a capture control command in a horizontal mode. Referring to FIG. 7A, the touchscreen 151 displays a capture image 610 captured by the unmanned aerial vehicle 10 in a horizontal mode, and a display direction of the capture image 610 is substantially the same as a width direction thereof.

The touchscreen 151 displays the first icon 611 along with the capture image 610. A focus-me mode is performed based on a touch input applied to the first icon 611. Accordingly, the controller 180 forms a flight control command for rotating (moving) the unmanned aerial vehicle 10 in a direction in which the camera of the unmanned aerial vehicle 10 captures the user. When the unmanned aerial vehicle 10 rotates to capture the user of the mobile terminal 100, the touchscreen 151 displays a second icon 612 along with the capture image. The second icon corresponds to a surrounding mode in which the surrounding region of the user of the mobile terminal is captured. The first icon 611 or the second icon 612 may be displayed at an upper left end of the touchscreen 151.

The focus-me mode may be activated when the first icon 611 is displayed, and the surrounding mode may be activated while displaying the second icon 612 when a touch is applied to the first icon 611. In other words, information on a mode status displayed on the icon may be identical to an active mode. The first and the second icon 611, 612 may be selectively displayed by a touch to form a toggle key for switching the focus-me mode and surrounding mode. The touchscreen 151 can display information (for example, text "sight" or "focus me") associated with a currently active mode may be displayed on the toggle key.

The camera of the unmanned aerial vehicle 10 may capture a surrounding environment in a direction at which the user looks in the focus-me mode, and capture a surrounding environment around the user of the mobile terminal 100 when a touch is applied to the first icon 611 or the second icon 612. Further, the touchscreen 151 displays a third icon 613 corresponding to a flight control command for controlling the rotation of the unmanned aerial vehicle 10 along with the capture image 610. The third icon 613 may be displayed along with the first icon 611 or the second icon 612, and disposed at an upper right end of the touchscreen 151.

The third icon 613 relates to the rotation of the unmanned aerial vehicle 10, and may include a first and a second graphic image 613a, 613b. When a touch input is applied to the first graphic object 613a, the controller 180 forms a flight control command for rotating the unmanned aerial vehicle 10 in a clockwise direction around an inner axis, and when a touch input is applied to the second graphic image 613b, the controller 180 forms a flight control command for rotating the unmanned aerial vehicle 10 in a counter-clockwise direction around an inner axis. When a touch input is applied to either one of the first and the second graphic image 613a, 613b, the touchscreen 151 can modify it.

The touchscreen 151 can divide a region configured to receive a touch input into a first and a second control region in order to control a flight control command and a capture control command in an independent manner. For example, the touchscreen 151 can be partitioned into three control regions, and may include a first control region (A1) corresponding to the center thereof, a second control region (A2) corresponding to the left side thereof, and a third control region (A3) corresponding to the right side thereof. The touchscreen 151 forms a different control command based on a touch input applied to each control region. The first through the third control region (A1, A2, A3) may not be displayed on the touchscreen 151, and a user's touch input is applied to the capture image 610 displayed as a whole on the touchscreen 151.

The controller 180 forms a capture control command for controlling the camera based on a touch applied to the first control region (A1). Here, the touch may correspond to a dragging type of touch input. For example, the controller 180 controls a horizontal capture range (pan) of the camera based on a touch applied to the touchscreen 151 in a horizontal direction. Furthermore, the controller 180 controls a tilting degree and direction of the camera based on a touch applied to the touchscreen 151 in a vertical direction. In this instance, the flight and rotation of the unmanned aerial vehicle 10 may not be controlled, and the wireless communication unit 110 of the mobile terminal 100 may transmit image information captured in real time based on a variation of the changed capture range.

However, the limit of panning and tilting of the camera is set by a type of camera mounted on the unmanned aerial vehicle 10, and even when a capture control command controlled above the control limit is transmitted, the same image is displayed without changing the capture range. In this instance, the unmanned aerial vehicle may transmit warning information corresponding to the capture control command to the mobile terminal, and the touchscreen 151 can display the warning information.

Further, a flight control command of the unmanned aerial vehicle 10 is formed based on a touch applied to the second and the third control region (A2, A3). The controller 180 forms a control command for the moving direction of the unmanned aerial vehicle 10 based on a touch applied to the second region (A2), and forms a control command for the moving speed of the unmanned aerial vehicle 10 based on a touch applied to the third control command (A3).

The controller 180 sets the flight direction according to a touch direction moving with respect to a touch position initially applied to the second region (A2). For example, a flight control command for moving the unmanned aerial vehicle 10 in a direction being away from the user is formed based on a touch input moving upward on the touchscreen 151 in a horizontal mode from an initial touch position.

The controller 180 sets the speed of the unmanned aerial vehicle 10 based on a range of touch applied to the third control command (A3). Furthermore, the controller 180 can form a flight control command for changing the altitude of the unmanned aerial vehicle 10 based on a control command applied to the user input unit 123b. However, when the horizontal mode is activated, the controller 180 sets a variation of the altitude due to the user input unit 123b to be less than that of the altitude due to the user input unit 123b in the vertical mode. For example, an altitude variation rate based on a control command applied to the user input unit 123b may be set to about 10 cm/s.

In other words, the user can adjust the altitude of the unmanned aerial vehicle 10 in a finer manner in the horizontal mode. According to the present embodiment, the controller 180 can control the flight of the unmanned aerial vehicle and the capturing of the camera based on a touch input applied to each region on the touchscreen 151. The user can set a direction or control a speed through a touch input in the horizontal mode, and thus control a more accurate flight in the vertical mode.

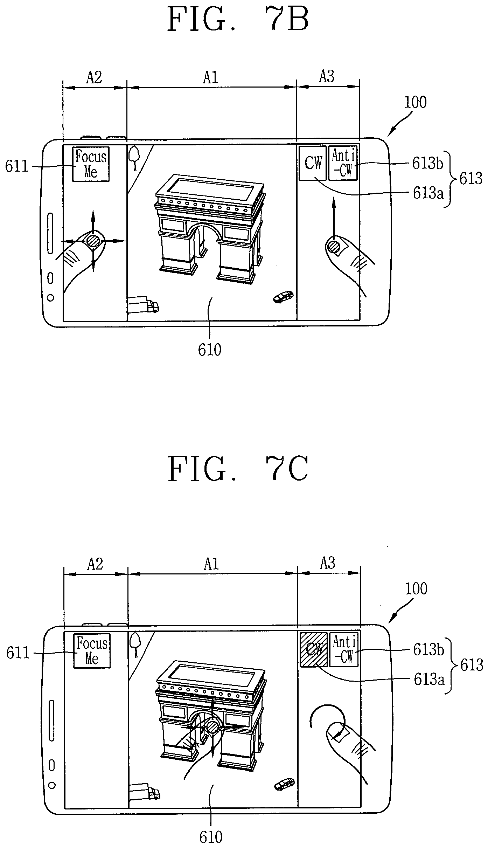

FIG. 7B is a conceptual view illustrating a control method according to another embodiment. The control method of forming a control command is substantially the same as the control method of FIG. 7A excluding an image displayed in the first through the third control region (A1, A2, A3), and thus the redundant description thereof will be omitted.

The touchscreen 151 display the capture image 610 on only the first region (A1). An image is not displayed or only a preset image is displayed in the second and the third control region (A2, A3). The first icon 611 is displayed on the second region (A2), and the third icon 613 is displayed on the third control region (A3). The controller 180 can control the touchscreen 151 to display only part of the captured capture image on the first region (A1). According to the present embodiment, control regions forming different control commands may be divided based on a capture image 610 displayed only in the first region (A1).

A control command according to another embodiment will be described with reference to FIG. 7C. The remaining constituent elements excluding a control method based on a touch applied to the third control region (A3) are substantially the same as, and thus the redundant description thereof will be omitted. The controller 180 can form a different flight control command based on a pattern of touch applied to the third control region (A3). The controller 180 can form a flight control command for controlling the flight speed of the unmanned aerial vehicle 10 based on a touch applied in one direction.

Further, when a circular touch pattern applied to the third control region (A3) is sensed, the controller 180 forms a flight control command for rotating the unmanned aerial vehicle 10. The controller 180 forms a flight control command including rotation direction information to rotate the unmanned aerial vehicle 10 in a clockwise direction or counter-clockwise direction based on the direction of the circular touch pattern. The unmanned aerial vehicle 10 rotates to correspond to the direction of a circular touch pattern based on the flight control command. The touchscreen 151 can modify the first graphic image 613a or the second graphic image 613b of the third icon 613 based on the direction of the touch pattern. Otherwise, the touchscreen 151 according to the present embodiment may omit the display of the third icon 613.

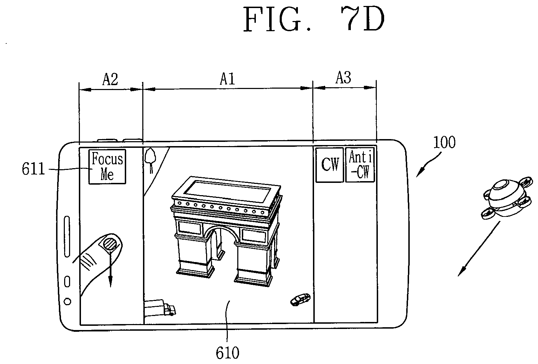

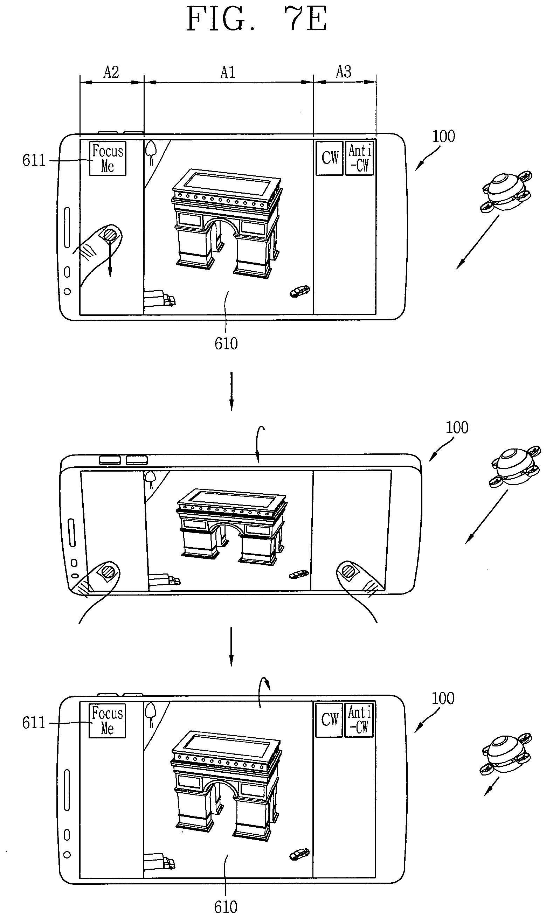

A control method of forming a flight control command based on adaptation timing information and the movement of the body will be described with reference to FIGS. 7D and 7E. While an application for controlling the unmanned aerial vehicle 10 is performed, the controller 180 can form the flight control command based on a touch input applied to a specific region on the touchscreen 151 and the movement of the body sensed by the sensing unit.

The controller 180 forms a flight control command for moving the unmanned aerial vehicle 10 toward the user based on a touch input applied to the first region (A1) to move in a downward direction of the touchscreen 151 in the horizontal mode. When the unmanned aerial vehicle 10 moves in a specific direction, the body of the unmanned aerial vehicle 10 is inclined in a moving direction. Furthermore, the speed of the unmanned aerial vehicle 10 may be controlled based on the direction of a touch input applied to the second region (A2).

Further, the controller 180 controls the sensing unit to sense the movement of the body when a touch is applied to the second and the third control region (A2, A3) at the same time. When the movement of the body is sensed by the sensing unit, the controller 180 forms a flight control command of the mobile terminal 100 based thereon. For example, when an upper end portion of the body being inclined to be close to the user in the horizontal mode is sensed by the sensing unit, the controller 180 can set a flight direction to allow the unmanned aerial vehicle 10 to be closer to the user. Furthermore, the controller 180 can set the flight speed based on the inclined degree, and change the flight speed based on a touch applied to the third control region (A3).

When a touch applied to either one of the second and the third control region (A2, A3) is released, the controller 180 does not form a control command due to the movement. In this instance, the unmanned aerial vehicle 10 no more receives a flight control command, and gradually decreases the flight speed and comes to a stop. According to the present embodiment, the user can form a flight control command suing a touch input or using the movement of the body in the horizontal mode.

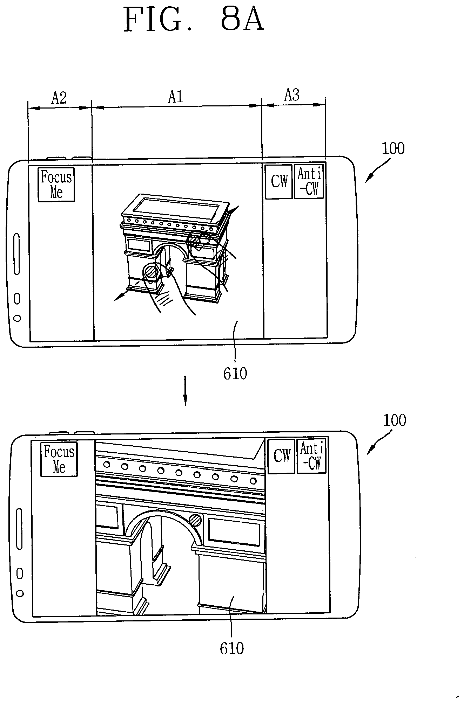

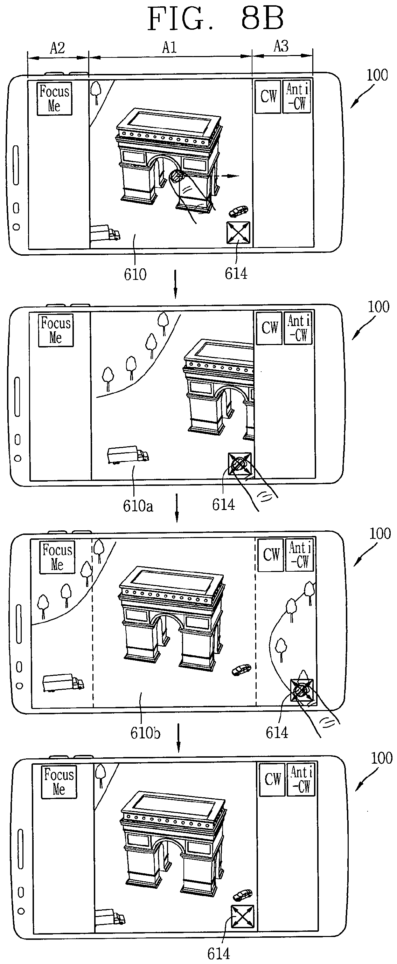

FIGS. 8A and 8B are conceptual views illustrating a control method for controlling a camera of an unmanned aerial vehicle. Referring to FIG. 8A, the touchscreen 151 is partitioned into the first through the third control region (A1, A2, A3). The function of the first through the third control region (A1, A2, A3) is substantially the same as that of FIG. 7A, and thus the redundant description thereof will be omitted.

The controller 180 can control the function of the camera based on a touch applied to the first region (A1). A capture range of the camera may be controlled by a consecutive touch applied to the first region (A1), and the zoom-in, zoom-out of the camera may be controlled based on a pinch-in, pinch-out type of touch input. Furthermore, the controller 180 forms a capture control command for imaging a capture image based on a specific type of touch input applied to the first region (A1). In other words, the user can capture an external environment and store in the memory unit 170 based on a specific type of touch input applied to the first region (A1).

However, a method of imaging the capture image is not limited to this. For example, when a knock applied to the touchscreen 151 is sensed or a control command is applied to a rear key formed on a rear surface of the body, the capture control command may be formed.

Referring to FIG. 8B, the controller 180 forms a capture control command for changing a capture range based on a dragging type of touch applied in one direction when the capture image 610 is displayed in the first region (A1). However, when a capture range set according to the touch range of the touch cannot be captured based on the operating condition of the camera, the controller 180 can form a flight control command for controlling the rotation or movement of the unmanned aerial vehicle based on the touch range. In other words, at least one of the capture control command and flight control command for capturing a desired region may be formed based on a touch applied to the first region (A1).

The touchscreen 151 displays a first capture image 610a due to the changed capture range. The touchscreen 151 displays a second capture image 610b including the first capture image 610a in the entire region of the touchscreen 151 based on a touch applied to the fourth icon 614. When the second capture image 610b is displayed as a whole on the touchscreen 151, the touchscreen 151 can display a divider for dividing the first through the third control region (A1, A2, A3).

The controller 180 controls the touchscreen 151 to display one region of the second capture image 610b in the first region (A1) based on a touch applied to the fourth icon 614. Otherwise, a reduced image of the second capture image 610b may be displayed in the first region (A1). According to the present embodiment, the user can divide a control region or receive the captured capture image as a whole according to his or her convenience.

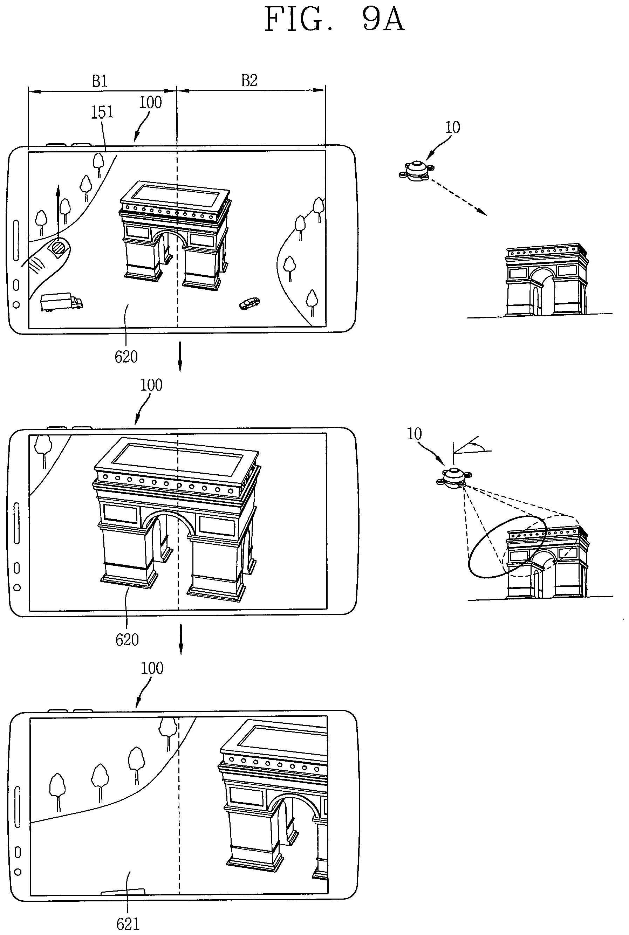

FIGS. 9A through 9E are conceptual views illustrating a control method of controlling an unmanned aerial vehicle based on a touch applied to the touchscreen 151 partitioned according to another embodiment. Referring to FIG. 9A, the touchscreen 151 is partitioned into a first and a second control region (B1, B2). The touchscreen 151 can display a capture image 620 captured by the camera of the unmanned aerial vehicle 10 as a whole, and display a divider for dividing the first and the second control region (B1, B2), but is not limited to this.

The controller 180 forms the flight control command based on a touch applied to the first control region (B1), and the capture control command based on a touch applied to the second control region (B2) as an independent manner.

For example, the controller 180 forms a flight control command for controlling the flight direction and flight speed of the unmanned aerial vehicle based on the direction and touch range of a dragging type of touch applied to the first control region (B1) to move in one direction. In addition, a flight control command for rotating the unmanned aerial vehicle 10 may be formed based on a circular touch pattern.

Further, the controller 180 forms a capture control command for controlling the panning, tilting of the camera based on a dragging type of touch applied to the second control region (B2) to move in one direction. Furthermore, a capture control command for controlling the zoom-in/zoom-out of the camera or controlling the capture thereof based on a different type or pattern of touch input. The touchscreen 151 displays a capture image 621 captured based on the capture control command and the flight control command. In addition, even when a touch is applied to the first and the second control region (B1, B2) at the same time, the controller 180 forms an individual control command based on a touch applied to each control region.

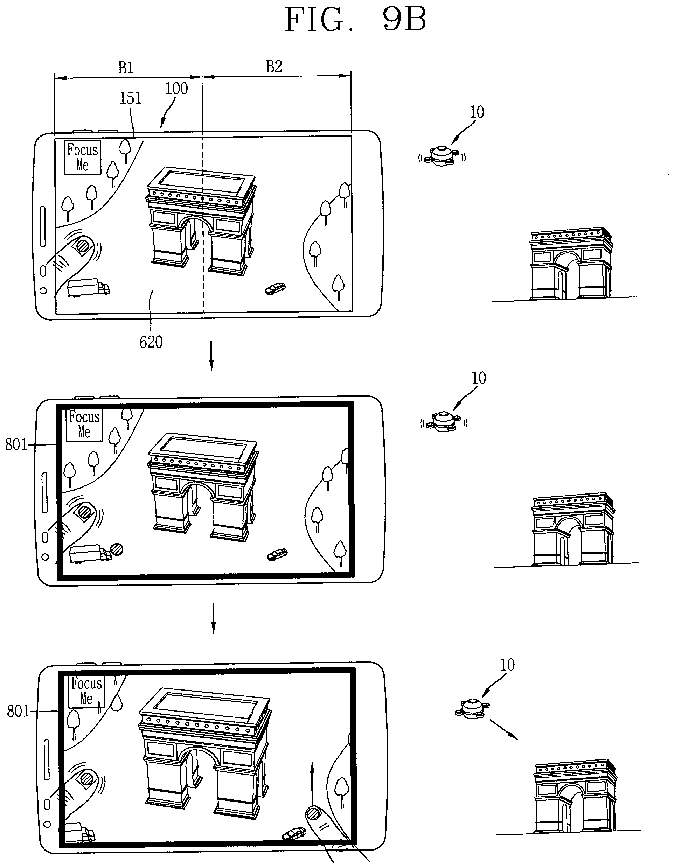

Referring to FIG. 9B, the touchscreen 151 is partitioned into the first and the second control region (B1, B2) when the capture image 620 is displayed thereon, and the resultant functions are the same as the constituent elements of FIG. 9A, and thus the redundant description thereof will be omitted. According to the present embodiment, the controller 180 extends the first control region (B1) or the second control region (B2) based on a specific type of touch applied to the first control region (B1) or the second control region (B2).

The controller 180 extends the first control region (B1) to the entire region of the touchscreen 151 based on a specific type of touch applied to the first control region (B1). The touchscreen 151 displays a first indicator 801 indicating the extended first control region (B1), and the first indicator 801 is displayed in an edge region of the touchscreen 151. In other words, the entire region of the touchscreen 151 is set to the first control region (B1), and the flight control command is formed by a touch applied to the touchscreen 151.

Here, the specific type of touch may correspond to a long touch applied for a preset period of time (several seconds). The controller 180 forms the flight control command based on a second touch applied to the remaining region while continuously applying a first touch corresponding to the long touch. There is no limit in one region of the touchscreen 151 to which the second touch is applied. For example, the controller 180 can form a flight control command for changing the speed of the flight vehicle based on a second touch while applying the first touch. In this instance, the capture image 620 is continuously displayed.

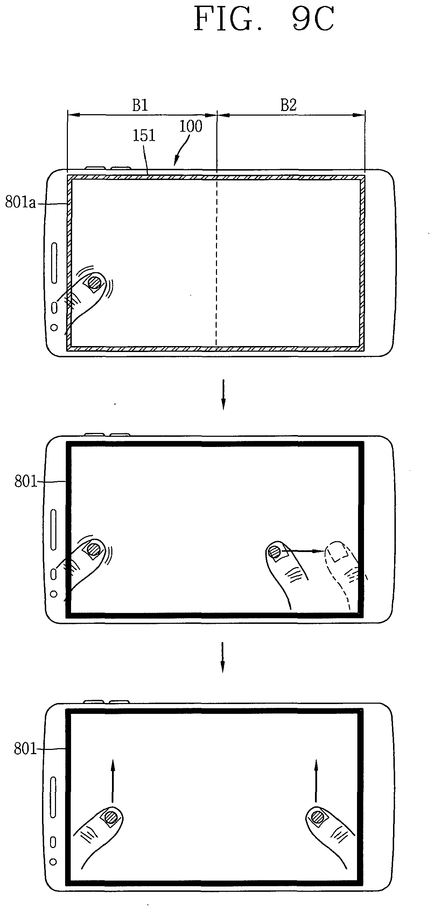

Referring to FIG. 9C, when the specific type of touch is applied to the first control region (B1), the controller 180 displays a reserve indicator 801a corresponding to the flight control mode on the touchscreen 151. The reserve indicator 801a may be displayed at an edge of the touchscreen 151 with a specific color, and light having a specific color may be displayed on the touchscreen 151.

The controller 180 sets an extended control region based on a second touch sensed when a first touch which is the specific type of touch input is applied. The second touch is applied to the second control region (B2) and sets the extended control region based on a touch range of the second touch. The second touch may correspond to a dragging type of touch having a touch range, but is not limited to this.

When the second touch is released, the extended control region is set to display the first indicator 801 indicating the extended control region on the touchscreen 151. Then, the flight control command is formed based on a touch applied to the extended control region. In addition, when a specific type of touch is applied to the extended control region, the touchscreen 151 can be set again to have the first and the second control region (B1, B2). According to the present embodiment, when fine control for the flight of the unmanned aerial vehicle or the capturing of the camera is required, the control region of the touchscreen 151 can be extended.

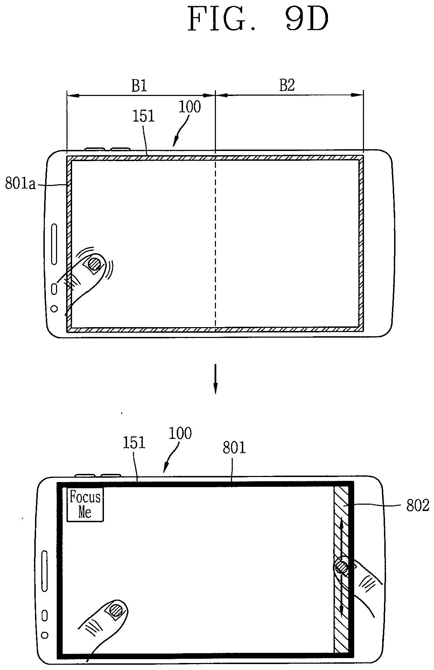

Referring to FIG. 9D, the extended control region is set based on a specific type of touch applied to the first control region (B1) in the state of being partitioned into the first and the second control region (B1, B2). The touchscreen 151 displays the first indicator 801 corresponding to the extended control region.

When the entire region of the touchscreen 151 is set to an extended control region of the first control region (B1), the controller 180 displays a first control image 802 in one region of an edge of the touchscreen 151. The first control image 802 may be displayed while a specific type of first touch for setting the extended control region is applied, but is not limited to this, and disappear based on the setting of the extended control region being released.

The first control image 802 receives a touch input formed along the one edge to form a flight control command. For example, the first control image 802 is formed in a bar shape extended along an edge thereof. The controller 180 forms a flight control command for rotating the unmanned aerial vehicle 10 based on a specific direction of touch applied to the first control image 802.

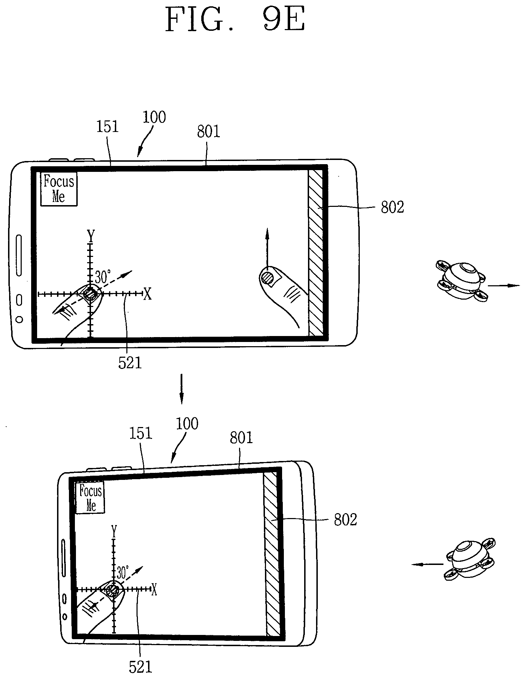

Referring to FIG. 9E, when the specific type of first touch is applied to form the extended control region, the controller 180 displays the first indicator 801 and the first control image 802. The controller 180 controls the touchscreen 151 to display the guide image 521 adjacent to a touch position to which the first touch is applied. The guide image 521 may include axes crossing each other and graphic image indicating the current inclined degree of the unmanned aerial vehicle, and the origin of the crossing axes may be formed at a touching point of the first touch.

The controller 180 forms a flight control command based on the second touch applied to the remaining region and the first control image 802 on the touchscreen 151. Further, the controller 180 can form a flight control command including information on a flight direction and a flight speed based on an inclination change of the body moving while the first and the second touch are applied at the same time. Accordingly, the guide image 521 may display the modified inclination information of the unmanned aerial vehicle based on the flight control command. According to the present embodiment, when an extended control region is formed, a flight control command may be additionally formed based on the first and the second touch and the movement of the body.

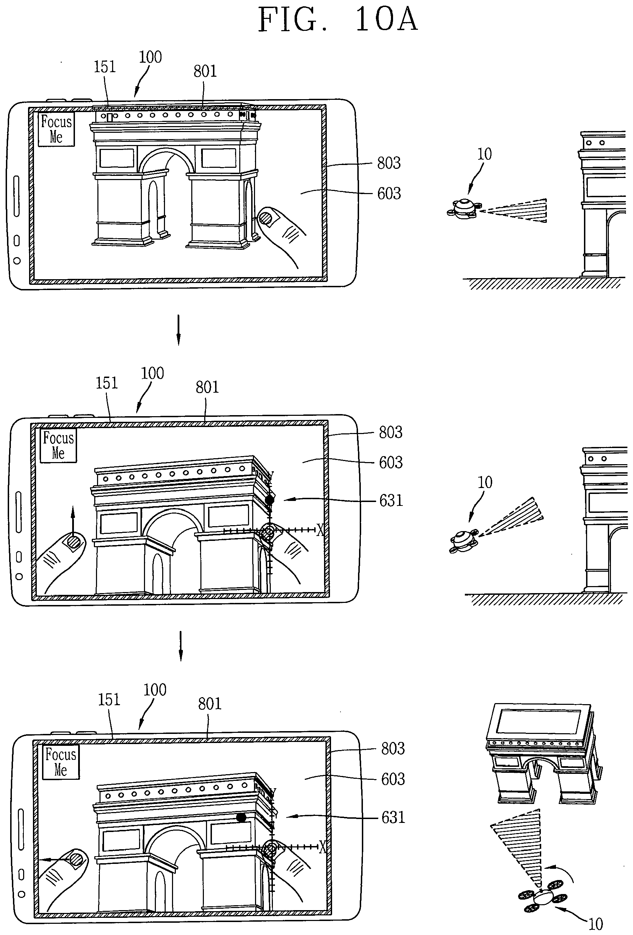

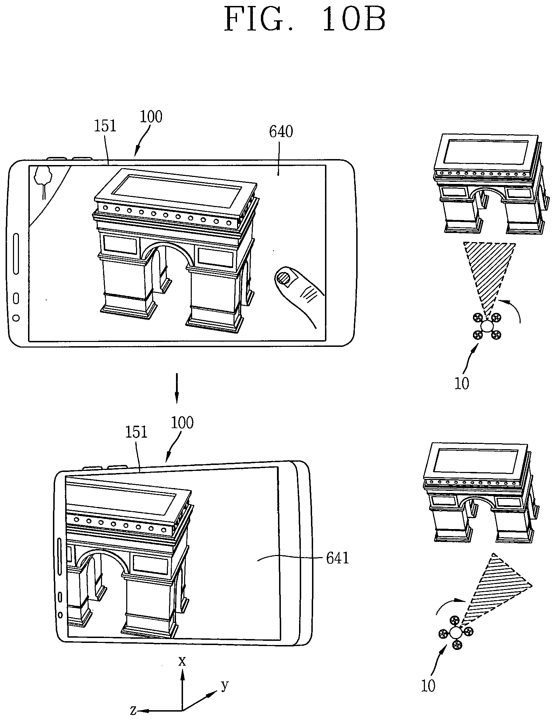

FIGS. 10A and 10B are conceptual views illustrating a control method when a second control region for controlling a camera is extended. When the touchscreen 151 is partitioned into the first and the second control region (B1, B2), the controller 180 sets an extended control region in which the second control region is extended based on a specific type of first touch applied to the second control region (B2). The touchscreen 151 displays a capture image 630 while applying the first touch.

A second indicator 803 indicating an extended control region in which the second control region is extended is displayed on the touchscreen 151, and a guide image 631 indicating a capture range in a region adjacent to the first touch. The guide image 631 is formed with two crossing axes and a coordinate point indicating a capture range. The controller 180 can form a flight control command for changing the capture angle based on a touch input applied to the second touch. Furthermore, the touchscreen 151 can move and display the coordinate point to correspond to the capture angle.

Furthermore, while the first and the second touch are applied, the touchscreen 151 displays a capture image, and displays the first and the second capture image 631, 632, respectively, which are captured by a capture range changed based on the second touch.

A control method of forming a capture control command based on the movement of the body will be described with reference to FIG. 10B. The controller 180 forms a control command for sensing the movement of the body and controlling the panning and tilting of the camera according to the movement of the body while a touch is applied to the second control region (B2). The first and the second touch are applied to a capture image 640 displayed on the touchscreen 151.

For example, the controller 180 forms a capture control command for changing a capture range in a y-axis direction passing through the touchscreen 151 of the camera. When the touchscreen 151 is rotated in the right direction with respect to the x-axis, the capture control command is formed to move a capture range of the camera to the right region. The touchscreen 151 displays a first capture image 641 according to a capture range changed based on the movement of the body. According to the present embodiment, a user can control a capture range using a gesture like capturing an external environment through a rear camera, thereby allowing intuitive control.

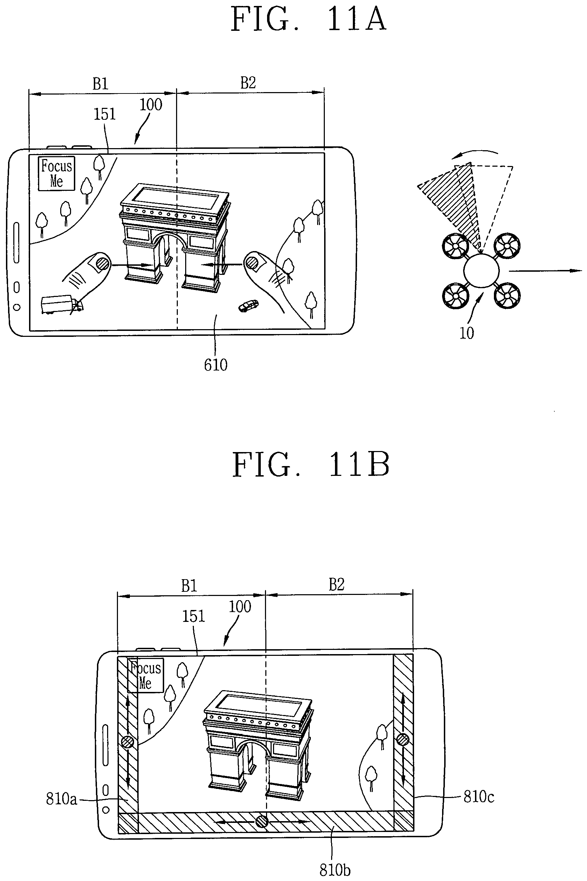

FIGS. 11A through 11C are conceptual views illustrating a control method according to another embodiment in a horizontal mode. Referring to FIG. 11A, when the touchscreen 151 is divided into the first and the second control region (B1, B2), the controller 180 forms an independent control command based on a touch applied to each control region.

The controller 180 forms a flight control command based on a first touch applied to the first control region (B1), and forms a capture control command based on a second touch applied to the second control region (B2). The first and the second touch may be sensed at the same time, the flight control command and the capture control command are independently formed.

Referring to FIG. 11B, the controller 180 can control the touchscreen 151 to display the first through the third control image 810a, 810b, 810c when the first and the second control region (B1, B2) are set. The first through the third control image 810a, 810b, 810c may be displayed in different edge regions of the touchscreen 151, and receive a touch input to form a different control command. The first through the third control image 810a, 810b, 810c are displayed regardless of the first and the second control region (B1, B2).

When the touchscreen includes an edge region formed with a curved surface, part of the first through the third control image 810a, 810b, 810c may be displayed on the curved surface region. For example, the first control image 810a, the second control image 810b and the third control image 810c may correspond to a control command for controlling a zoom-in/zoom-out function of the camera, a control command for switching a moving direction of the unmanned aerial vehicle 10, and a control command for controlling the rotation of the unmanned aerial vehicle 10. Accordingly, the user can apply a touch input to a control image to form a control command including more fine control information.

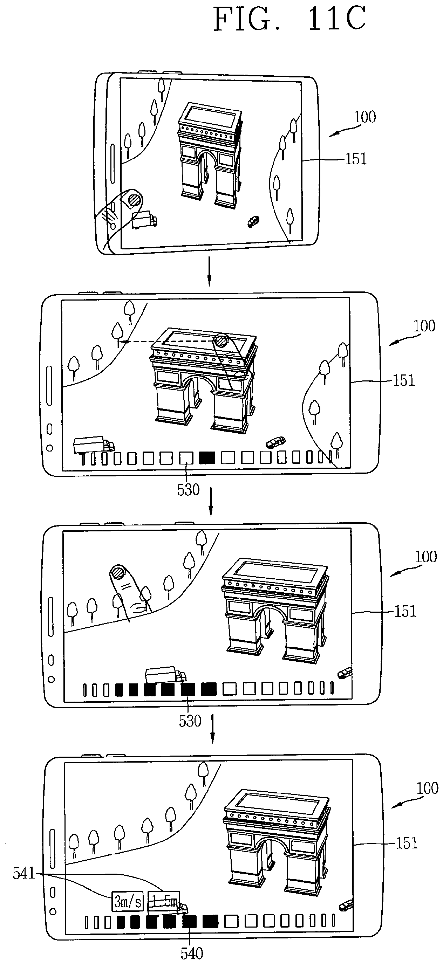

Referring to FIG. 11C, the controller 180 forms a flight control command of the unmanned aerial vehicle 10 based on the movement of the body sensed in a state the capture image 610 is displayed. When a touch is applied to the touchscreen 151, the controller 180 displays a speed control image 615. The speed control image 615 may be formed in a shape extended in one direction, and said one direction may correspond to a length direction of the touchscreen 151, but is not limited to this. The speed control image 615 may be formed in a consecutive bar shape or formed in a plurality of images arranged in one direction.

The controller 180 allows a region to which the touch input is initially applied to correspond to a current speed, and forms a flight control command including speed change information corresponding to a touch range being away from the initially applied region. The speed change increases as being away from the initial touch position. Furthermore, the flight control command may include the direction information of the unmanned aerial vehicle 10 based on the moving direction of the touch input. When the second touch is applied in one direction on the speed control image 615, the controller 180 forms a flight control command for increasing a speed while maintaining a current flight direction of the unmanned aerial vehicle 10. On the contrary, when the second touch is applied in an opposite direction to the one direction, the controller 180 can form a flight control command for decreasing a current flight speed of the unmanned aerial vehicle 10. In this instance, a flight control command for allowing the unmanned aerial vehicle 10 to fly in an opposite direction may be formed as increasing a touch range of the second touch. The touchscreen 151 displays speed information 541 indicating a current speed and a moving distance along with the speed control image 615.

Furthermore, when the second touch is released and a preset period of time (several seconds) has passed, the controller controls the touchscreen to allow the speed information 541 and the speed control image 615 to disappear. According to the present embodiment, the controller 180 can adjust the location of an unmanned aerial vehicle in a finer manner using a touch applied to the touchscreen 151.

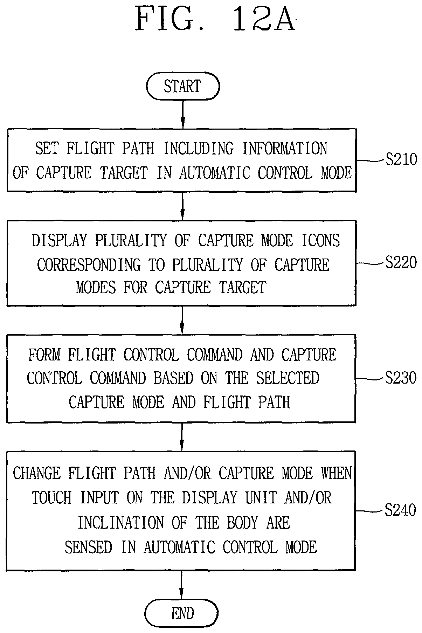

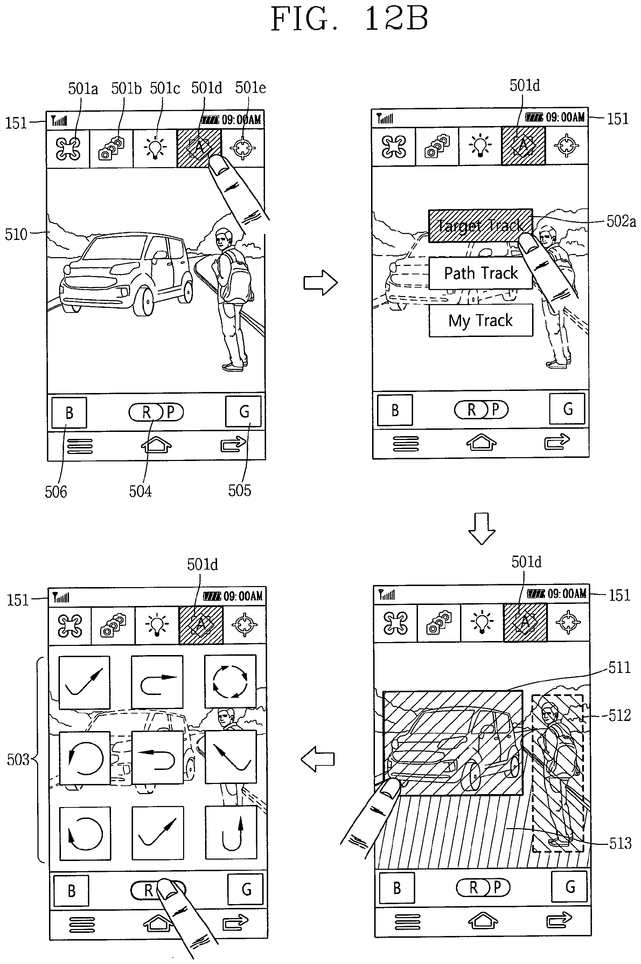

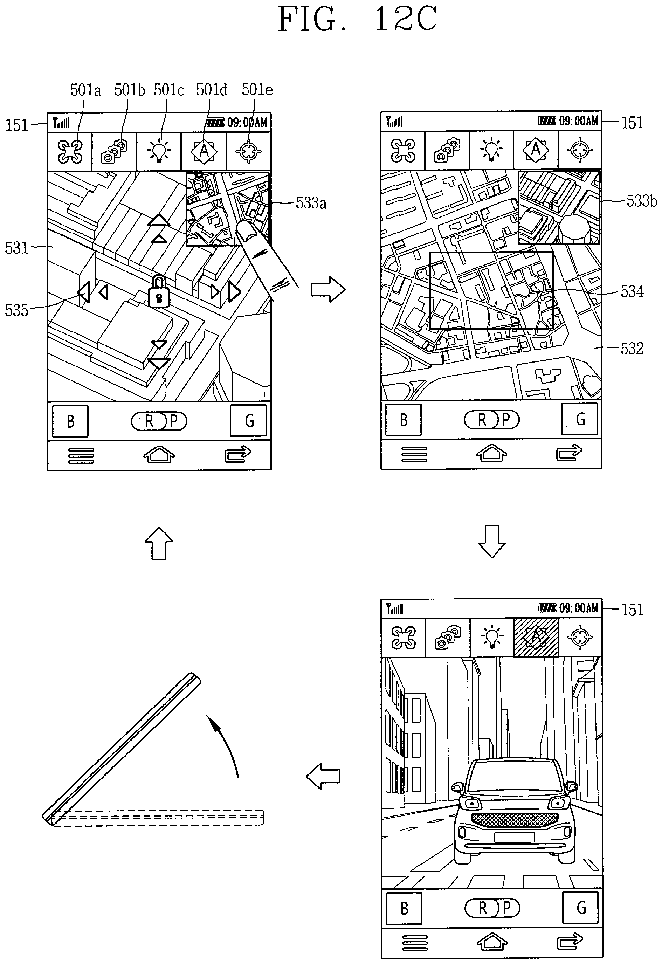

FIG. 12A is a flow chart illustrating a control method of a mobile terminal according to an embodiment of the present disclosure, and FIGS. 12B and 12C are conceptual views illustrating the control method of FIG. 12A. A control method of a mobile terminal for controlling the flight of an unmanned aerial vehicle and a camera mounted on the unmanned aerial vehicle will be described with reference to FIGS. 12A and 12B. An application for controlling the flight and capture of an unmanned aerial vehicle is installed on a mobile terminal according to the present embodiment. When the application is performed, the controller 180 controls the wireless communication unit 110 to perform wireless communication with the unmanned aerial vehicle. The wireless communication unit 110 receives a video image captured by the camera of the unmanned aerial vehicle. The

The touchscreen 151 displays an execution screen of the application. The execution screen may include a video image 540 received from the unmanned aerial vehicle. The video image 540 may vary based on the flight of the unmanned aerial vehicle or a capture range of the camera. The execution screen may include a plurality of menu images corresponding to different functions and receiving a touch input. For example, the execution screen may include a first menu image 501a for activating a manual mode to manually control the flight of the unmanned aerial vehicle, a second image 501b for activating a capture mode to capture a surrounding environment from the sky, a third menu image 501c for activating/deactivating a flash mounted on the unmanned aerial vehicle, a fourth menu image 501d corresponding to an automatic control mode for controlling the unmanned aerial vehicle by a preset flight path and a capture target object and a fifth menu image 501e for executing a quick return command to return the unmanned aerial vehicle to the location of the user of the mobile terminal 100.

The third menu image 501c is formed with a toggle key. In other words, the illumination of the flash may be turn on or off based on a touch consecutively applied to the third menu image 501c. Otherwise, an automatic mode in which the flash is automatically turned on and a night mode in which the flash is automatically turned on at night may be activated based on touches repeatedly applied thereto.

The execution screen may include a capture icon 504 for executing a capture function (recording function) of the camera mounted on the unmanned aerial vehicle, a gallery icon 505 for displaying an image captured by the camera of the unmanned aerial vehicle, and a backward icon 506 for forming a control command for a backward flight of the unmanned aerial vehicle. When a touch is applied to the fourth menu image 501d, the controller 180 activates an automatic control mode. The controller 180 forms a flight control command of the unmanned aerial vehicle and a capture control command of the unmanned aerial vehicle camera without a user's additional control command in the automatic control mode. The flight control command and the capture control command may be transmitted at once or transmitted with a plurality of control commands in real time to the unmanned aerial vehicle.

The controller 180 sets a flight path including the information of a capture target in an automatic control mode (S310). The capture target may correspond to a specific one object or set to a plurality of objects according to the flight of the unmanned aerial vehicle. According to the present embodiment, the controller 180 can activate an object track mode (Target Track) to set a flight path including the information of the capture target.

An embodiment of setting a flight path by an object track mode (Target Track) for tracking a set target object will be described with reference to FIG. 12B. The controller 180 can select a target object as a capture object to set a flight path in the object track mode. When the automatic control mode is activated, the touchscreen 151 displays a graphic image corresponding to a plurality of lower modes to collect the target object information. When a first graphic image 502a corresponding to the target object is selected from the plurality of graphic images, the touchscreen 151 redisplays the video image 540, and displays a first through a third candidate object 541, 542, 543 to set a target object. For example, candidate objects included in the video image 540 and determined as trackable objects may be highlighted and displayed. The use may apply a touch to any one of the first through the third candidate object 541, 542, 543 to set it as a target object. On the drawing, the first candidate object 541, second candidate object 542 and third candidate object 543 correspond to an automobile, a person and a road, respectively.

When the target object information is collected, a plurality of capture mode icons 503 corresponding to a plurality of capture mode for the capture object are displayed (S320). The plurality of capture mode icons 503 are provided based on the information of the selected target object. The information of the plurality of capture modes may be prestored in the memory 170 or received from a specific server. The controller 180 provides a capture mode suitable to the movement characteristics of a target object. Nine capture mode icons are illustrated on the drawing, but the number of provided capture modes is not limited to this.

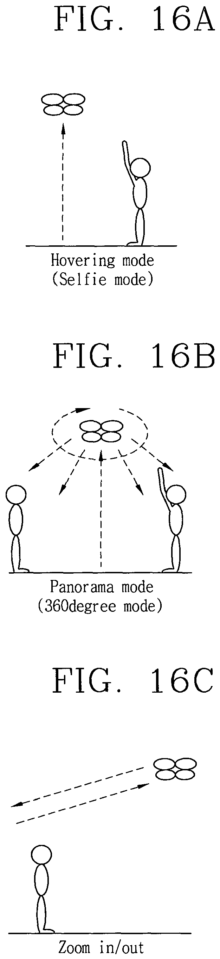

The capture mode may include different schemes for allowing the camera of the unmanned aerial vehicle to capture the capture target. The description of the capture modes will be described with reference to FIGS. 16A through 17H. A capture mode is selected when a touch is applied to the capture mode icon, and the controller 180 forms a flight control command and a capture control command based on the selected capture mode and flight path when a control command is received at the capture icon 504 (S330). The wireless communication unit transmits the flight control command and capture control command to the unmanned aerial vehicle.

The flight control command and the capture control command may include a flight end command based on the flight path, but is not limited to this. In other words, the flight control command and capture control command may be continuously formed while the target object moves or control due to the flight control command and capture control command may be ended when an end control command additionally applied by the user is transmitted.

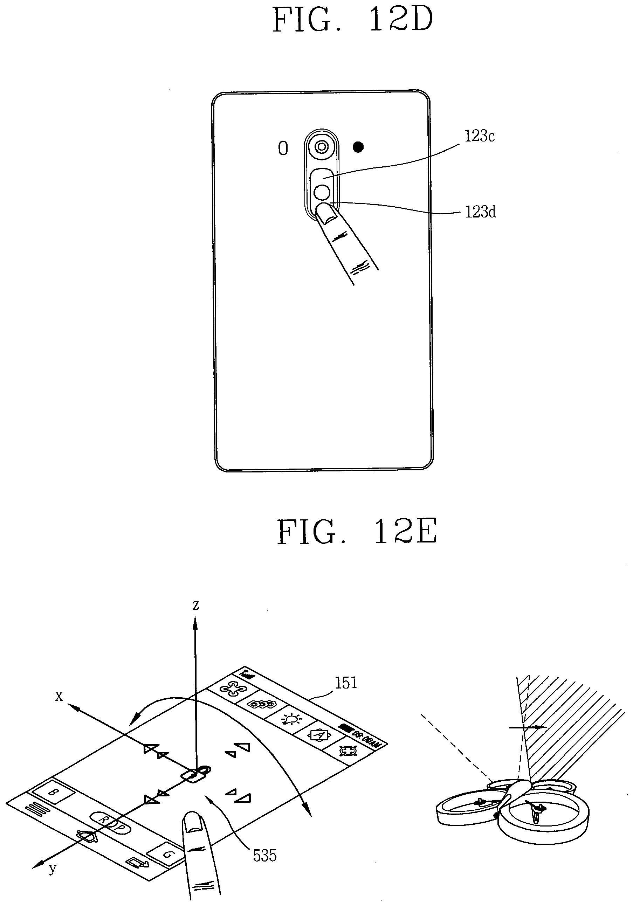

FIGS. 12D and 12E are conceptual views illustrating a control method of forming a flight control command and a capture control command based on a touch input and the movement of the body in a manual control mode. Further, when a touch input on the touchscreen 151 and/or an inclination of the body of the mobile terminal 100 is sensed in the automatic control mode, the flight path and/or capture mode is changed (S340). A control method of changing the flight path and capture mode by the user while the amplifier circuit unit is activated will be described with reference to FIG. 12C.

According to the present embodiment, the unmanned aerial vehicle moves along a flight path formed based on the movement of the target object, and the camera of the unmanned aerial vehicle captures the surrounding of the target object based on the flight control command and the capture control command. The wireless communication unit 110 receives an image captured by the camera in real time, and the touchscreen 151 displays a capture image. In the automatic control mode, the unmanned aerial vehicle flies on a preset path to capture a target object without any additional control command.

The controller 180 can change the flight path and the capture mode based on an additional control command when the automatic control mode is activated. When a touch input applied to the touchscreen 151 or the movement of the body is sensed, the controller 180 switches it to a manual control mode. Switching to the manual control mode may be temporary or the manual control mode may be maintained until applying a control command for switching it to an automatic control mode.

The controller 180 can form a flight control command according to the movement of the body when a touch input is maintained on the touchscreen 151. When the touch input is released, a flight control command may not be formed, and the unmanned aerial vehicle switched to an automatic control mode again.

When the movement of the body 100 is sensed over a preset range, the controller 180 may activate the manual control mode. When the manual control mode is performed, the touchscreen 151 displays a control icon 565 on a capture image 561. The control icon 565 may include a plurality of graphic images indicating different directions. For example, the control icon 565 may include a direction image having a first and a second size indicating a horizontal direction and a vertical direction, respectively.

The first size is less than the second size. The controller 180 can form a flight control command including direction information and speed information based on a touch applied to the control icon 565. When a flight control command additionally generated by the control icon 565 is received at the unmanned aerial vehicle flying based on a flight control command formed in the automatic control mode, the flight path is changed. Furthermore, the capture range of the camera is also changed based on a change of the flight path. However, even when a touch input is applied to one region of the touchscreen 151 on which the control icon 565 is not displayed, the controller 180 forms a flight control command including direction information using a relative location with respect to the control icon 565 indicating the direction.

When a touch applied to a direction image having a first size is released on the control icon 565, the controller 180 can form a flight control command for stopping the unmanned aerial vehicle, and form a flight control command for flying while maintaining a current speed even when a touch applied to a direction image having the second size is released. In this instance, when a touch is applied again to a direction image having the second size, the controller 180 can form a flight control command for stopping the unmanned aerial vehicle.

Further, in a vertical mode in which the display direction of the touchscreen 151 has a length direction of the touchscreen 151, the touchscreen 151 displays a map view icon 563a on the capture image 561. The map view icon 563a may include map information on a location at which the unmanned aerial vehicle flies. When a touch is applied to the map view icon 563a, the controller 180 controls the touchscreen 151 to switch the capture image 561 to a map screen 562 including the map information. In this instance, the map view icon 563a is switched to a capture icon 563b including the capture image 561. In other words, the user can apply a touch to the map view icon 563a and the capture icon 563b to receive his or her desired information.

The touchscreen 151 displays a capture guide 564 indicating a capture range captured by the camera on the map screen 532. When a touch is applied to the capture guide 564 to move the location of the capture guide 564 on the map screen 532, the controller 180 forms a capture control command for controlling the camera to capture a region included in the capture guide 564.

Referring to FIG. 12D, the controller 180 forms speed information included in the flight control command based on a control command applied to a rear key. The rear key may be divided into a first region 123c and a second region 123d, and may be formed with a press key in which a control command is formed by an external force. The controller 180 forms a flight control command for enhancing the speed when the first region 123c is pressed, and reducing the speed when the second region 123d is pressed. Furthermore, the controller 180 can determine the information of increasing or decreasing the speed based on a number of pressing the first and the second region 123c, 123d. Otherwise, the unmanned aerial vehicle 10 may form a control command for allowing the unmanned aerial vehicle to fly while maintaining a specific speed based on the consecutively applied control commands.

Referring to FIG. 12E, when the manual control mode is activated, the controller 180 senses the movement of the body of the mobile terminal 100. For example, when the rotation of the body is sensed around the z-axis, the controller 180 forms a capture control command for changing a capture range of the camera. The controller 180 forms a capture control command for tilting or panning the camera based on the rotation degree of the body.

When a change range of the capture range of the camera of the unmanned aerial vehicle exceeds in response to the rotation degree, the controller 180 can form a flight control command for controlling the rotation of the unmanned aerial vehicle. Furthermore, the controller 180 can switch a control mode to form a capture control command for controlling a capture range of the camera by the control icon 565 based on a touch additionally applied to the menu icon 501a. In this instance, the controller 180 can form the flight control command based on the movement of the body. The menu icon 501a is formed with a toggle key, and alternately switched between a camera control mode and a flight control mode by a repetitive touch.

In more detail, a flight control command for controlling the flight direction and altitude of the unmanned aerial vehicle may be formed by the movement and rotation with respect to the x-axis and y-axis. Upon receiving a control command formed when the manual control mode is activated, the unmanned aerial vehicle temporarily ignore a control command formed when the automatic control mode is activated. However, the controller 180 can activate a function of limiting the manual control mode based on the flight status of the unmanned aerial vehicle. Hereinafter, a control method of limiting the manual control mode will be described in detail.

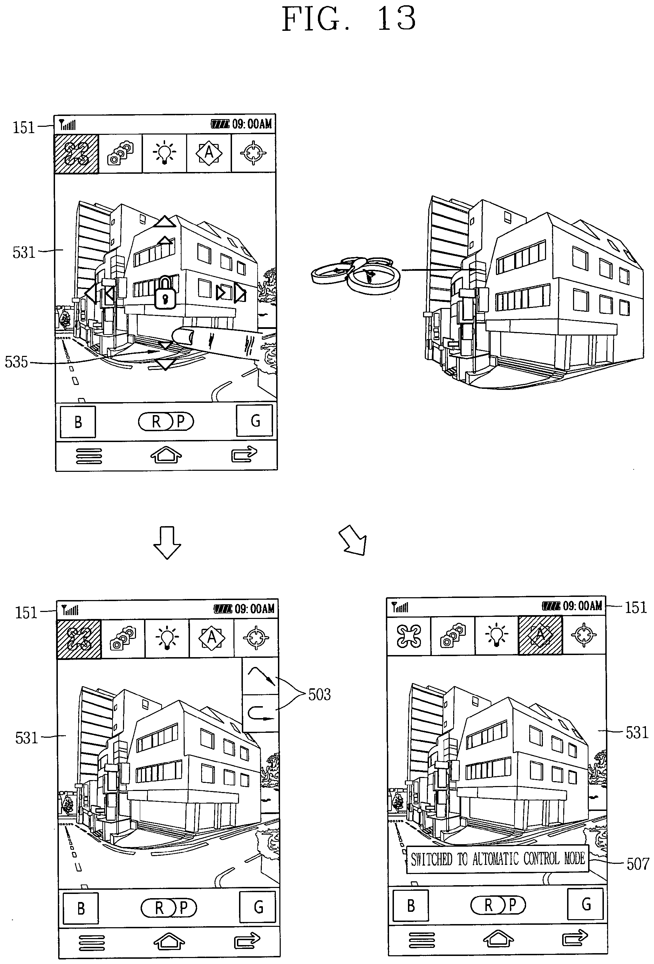

FIG. 13 is a conceptual view illustrating a control method of limiting a manual control mode. The controller 180 can receive a capture image captured from the camera of the unmanned aerial vehicle and geographic information on the flight path of the unmanned aerial vehicle from a specific server in real time. When a danger is sensed by the capture image and the geographic information during the flight of the unmanned aerial vehicle, the controller 180 can limit the manual control mode.

In order to prevent a manual control mode, the controller 180 controls the touchscreen 151 to allow the control icon 565 displayed on the capture image 561 to disappear and display a selectable capture mode icon 503. The capture mode icon 503 may include information on a flight path for allowing the unmanned aerial vehicle to stably fly based on the geographic information. Accordingly, the user cannot control the flight of the unmanned aerial vehicle with the control icon 565. Accordingly, it is possible to prevent a danger of the unmanned aerial vehicle when the user controls the unmanned aerial vehicle without knowing the flight status of the unmanned aerial vehicle.

The controller 180 forms and transmits the flight control command based on a touch applied to the capture mode icon 503. When a dangerous factor disappears based on the capture image and the geographic information, the controller 180 can activate the manual control mode again. Alternatively, when the dangerous factor is sensed, the controller 180 can immediately switch the manual control mode to the automatic control mode. The controller 180 controls the unmanned aerial vehicle using a previously formed flight control command in the automatic control mode.

The touchscreen 151 displays a guide message 507 indicating that the automatic control mode is activated on the capture image 561. Furthermore, the activation of the automatic control mode may be displayed on the fourth menu image 501d. According to the present embodiment, when a dangerous factor occurs during the flight of the unmanned aerial vehicle by the user's manual control, it may be switched to the automatic control mode to promote a stable flight.

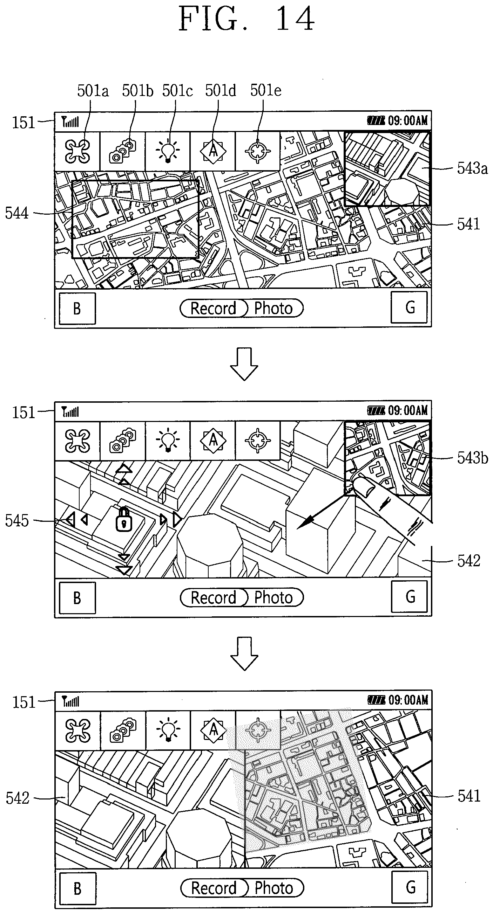

FIG. 14 is a conceptual view illustrating an execution screen in case of a horizontal mode. When the application is performed in the horizontal mode, the controller 180 controls the touchscreen 151 to display a map screen 571. The map screen 571 may include the map information of a region in which the unmanned aerial vehicle flies. A capture guide 574 indicating a capture range captured by the camera of the unmanned aerial vehicle is displayed on the map screen 571. The controller 180 can apply a touch to the capture guide 574 to form a capture control command for changing the capture range.

Furthermore, when the capture icon 573a is displayed on the map screen 571, and a touch is applied to the capture icon 573a, the controller 180 switches the map screen 571 to a capture image 572. When the capture image 572 is displayed on the touchscreen 151, the controller 180 controls the touchscreen 151 to switch the capture icon 573a to a map view icon 573b. The controller 180 controls the touchscreen 151 to display the control icon 575 on the capture image 572, and activate the manual control mode based on a touch applied to the control icon 575.

The touchscreen 151 can enlarge the size of the map view icon 573b based on a touch applied to the map view icon 573b. When the map view icon 573b is enlarged above a specific size, the controller 180 can partition the touchscreen 151 into two regions, and display the map screen 571 and the capture image 572 at the same time. Furthermore, the control icon 575 may be displayed in one region on the touchscreen 151.

The controller 180 can form a flight path based on a touch applied to the touchscreen 151 while displaying the map screen 571. In other words, the flight path may be formed based on a location selected by the user on the map screen, and an embodiment of setting a flight path by a location setting mode (Path Track) will be described below.

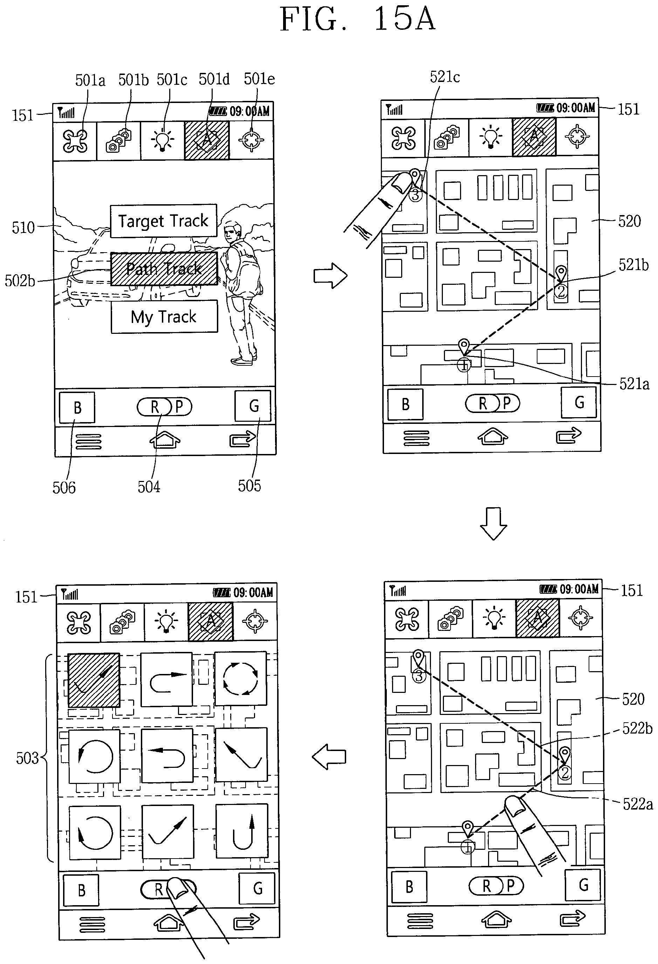

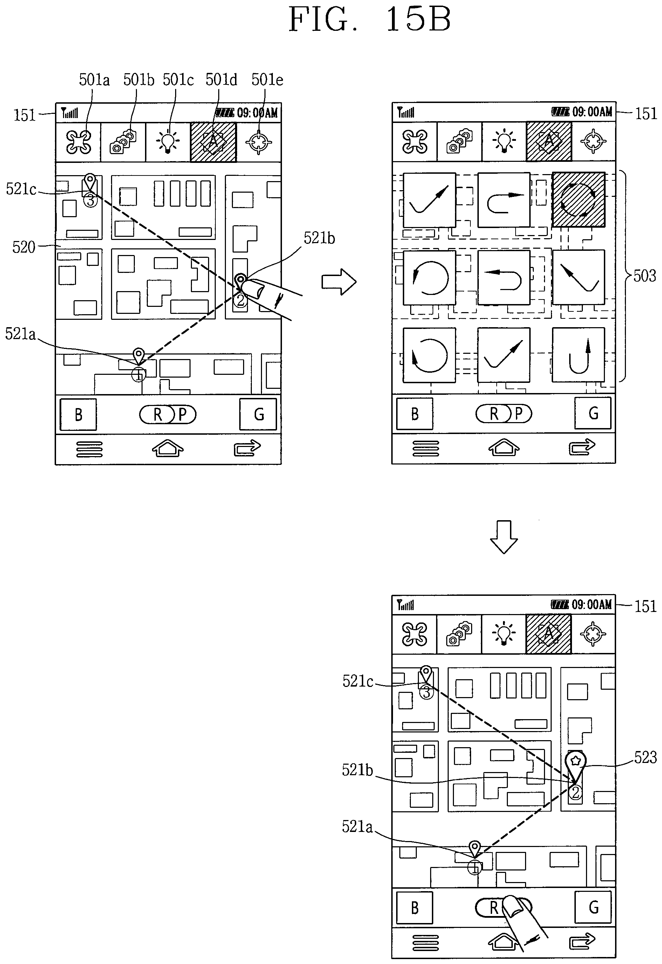

FIGS. 15A and 15B are conceptual views illustrating a control method of setting a flight path according to another embodiment. The touchscreen 151 displays a graphic object corresponding to a plurality of lower modes when the automatic control mode is activated. When a second geographic information 502b corresponding to the location setting mode is selected from the plurality of geographic information, the controller 180 controls the touchscreen 151 to display a map screen 520.

The controller 180 selects at least one index location based on a touch applied to the map screen 550. For example, the controller 180 can set a flight path based on the index locations and sequence according to the sequence of touches applied to the map screen 550 to display a geographic information on the index locations. The geographic information may include information (number) on the selected sequence, and change the sequence when an additional touch is applied thereto. The controller 180 forms a path based on the index locations and sequence.

As illustrated in FIG. 15A, the touchscreen 151 displays a first through a third index location 521a, 521b, 521c on the map screen 520. Furthermore, the touchscreen 151 displays a first and a second path image 522a, 522b to indicate the flight path. The controller 180 can receive information associated with the selected index locations from a specific server. The associated information may include a topography of the index locations, buildings existing at the index locations, information associated with the buildings, legal regulations associated with the flight of unmanned aerial vehicles, and the like. The controller 180 sets the flight path using information associated with the index locations.

The controller 180 controls the touchscreen 151 to display a plurality of capture mode icons 503 for determining a capture mode of the selected flight path by applying a touch to the first and the second path image 522a, 522b. For example, when the first path image 522a is selected, a method of capturing the relevant path while the unmanned aerial vehicle flies from the first index location 521a to the second index location 521b may be determined.

Further, referring to FIG. 15B, the controller 180 can set a flight path including the index location, and determine a capture mode of the index location based on a specific type of touch applied to the index location. For example, when a long touch is applied to the second index location 521b, the touchscreen 151 displays the plurality of capture mode icons 503. When the unmanned aerial vehicle arrives at the second index location, the controller 180 forms a flight control command and a capture control command based on the selected capture mode.

The touchscreen 151 can display a graphic image corresponding to the selected capture mode at the second index location 521b. In this instance, the graphic image may not include information on the selected capture mode. According to the present embodiment, a flight path of the unmanned aerial vehicle is determined by the selected index location, and thus the user can not need to control the flight in real time. Furthermore, the user can set a capture mode of the flight path including the index location in advance, and thus the unmanned aerial vehicle may more effectively form a capture image of the surrounding environment during the flight.

FIGS. 16A through 16H are conceptual views illustrating a capture mode when a capture target object is set. The capture target object may correspond to a target moving according to the passage of time or correspond to a building fixed at a specific location or a specific topography. Information on the capture mode may be stored in the memory 170 or received from a specific server. For example, the controller 180 connects an application to the specific server in a wireless manner when the application is activated, and, and analyzes the information of a capture target object to selectively provide at least one capture mode when the capture target object is set. Furthermore, the user can form a capture mode based on a control command applied when the manual control mode is activated. The capture mode may be stored along with a type of capture target object, information on a surrounding region, and the like.

FIG. 16A is a conceptual view illustrating a hovering mode. In the hovering mode, the unmanned aerial vehicle captures toward a target object while flying in the sky in proximity to the capture target object. In the hovering mode, the camera is continuously located toward a capture target object. In particular, when the capture target object is a person, it may be switched to a selfie mode, and in this instance, the camera may be controlled to sense a user's face and continuously capture the user's face during the flight.

FIG. 16B is a conceptual view illustrating a panorama mode. In the panorama mode, the camera captures a capture target object while rotating around the capture target object 360 degrees. The panorama mode captures a capture target object while maintaining a specific altitude and rotating around the capture target object even during the movement of the capture target object. An unmanned aerial vehicle according to the present embodiment may include three cameras. The unmanned aerial vehicle may capture a 360 degrees panoramic image using the three cameras, and the controller 180 can edit a capture image captured by the three cameras around the capture target object.

FIG. 16C is a conceptual view illustrating a zoom-in/zoom-out mode. In the zoom-in/zoom-out mode, the unmanned aerial vehicle flies to decrease or increase a distance between the unmanned aerial vehicle and the capture target object at specific time intervals. The controller 180 can form a flight control command to allow the unmanned aerial vehicle to fly at specific time intervals. Otherwise, a capture control command for executing a zoom-in/zoom-out function of the camera while maintaining substantially the same distance between the unmanned aerial vehicle and the capture target object may be formed.

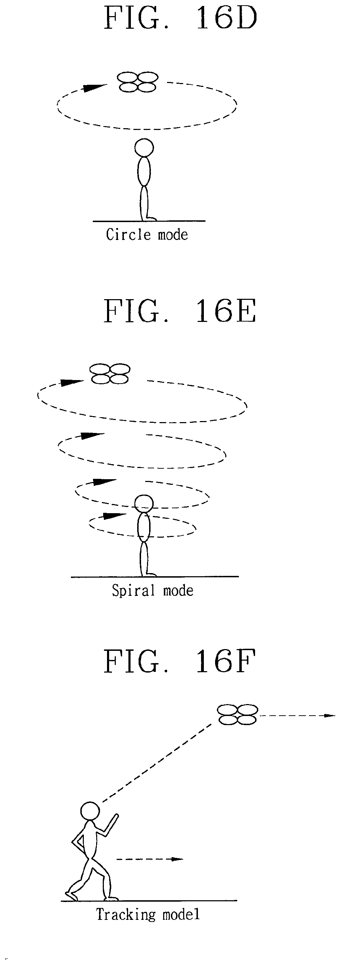

FIG. 16D is a conceptual view illustrating a circular mode. In the circular mode, the unmanned aerial vehicle flies while drawing a circle around the capture target object. A CF capture mode may be performed when the circular mode is activated. In the CF capture mode, the unmanned aerial vehicle moves around the capture target object at high speed to capture a plurality of images. The camera may randomly capture an image while rotating around the capture target object. Since the unmanned aerial vehicle rotates around a capture target object in a circular mode, the user can not need to carry the camera in real time, thereby preventing a danger of the unmanned aerial vehicle for capturing a moving capture target object from being collided with the capture target object.

FIG. 16E is a conceptual view illustrating a spiral mode. In the spiral mode, the unmanned aerial vehicle flies to gradually increase the altitude while drawing a larger and larger circle around the capture target object. Accordingly, the user can capture a high object without any additional control command.

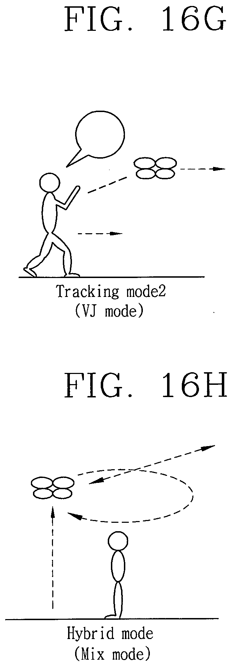

FIGS. 16F and 16G are conceptual views illustrating a tracking mode for capturing a moving capture target object. In the tracking mode, the unmanned aerial vehicle is controlled to move to an advanced position in the moving direction of a capture target object, and allow the camera of the unmanned aerial vehicle to continuously capture the capture target object. The unmanned aerial vehicle may be controlled to capture the capture target object at a higher altitude than that of the capture target object or capture the capture target object at substantially the same location as that of the capture target object.

Upon capturing the user as a capture target object in the tracking mode, the unmanned aerial vehicle may further include a microphone to store the user's voice at the same time. In this instance, the controller 180 of the mobile terminal may transmit a voice signal in real time to the unmanned aerial vehicle while the unmanned aerial vehicle captures the user. The unmanned aerial vehicle may further include a speaker to output the received voice signal.

FIG. 16H is a conceptual view illustrating an embodiment in which a plurality of capture modes are activated at the same time. For example, the unmanned aerial vehicle may fly to alternately activate a hovering mode, a zoom-in/zoom-out mode and a circular mode according to the flow of time and capture the capture target object.

Alternatively, the unmanned aerial vehicle may selectively activate one of a plurality of capture modes selected based on a surrounding environment varying according to the movement of the capture target object. According to the present embodiments, the unmanned aerial vehicle may stably capture a moving capture target object, and selectively capture a desired region of the capture target object, and thus it is not required to form a control command for controlling a flight path and changing a capture region.

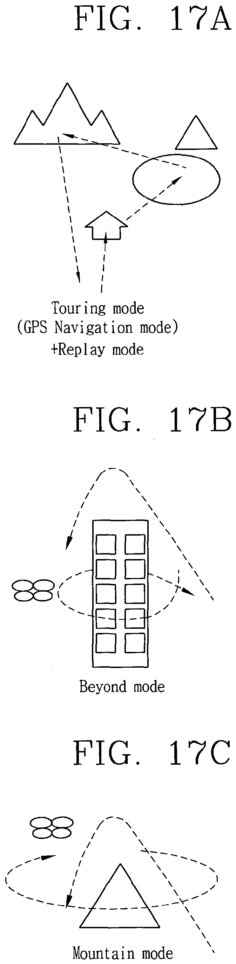

FIGS. 17A through 17H are conceptual views illustrating a capture mode for capturing a flight path according to various embodiments. FIG. 17A is a conceptual view illustrating a tour mode. In the tour mode, the viewing angle control pixel flies along a preset flight path. In the touch mode, the mobile terminal receives a capture image captured by the camera of the unmanned aerial vehicle in real time. Furthermore, in the tour mode, the touchscreen 151 displays the received capture image, and the controller 180 forms a flight control command and a capture control command based on a touch applied to the capture image.

FIG. 17B is a conceptual view illustrating a beyond mode. The beyond mode may be formed based on a topography included in a flight path. When a building above a preset height is included in the flight path, the beyond mode is activated, and the unmanned aerial vehicle is controlled to fly in the sky of the building. Otherwise, the unmanned aerial vehicle moves around the side of the building.

FIG. 17C is a conceptual view illustrating a detour mode. When a topography above a preset scale is included in the flight path, the controller 180 can activate the detour mode to fly around a specific topography. Here, the scale may correspond to a height, a width or the like. For example, when a mountain is included in the flight path, the controller 180 can activate the detour mode on a path passing through the mountain.

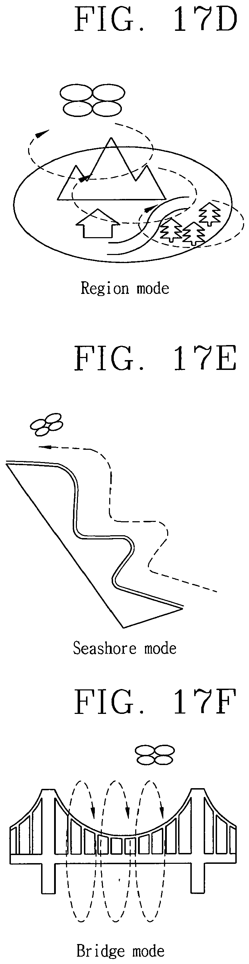

FIG. 17D is a conceptual view illustrating a region capture mode. IN the region capture mode, the unmanned aerial vehicle is controlled to capture a specific region among preset regions. For example, the unmanned aerial vehicle may selectively capture a mountain, a house, and the like within a specific region during the flight. Furthermore, the unmanned aerial vehicle may be controlled to fly along a preset capture target object in the region capture mode. In other words, while the unmanned aerial vehicle flies within a preset region, the controller 180 can control the unmanned aerial vehicle to activate the region capture mode, and fly along a specific object within a preset region.

FIG. 17E is a conceptual view illustrating a seashore mode. When a seashore topography is included in the flight path, the controller 180 activates the seashore mode. In the seashore mode, the unmanned aerial vehicle is controlled to fly along a seashore topography.

FIG. 17F is a conceptual view illustrating a bridge mode. When a bridge is included in the flight path, the controller 180 activates the bridge mode. In the bridge mode, the unmanned aerial vehicle flies while rotating with respect to the bridge. In the bridge mode, the unmanned aerial vehicle may capture a bridge while passing above or below the bridge.

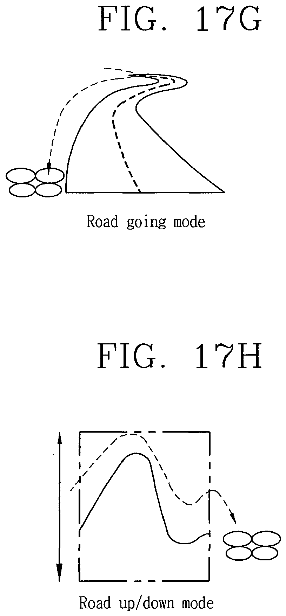

FIG. 17G is a conceptual view illustrating a road going mode. When a road is included in the flight path, the controller 180 activates the road going mode, and the unmanned aerial vehicle flies to move along the road. In the road going mode, the controller 180 collects information on a topography of the road, and forms a flight control command to fly along the road.

FIG. 17H is a conceptual view illustrating an up/down mode. When a specific type of topography is included in the flight path, the controller 180 can activate the up/down mode. The unmanned aerial vehicle flies while changing the altitude in the up/down mode. Here, the specific type of topography may correspond to a topography in which a mountain with a high change rate of the altitude or a plurality of buildings are formed. The controller 180 receives information on a type of topography to set a flight path of the unmanned aerial vehicle. According to the present embodiment, a flight mode based on the feature of a topography may be activated while the unmanned aerial vehicle flies in an automatic controlled manner, thereby allowing more stable flight.

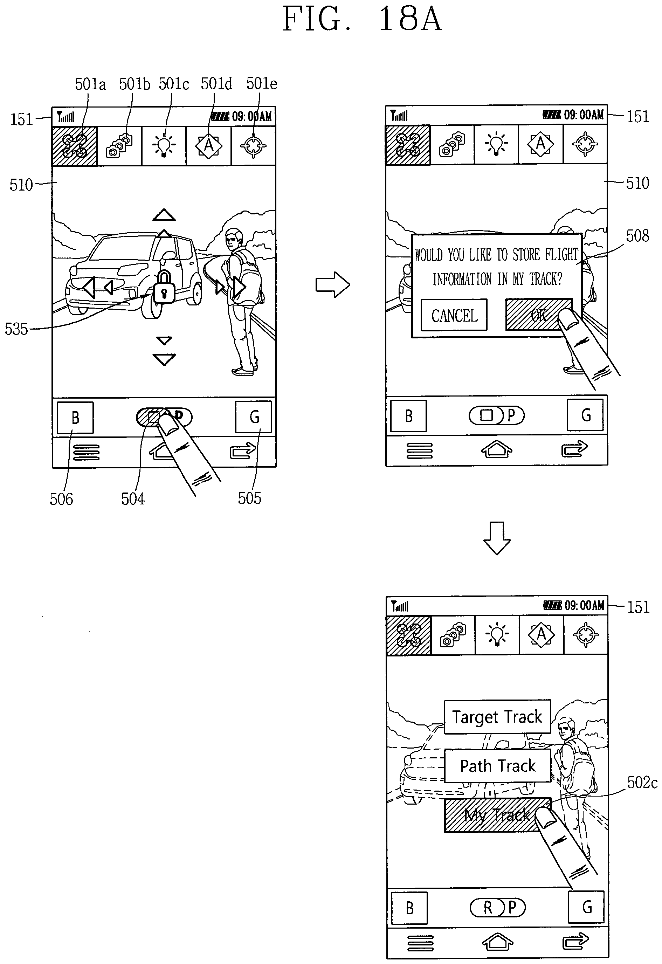

FIGS. 18A through 18C are conceptual views illustrating a control method for setting a flight path of an unmanned aerial vehicle according to another embodiment. Referring to FIG. 18A, the touchscreen 151 displays the video image 540 and the control icon 565 when the manual control mode is activated in the vertical mode. The controller 180 ends the flight and capture of the unmanned aerial vehicle based on a touch applied to the capture icon 504. When the manual control of the unmanned aerial vehicle ends, the controller 180 controls the touchscreen 151 to display a guide window 508 for storing information on the flight and capture of the unmanned aerial vehicle.

However, the controller 180 can display the guide window 508 based on a touch input to the capture icon 504 for forming a flight control command and a capture control command for starting the flight of the unmanned aerial vehicle in the manual mode. The controller 180 can control the memory 170 to store a flight path controlled in the manual control mode based on a touch applied to the guide window 508. For example, the controller 180 can display a plurality of graphic images based on a control command desired to store information on the flight path. When a touch is applied to the third graphic image 502c, information on the flight path previously collected or formed based on a manual control command may be stored.

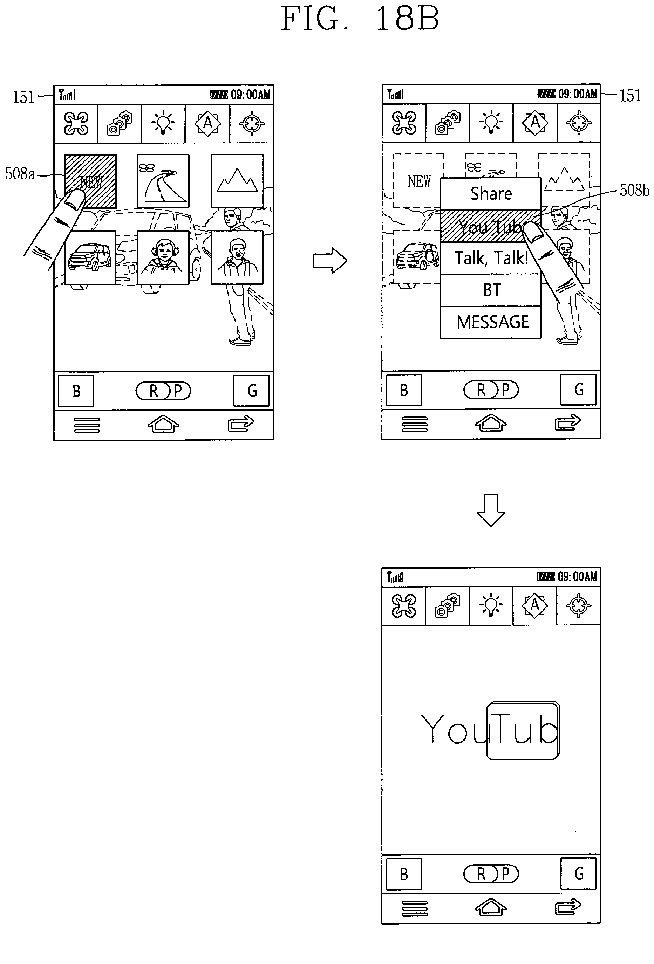

Referring to FIG. 18B, when information on the flight path is stored in the memory 170, the controller 180 can display a representative icon 508a representing the flight path. The controller 180 can share information on the flight path with a specific server or another terminal based on a touch applied to the representative icon 508a. When the representative icon 508a is selected, the touchscreen 151 displays a share window 508b including an object to be shared. The controller 180 can select a server to be shared based on a touch applied to the share window 508b. When a flight path is uploaded, the touchscreen 151 can display a capture image.

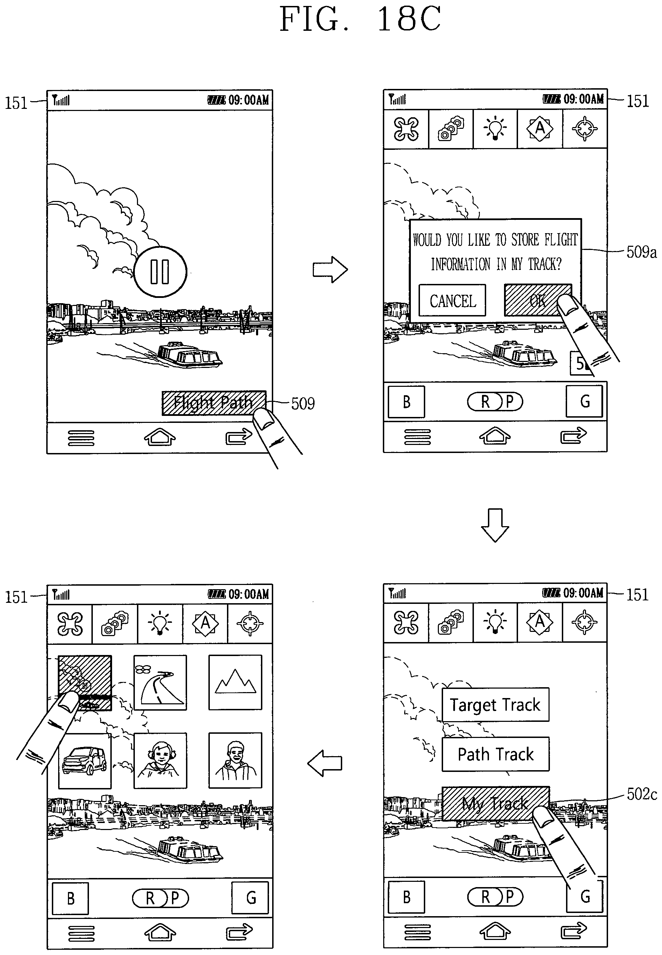

A control method of forming shared information will be described with reference to FIG. 18C. The controller 180 can receive information on a flight path based on a control command applied thereto while video information is played on the touchscreen 151. When video information stored along with information on a flight path is displayed, the touchscreen 151 can display a graphic image 509 for receiving a touch at the same time to store information on the flight path.

The controller 180 executes an application for controlling the unmanned aerial vehicle based on a touch applied to the graphic image 509. When the application is performed, the controller 180 activates the camera of the unmanned aerial vehicle. The touchscreen 151 displays a guide window 509a for storing the information of the flight path. The controller 180 stores information on a flight path linked with the video information in the memory 170 based on a touch applied to the third graphic image 502c. When information on the flight path is stored, the controller 180 controls the representative icon 508a corresponding to information on the flight path to be displayed on the flight path on the touchscreen 151.

According to the present embodiment, flight path information due to a control command controlled by the user can be stored in a manual control mode and used in an automatic control mode, and information on this may be shared by a server or the like. Furthermore, a unmanned aerial vehicle may be automatically controlled using information on a flight path shared by a server.

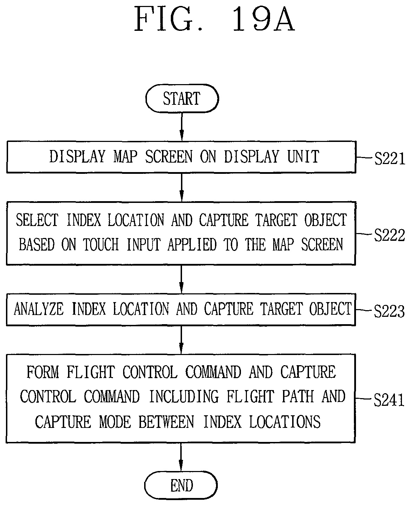

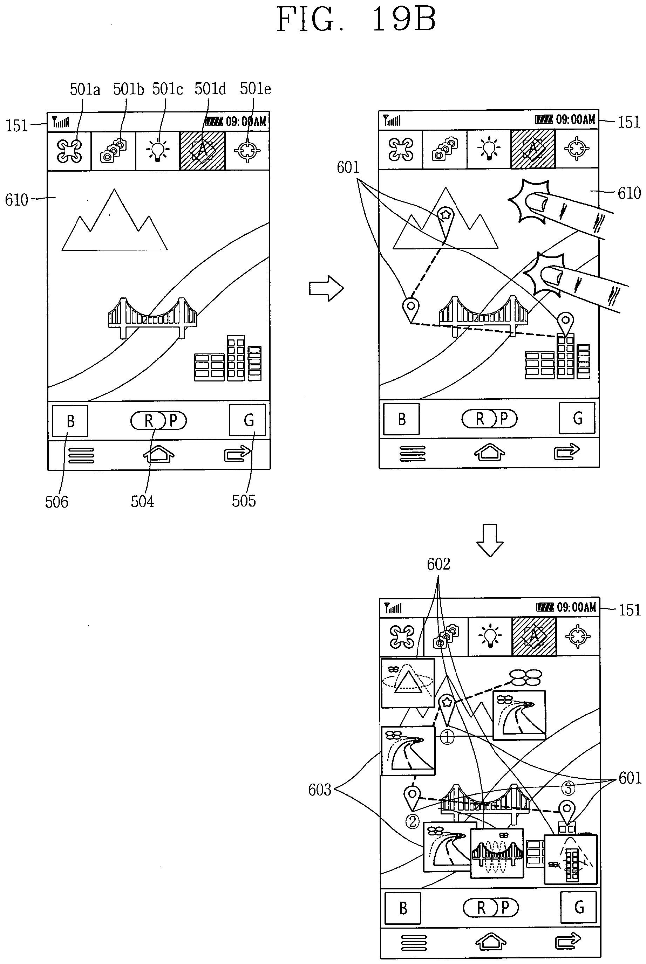

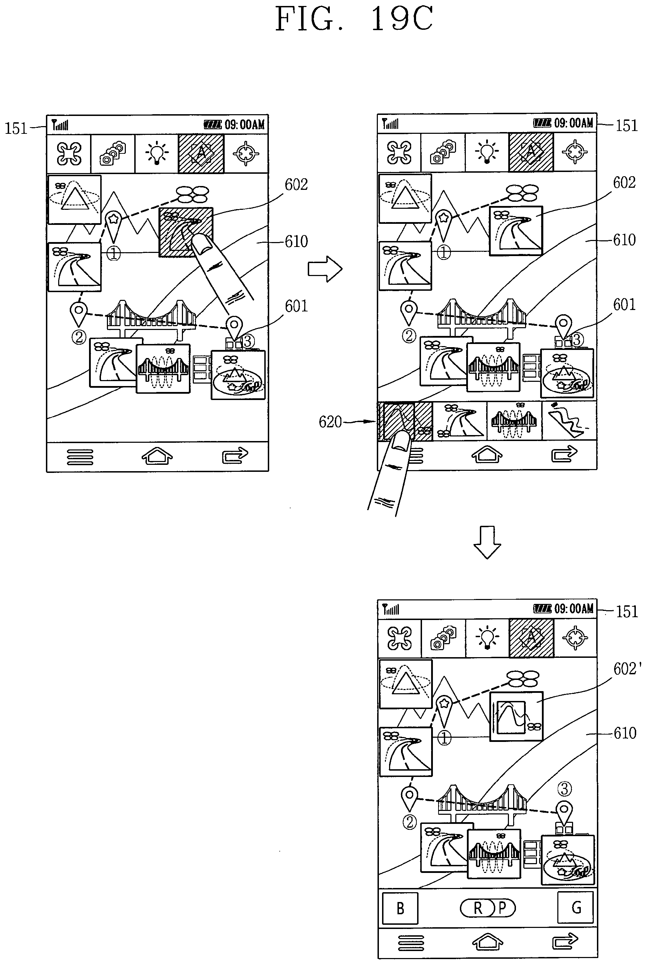

FIG. 19A is a flow chart illustrating a control method of setting a capture mode on a flight path, and FIGS. 19B and 19C are conceptual views illustrating the control method of FIG. 19A. Referring to FIGS. 19A and 19B, the touchscreen 151 displays a map screen 710 (S321). The controller 180 selects an index location and a capture target object based on a touch input applied to the map screen (S322).

The controller 180 sets an index location 701 for forming the flight path based on a touch applied to the map screen 710. The controller 180 can form a flight path based on the location of touches applied to the touchscreen 151 and a sequence in which the touches are applied thereto. The touchscreen 151 can display a path image corresponding to the flight path. The controller 180 can select a capture target object to be captured by the camera of the unmanned aerial vehicle. For example, it may include when the capture target object is included in the map screen 710 and when the capture target object is a moving object.

The controller 180 sets at least one capture mode based on a specific type of control command applied thereto subsequent to forming the flight path. Here, the specific type of control command may correspond to a specific type of touch input applied to the touchscreen 151, a knock-on type of control command, and the touchscreen 151 can display an icon for receiving a touch to form the control command.

The controller 180 analyzes the index locations and capture target object (S323), and forms a flight control command and a capture control command including a flight path between the index locations 701 and a capture mode (S341). The controller 180 can set a plurality of capture modes to one flight path. The controller 180 analyzes the information of a flight path including the index locations, and forms a capture mode based on the information. The capture mode may be formed to correspond to each index location and a flight path moving between each index location, and a different capture mode may be formed based on the analyzed information.

The touchscreen 151 displays a first mode icon 702 corresponding to the capture mode of the index location 701 and a second mode icon 703 corresponding to the capture mode of a flight path between the index locations on the map screen 710 including the index location 701. The first and the second mode icon 702, 703 are displayed at an index location and a flight path corresponding thereto. The first and the second mode icon 702, 703 may include an image or text indicating each capture mode. According to the present embodiment, the user can set a capture mode suitably set to an index location and a flight path without any additional control command for changing the capture mode.

A control method of changing a capture mode will be described with reference to FIG. 19C. When a touch input is applied to the second mode icon 703, the controller 180 changes the shape of the selected second mode icon 703, and the touchscreen 151 displays a candidate icon 720. The candidate icon 720 may include a plurality of mode icons corresponding to the second mode icon 703 and another capture mode. The controller 180 can analyze information on an index location corresponding to the selected second mode icon 703, and recommend at least one candidate capture mode based on the analyzed information. The candidate icon 720 may be displayed in the form of a mode icon corresponding to the candidate capture mode.

When a touch is applied to the candidate icon 720, the controller 180 can change the selected second mode icon 703 to an icon corresponding to the selected candidate capture mode. In the above, a control method of changing a capture mode for an index location has been described as an example, but the present disclosure is not limited to this. A control method of changing a capture mode for a flight path and a capture target object may be also substantially the same.

In more detail, the user can add a capture mode at a specific location based on a touch applied to the map screen. When the touch is applied, the controller 180 can control the touchscreen 151 to display a candidate icon corresponding to the candidate capture mode.

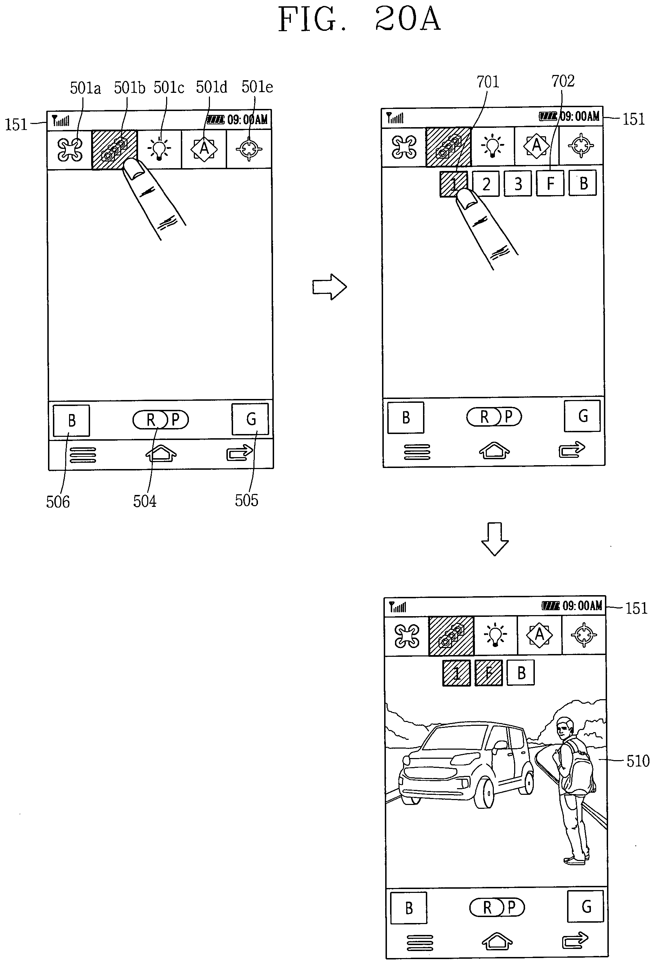

FIG. 20A is a conceptual view illustrating a control method of a mobile terminal for controlling a plurality of cameras mounted on an unmanned aerial vehicle. When a plurality of cameras are provided in the unmanned aerial vehicle, the controller 180 controls the touchscreen 151 to display a graphic image corresponding to the plurality of cameras when a touch is applied to the second menu image 502b, and display a first and a second select icon 505 (F, B) for setting a capture range of the camera when the unmanned aerial vehicle moves.

For example, when three camera modules are mounted on the unmanned aerial vehicle connected to the mobile terminal in a wireless manner, the touchscreen 151 displays a first through a third graphic image 704 (1, 2, 3). When a touch is applied to the first through the third graphic image 704, the controller 180 forms a capture control command for activating a camera corresponding to this. Furthermore, the controller 180 can form a capture control command for setting a capture range of the camera associated with the flight direction of the unmanned aerial vehicle based on a touch applied to the first and the second select icon 705. When the first select icon (F) is selected, the controller 180 forms a control command for capturing the front of the flight direction.

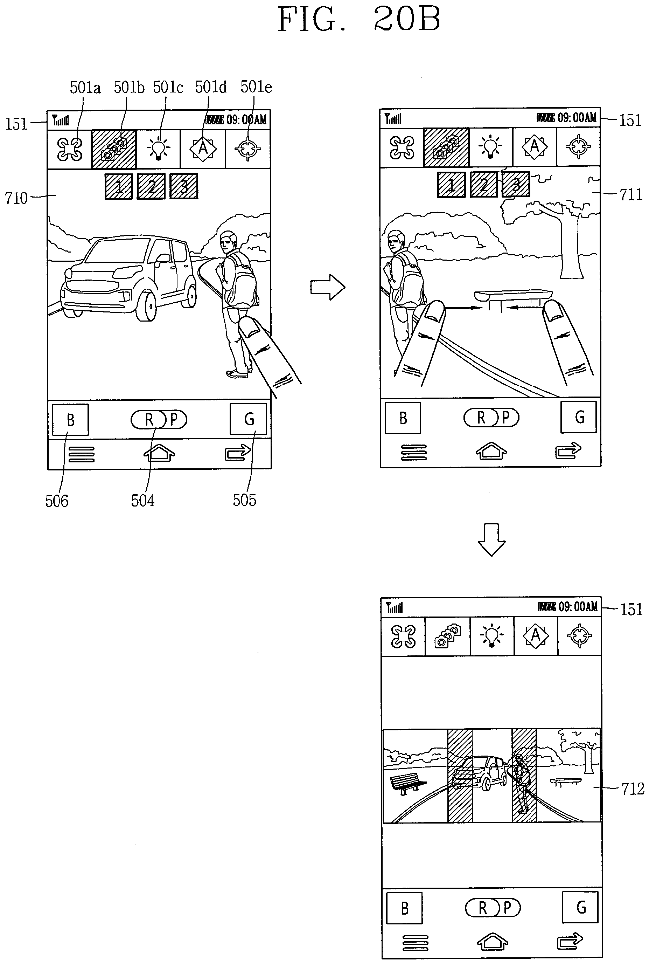

A control method of a capture image captured by a plurality of cameras will be described with reference to FIG. 20B. The controller 180 activates a plurality of cameras to receive a capture image captured by each camera. The touchscreen 151 displays a first capture image 720 captured by a first camera among a plurality of images captured by the plurality of cameras. The controller 180 displays a second capture image 721 captured by another camera based on a touch applied to the first capture image 720. The touch may correspond to a dragging type of touch applied in one direction. Images captured along the direction of the dragging touch input may be consecutively displayed. The plurality of cameras may capture one region in an overlapping manner due to the capture range. The controller 180 edits overlapping capture images based on the capture range and caption region.

When the plurality of cameras are able to capture a surrounding region surrounded 360 degrees around the unmanned aerial vehicle, the controller 180 can continuously display images captured based on a consecutive dragging touch. Accordingly, the user can check a surrounding region around the unmanned aerial vehicle. The touchscreen 151 can display an entire image 722 captured by the plurality of cameras based on a preset type of touch input. The touchscreen 151 can display a region captured in an overlapping manner by a plurality of cameras. The preset type of touch input may correspond to a pinch-in type of touch.

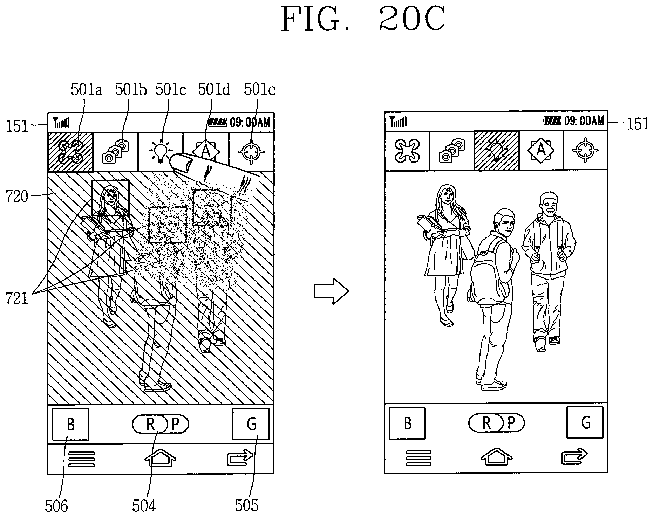

FIG. 20C is a conceptual view illustrating an embodiment in which a plurality of mobile terminals are connected to an unmanned aerial vehicle in a wireless manner. The unmanned aerial vehicle may be controlled by the plurality of mobile terminals or controlled by one of the plurality of mobile terminals. The unmanned aerial vehicle may transmit the captured images to the plurality of mobile terminals, respectively.

When a touch is applied to the third menu image 501c, the controller 180 transmits a control command for executing a flash mode to the unmanned aerial vehicle. When a flash module is mounted on the unmanned aerial vehicle, the flash module may be activated based on the control command. When a flash module is not mounted on the unmanned aerial vehicle, the unmanned aerial vehicle transmits the control command again to a plurality of mobile terminals connected thereto in a wireless manner. Flashes mounted on the plurality of mobile terminal 100 may be concurrently activated based on the control command.

When a plurality of mobile terminals are connected to the unmanned aerial vehicle in a wireless manner, a control command formed by one mobile terminal may be transmitted to another mobile terminal to execute substantially the same function at the same time. The audio output unit, microphone, and the like as well as the flash module may be activated at the same time.

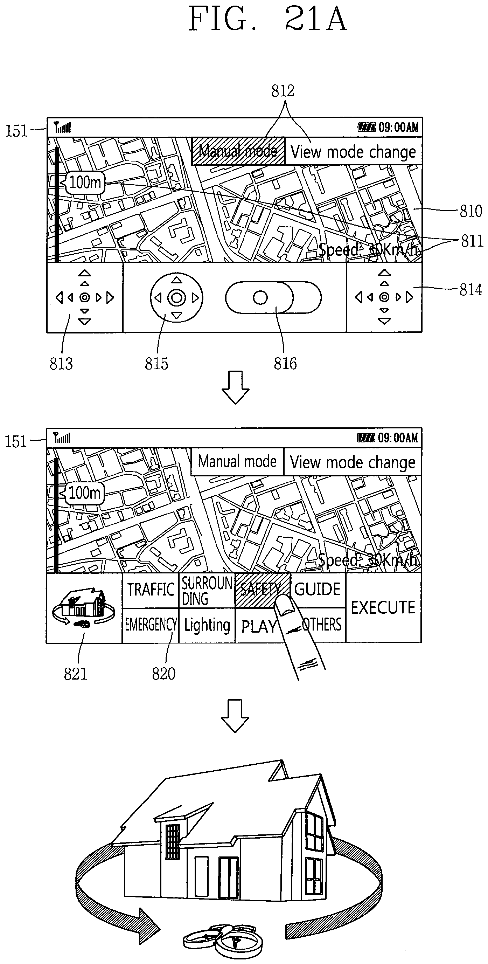

FIGS. 21A through 21G are conceptual views illustrating a control method of setting a capture mode based on a specific manual. The memory 170 stores a capture mode corresponding to a specific manual. Here, the capture mode according to a manual corresponds to a flight path and a capture mode that have been previously set to capture a region required for the user's circumstance in a suitable manner. When a specific manual is selected by the user, the controller 180 can select the resultant capture mode from the memory 170 or receive it from a specific server, and collect information on the user's current location as well as the selected manual to select the capture mode. Hereinafter, a capture mode corresponding to a detailed manual will be described.

Here, the capture mode may include at least one of capture modes described in FIGS. 6A through 7H. FIG. 21A is a conceptual view illustrating a control method of an unmanned aerial vehicle according to a security manual. When an application for the control of the unmanned aerial vehicle is performed, the touchscreen 151 displays a map screen 910 in the horizontal mode. Furthermore, the touchscreen 151 displays flight information 911 including the current altitude and flight speed of the unmanned aerial vehicle on the map screen 910. In the manual control mode, the touchscreen 151 can include a first control image 913 for controlling the flight direction of the unmanned aerial vehicle, a second control image 914 for controlling the flight speed of the unmanned aerial vehicle, a third control image 915 for controlling the camera of the unmanned aerial vehicle, and a capture control image 916 for executing the capture and flight thereof.

The controller controls the touchscreen 151 to display a manual window 920 based on a touch applied to a mode switching mode displayed on the touchscreen 151. The manual window 920 may include an icon indicating a plurality of manuals. The controller 180 can provide a recommended manual selected based on location information at which the unmanned aerial vehicle is currently flying.

The touchscreen 151 displays a preview image 921 describing a capture mode according to the selected manual, and forms a flight control command and a capture control command by the flight path and capture mode corresponding to the manual to transmit them to the unmanned aerial vehicle when a touch is applied to an execution icon. The controller 180 can perform the process of collecting additional information based on each manual. For example, the additional information may correspond to information on an additional capture target object, information on a flight time, information on a specific location, and the like.

The unmanned aerial vehicle is controlled based on the security manual to capture a surrounding region of the capture target object while flying around a specified capture target object. A period of rotating around the capture target object (for example, a specific house or user's house) may be set or a capture range around the capture target object may be set by the user. The unmanned aerial vehicle may be controlled to fly around a plurality of capture target objects.

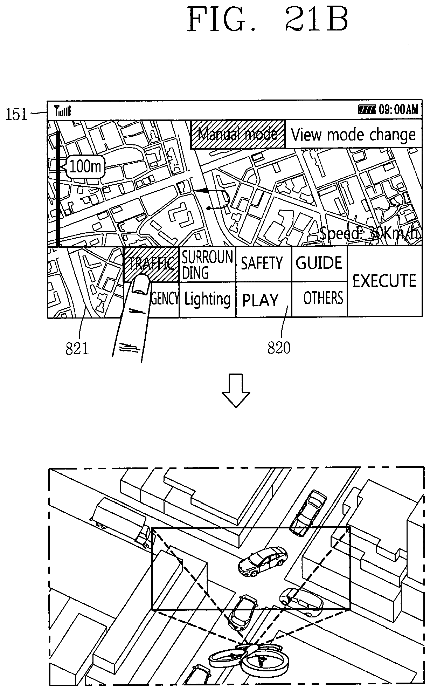

FIG. 21B is a conceptual view illustrating a control method of controlling an unmanned aerial vehicle according to a traffic manual. When the traffic manual is selected, the unmanned aerial vehicle is controlled to capture the traffic condition of a specific location. The specific location may be additionally selected by the user or determined by the user's current location. The controller 180 can receive information captured by the unmanned aerial vehicle to form route guide information in connection with a navigation application for traffic guidance.

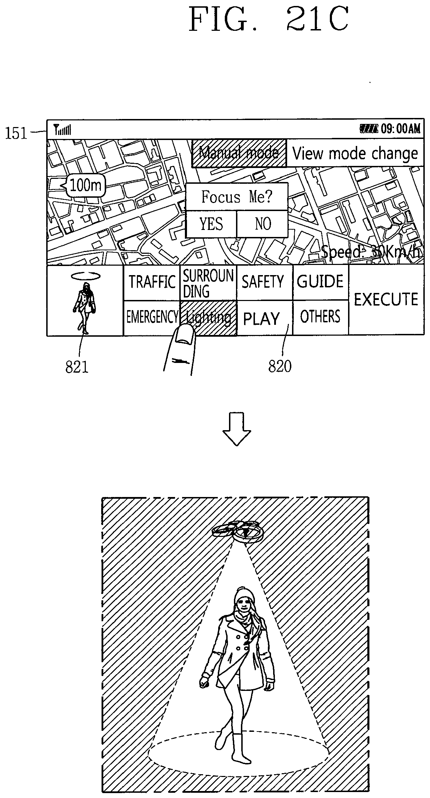

FIG. 21C is a conceptual view illustrating a control method of controlling an unmanned aerial vehicle according to a lighting manual. The lighting manual controls the unmanned aerial vehicle to provide lighting to a preset capture target object such that the unmanned aerial vehicle flies along the movement of the selected capture target object to emit lighting while maintaining a specified distance from the capture target object.

Further, when the lighting manual is selected, the touchscreen 151 displays a guide window (Focus Me?) for checking whether or not to select the user of the mobile terminal 100 as a capture target object. When the user of the mobile terminal 100 is selected as a capture target object, the controller 180 can transmit information on a location change of the mobile terminal 100 to the unmanned aerial vehicle in real time.

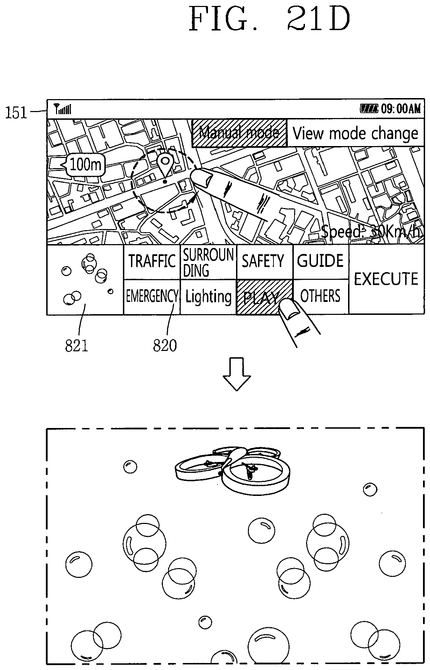

FIG. 21D is a conceptual view illustrating a control method of controlling an unmanned aerial vehicle according to a play manual. When the play manual is performed, a play function of the unmanned aerial vehicle may be performed. For example, a bubble function mounted on the unmanned aerial vehicle may be performed. When the play manual is selected, the touchscreen 151 receives a touch input on the map screen to set the flight path. The unmanned aerial vehicle may form the bubble while flying along the flight path.

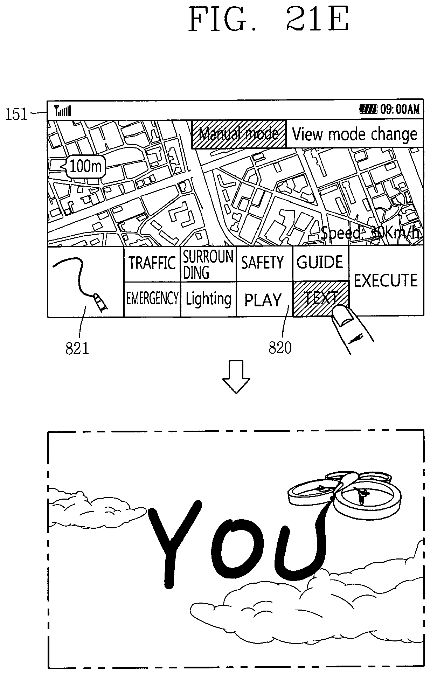

FIG. 21E is a conceptual view illustrating a control method of controlling the unmanned aerial vehicle according to a text manual. When the text manual is selected, the controller 180 can form a control command for forming a text according to a touch path applied to the map screen in the sky during the flight. An unmanned aerial vehicle according to the present embodiment may include a colorant emission unit for emitting a colorant in the sky to form an image.

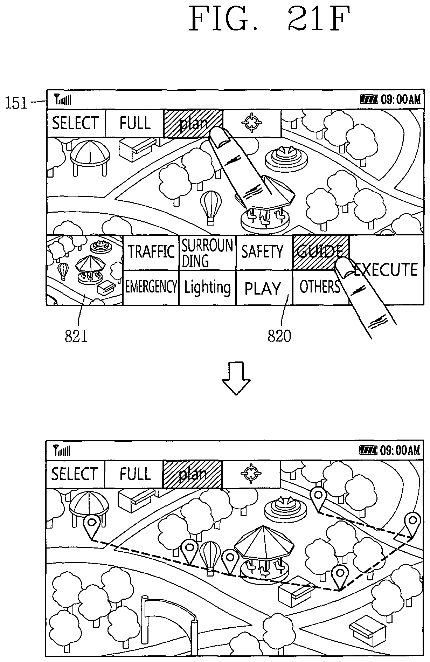

FIG. 21F is a conceptual view illustrating a control method of controlling an unmanned aerial vehicle according to a guide manual. When the guide manual is performed, the controller 180 collects the location information of the mobile terminal to collect information while flying over a region at which the mobile terminal is located. The controller 180 can provide a recommended route on the map screen using information collected from the unmanned aerial vehicle. For example, the controller 180 can obtain a number of people gathering at rides in an amusement park to provide a suitable moving path to the user.

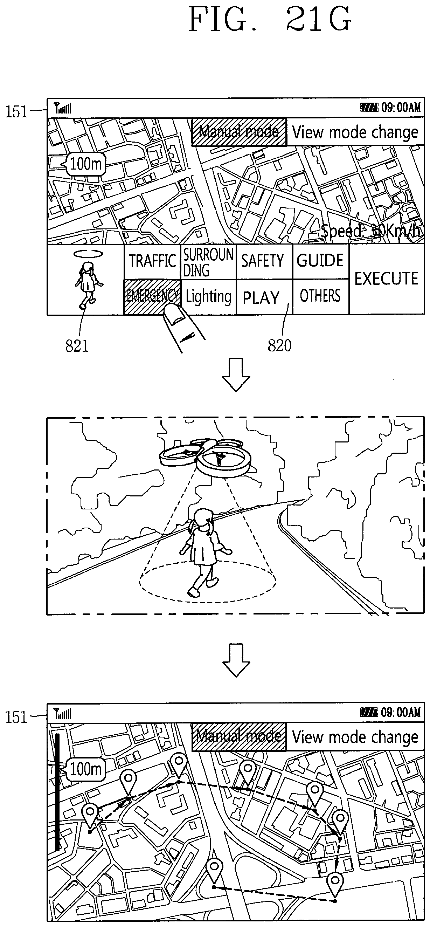

FIG. 21G is a conceptual view illustrating a control method of controlling an unmanned aerial vehicle according to an emergency manual. When the emergency manual is performed, the controller 180 controls the unmanned aerial vehicle to capture an external environment while flying a specific region to detect a preset capture target object. Furthermore, the unmanned aerial vehicle may collect a route of the capture target object while flying along the movement of the capture target object. The touchscreen 151 can display a map screen indicating the collected route of the capture target object.

According to the present embodiment, a user can select a flight mode or may not select a path according to a specific circumstance, and enter information suitable to the specific circumstance to receive his or her desired capture image.

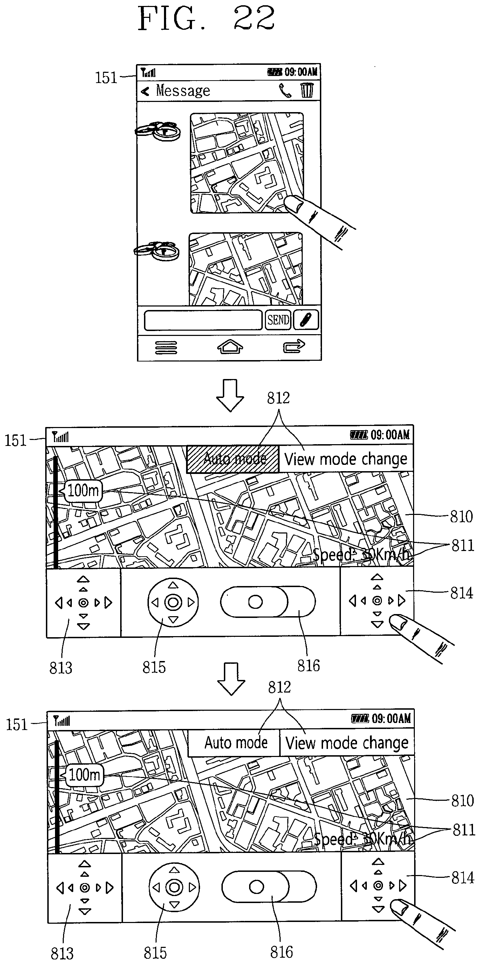

FIG. 22 is a conceptual view illustrating a control method of controlling an unmanned aerial vehicle according to another embodiment. A mobile terminal according to the present embodiment receives notification information from the unmanned aerial vehicle while the unmanned aerial vehicle flies in an automatic control mode. The controller 180 can receive the notification information at preset time intervals or receive the notification information when the unmanned aerial vehicle arrives at the preset index location. The notification information may include a capture image captured by the camera of the unmanned aerial vehicle.

In more detail, when the execution screen of another application is displayed on the touchscreen 151 or the touchscreen 151 is in an inactive state, the controller 180 can control the touchscreen 151 to display a pop-up window including the notification information. The controller 180 can execute an application for controlling the unmanned aerial vehicle based on a touch applied to the notification information. The touchscreen 151 displays the map screen 910 in the horizontal mode. The map screen 910 may include the map information of a region in which the unmanned aerial vehicle is currently flying. The touchscreen 151 displays a first through a third control image 912, 913, 914 and a capture icon 916 for controlling the flight and camera of the unmanned aerial vehicle, and displays the flight information 911 of the unmanned aerial vehicle. Furthermore, mode information 912 indicating that the automatic control mode has been activated may be displayed.

When a touch is applied to the control images, the controller 180 can form a control command based on the touch to temporarily switch the automatic control mode to a manual control mode. According to the present embodiment, a user can not need to continuously check the flight information of an unmanned aerial vehicle while the unmanned aerial vehicle flies using an automatic control mode, and may periodically check the flight of the unmanned aerial vehicle due to the notification information indicating that the unmanned aerial vehicle has arrived at a specific location. Furthermore, an application may be conveniently activated using notification information.

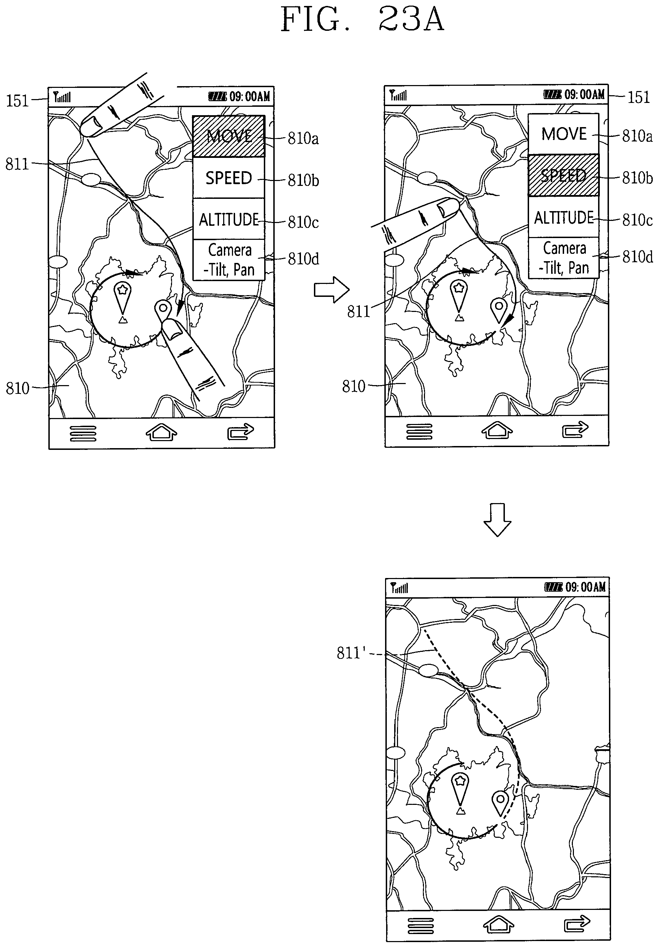

FIGS. 23A through 23D are conceptual views illustrating a control method of editing a flight path. Referring to FIG. 23A, when an edit mode for editing the flight path of the unmanned aerial vehicle is activated, the controller 180 controls the touchscreen 151 to display a map screen 910 including a route. In the edit mode, the touchscreen 151 displays a first through a fourth edit menu 910a, 910b, 910c, 910d. The first edit menu 910a, second edit menu 910b, third edit menu 910c and fourth edit menu 910d correspond to functions of editing a flight path, editing a speed, editing an altitude and editing a capture range of the camera, respectively.

The controller 180 can control the touchscreen 151 to display an image indicating a flight path on the map screen 910 when a flight path has been previously set, but to display only the map screen 910 when the flight path has not been previously set. When a touch is applied to the first edit menu 910a, the touchscreen 151 receives a touch input on the map screen 910. The controller 180 can form or correct a flight path based on the touch path of a consecutive touch input applied to the map screen. The touchscreen 151 displays a path image 911 corresponding to a flight path formed based on the touch path. Here, the touch input corresponds to a dragging type of touch input, but is not limited to this. An index location may be added or corrected based on a touch (single touch or long touch) applied to the map screen.

Further, when a touch is applied to the second edit menu 910b, the controller 180 edits a flight speed of the unmanned aerial vehicle. The controller 180 sets a flight speed of the unmanned aerial vehicle moving along a flight path corresponding to the path image 911 based on a touch input applied along the path image 911. A changed speed may be applicable to only a flight path to which a touch is applied on the path image 911.

For example, the controller 180 can change the speed based on the touch time of a long touch input initially applied to the path image 911. In addition, information on the corrected speed may be displayed on the touchscreen 151. The controller 180 controls the touchscreen 151 to display a modified guide 911' for indicating a speed changed based on the touch input.

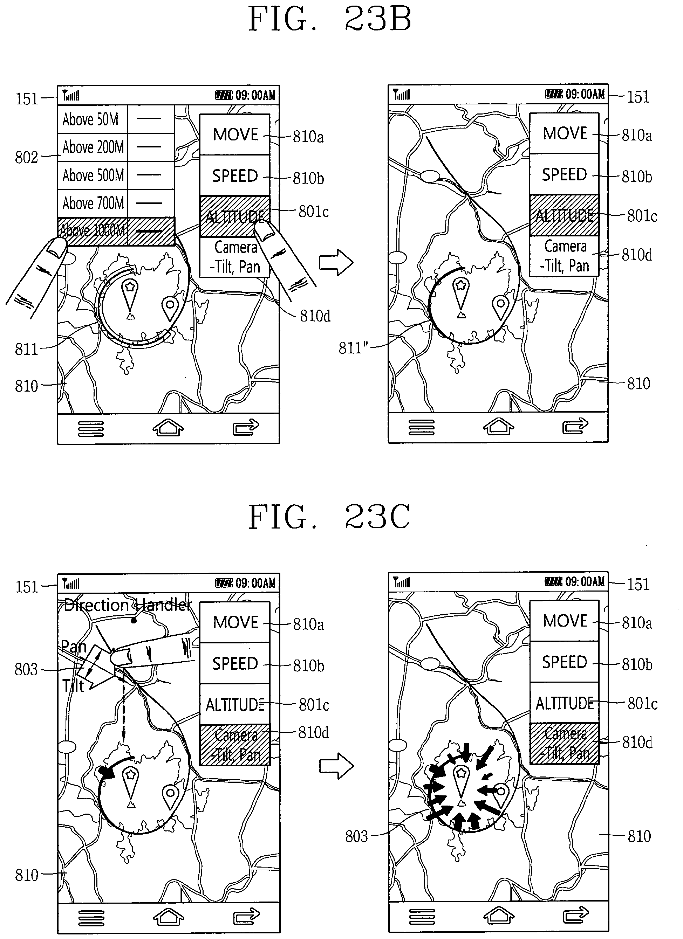

Referring to FIG. 23B, when the third edit menu 910c is selected, the controller 180 controls the touchscreen 151 to select a flight path for modifying an altitude based on a touch applied to the path image 911 on the map screen, and display an altitude select window 902 for selecting the altitude. When the flight altitude of the unmanned aerial vehicle is changed by the altitude select window 902, the controller 180 controls the touchscreen 151 to display the modified guide 911" indicating the changed altitude.

Referring to FIG. 23C, when the fourth edit menu 901d is selected, the touchscreen 151 displays an edit guide 903. The edit guide 903 may be formed in an arrow shape, and a location indicated by the arrow corresponds to a capture range. In other words, the shape (a length, a thickness, a pointing direction, etc.) of the arrow is changed by a user's touch input. Accordingly, the user can control the tilting and panning of a camera based on a touch input.

Furthermore, the location of the edit guide 903 may be changed on the map screen based on a touch input. The region and flight path to be captured by the camera may be determined by the location change, and the rotation degree of the unmanned aerial vehicle may be determined to dispose the camera by the direction of the arrow. The touchscreen 151 can display a plurality of edit icons 903 based on a touch applied to the fourth edit menu 910d. According to the present embodiment, the user can control the capture range and camera in a finer manner using an edit icon.

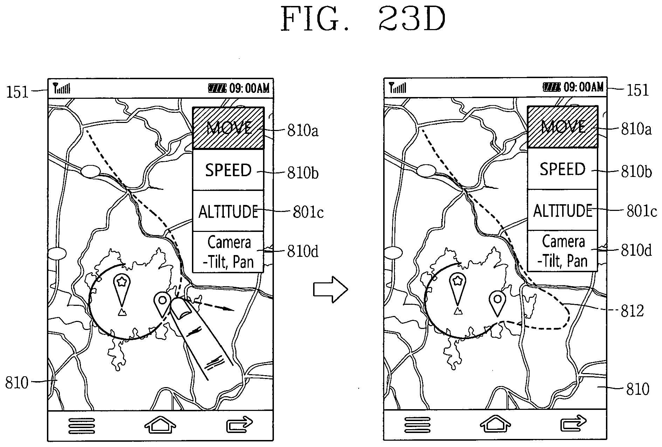

Referring to FIG. 23D, the controller 180 can change a flight path based on a touch applied to the path image 911 when the flight path is displayed. A path guide 911 is modified by a touch applied the path guide 911, and the controller 180 modifies a flight path based on the modified path guide 911. According to the present embodiment, a user can edit the flight and capture of the unmanned aerial vehicle in a finer manner using images displayed on the map screen, thereby forming the flight control command and capture control command in a more convenient manner.

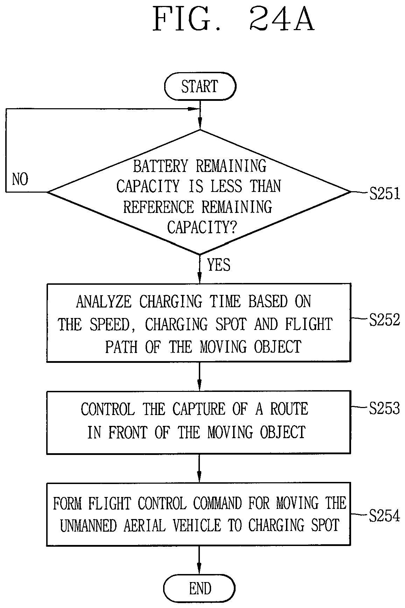

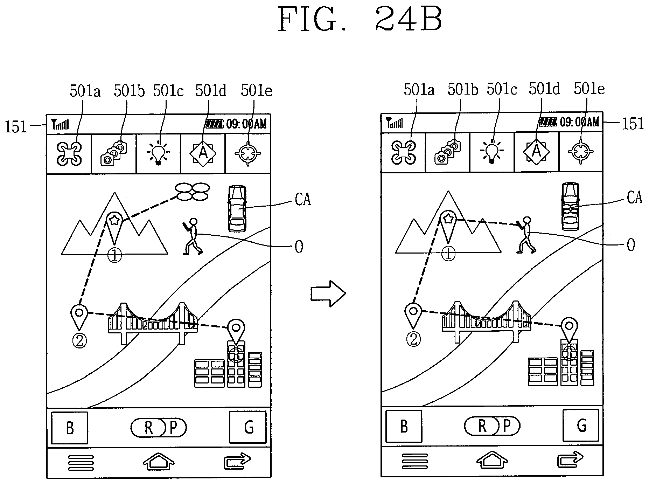

FIG. 24A is a flow chart illustrating a control method of controlling a flight path for charging an unmanned aerial vehicle, and FIG. 24B is a conceptual view illustrating the control method of FIG. 24A. Referring to FIGS. 24A and 24B, the controller 180 can receive information on the remaining capacity of a battery from the unmanned aerial vehicle at specific time intervals. When the remaining capacity of the battery is less than a reference remaining capacity (S351), the controller 180 analyzes a charging time based on a speed of the capture target object (O), a charging spot (CA) and a flight path (S352). When an application for controlling the unmanned aerial vehicle is in an inactive state, the controller 180 can control the touchscreen 151 to display a pop-up window or the like indicating information on the remaining capacity.

The charging spot (CA) denotes a place at which the battery of the unmanned aerial vehicle can be charged. The charging spot (CA) may be located on the flight path or located at a position from which the unmanned aerial vehicle starts flight. The controller 180 can perform the process of searching the nearest charging spot (CA) based on a flight path of the unmanned aerial vehicle. For example, when the unmanned aerial vehicle should arrive at the second index location before the unmanned aerial vehicle arrives at the second index location from the first index location, a charging time may be calculated using a round-trip moving time from a current position to the charging spot (CA) and a time required for the capture target object to arrive the second index location.

Further, when a capture for a route up to the second index location is required based on the capture mode, the controller 180 can form a flight control command and a capture control command for controlling the unmanned aerial vehicle to perform a capture up to the route in advance (S353). In this instance, the charging time may be calculated by additionally taking a time for capturing the flight path into consideration. However, when the unmanned aerial vehicle is controlled to capture an image at a specific index location, this process will be omitted.

When the charging time is calculated, the controller 180 forms a flight control command for allowing the unmanned aerial vehicle to move to the charging spot (CA) so as to perform charging during the charging time (S354). In more detail, when the charging time is not calculated, namely, when the charging spot is far away from a current location or a continuous capture of the capture target object is required, a flight control command for the charging spot is not formed. In this instance, the controller 180 can activate an edit mode for modifying the flight path and the capture mode.

Alternatively, the controller 180 can switch the unmanned aerial vehicle to a power save mode (for example, reduce the speed or change the resolution of a capture image). According to the present embodiment, it is possible to prevent an accident or the like occurring due to the low power of the unmanned aerial vehicle while flying in the automatic control mode without user's control.

The foregoing present invention may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A mobile terminal (100) comprising:
a touchscreen (151) configured to receive a touch input;
a wireless communication unit (110) configured to perform wireless communication with an unmanned aerial vehicle (10) having a camera to capture an external environment during flight;
a sensing unit (140) configured to sense a posture and movement of the mobile terminal; and
a controller (180) configured to:
set a flight path containing a plurality of index locations (521a, 521b, 521c) displayed on the touchscreen (151) for flying the unmanned aerial vehicle (10) in an automatic control mode,
select an index location (521b) among the plurality of index locations (521a, 521b, 521c) in response to a touch applied to the index location (521b),
display, on the touchscreen (151), a plurality of capture mode icons (503) corresponding to a plurality of capture modes respectively when the index location (521b) is selected,
select a capture mode icon among the plurality of capture mode icons (503) for capturing the index location (521b), and
associate a capture mode corresponding to the selected capture mode icon with the index location (521b) such that a flight control command and a capture control command are formed based on the set capture mode when the unmanned aerial vehicle (10) arrives at the index location (521b),
wherein the plurality of capture modes include a plurality of capture schemes to capture a capture target object by the camera of the unmanned aerial vehicle (10), and the plurality of index locations (521a, 521b, 521c) are set with a different capture mode respectively.

2. The mobile terminal (100) of claim 1, wherein the controller (180) is further configured to selectively activate a focus-me mode in which the camera is controlled to face a user of the mobile terminal (100) to capture the user based on a location of the mobile terminal (100) or a surrounding mode in which the camera is disposed away from the location of the mobile terminal (100) to rotate the unmanned aerial vehicle (10) in the first mode.

3. The mobile terminal (100) of one of claims 1 or 2, wherein the controller (180) is further configured to:
transmit the flight control command and the capture control command for controlling the camera based on the selected capture mode.

4. The mobile terminal (100) of one of claims 1 to 3,
wherein information associated with the plurality of capture modes is stored in a memory unit or received from a specific server.

5. The mobile terminal (100) of one of claims 1 to 3, wherein the controller (180) is further configured to:
sense the movement of the mobile terminal (100),
switch the automatic control mode to a manual control mode based on the movement of the mobile terminal (100),
display a control icon (565), on a capture image (561) which is captured by the camera in the automatic control mode and displayed on the touch screen (151) for changing the set flight path and the capture modes when the manual control mode is activated.

6. The mobile terminal (100) of one of claims 1 to 3, wherein the controller (180) is further configured to:
receive a capture image from the unmanned aerial vehicle (10) while an application for controlling the unmanned aerial vehicle (10) is in an inactive state, and
display notification information for notifying the reception of the capture image on the touchscreen (151).

## Patentansprüche

1. Mobiles Endgerät (100), mit:
einem Berührungsbildschirm (151), der dazu ausgeführt ist, eine Berührungseingabe zu empfangen,
einer Drahtloskommunikationseinheit (110), die dazu ausgeführt ist, eine Drahtloskommunikation mit einem unbemannten Luftfahrzeug (10) durchzuführen, das eine Kamera hat, um während des Flugs eine Außenumgebung aufzunehmen,
einer Erfassungseinheit (140), die dazu ausgeführt ist, eine Stellung und Bewegung des mobilen Endgeräts zu erfassen, und
einer Steuereinheit (180), die konfiguriert ist zum:
Einstellen eines Flugweges enthaltend mehrere auf dem Berührungsbildschirm (151) angezeigte Indexorte (521a, 521b, 521c) zum Fliegen des unbemannten Luftfahrzeugs (10) in einem Automatiksteuermodus,
Auswählen eines Indexortes (521b) aus den mehreren Indexorten (521a, 521b, 521c) als Reaktion auf eine auf den Indexort (521b) aufgebrachte Berührung,
Anzeigen mehrerer Aufnahmemodussymbole (503) auf dem Berührungsbildschirm (151) in Übereinstimmung mit mehreren entsprechenden Aufnahmemodi, wenn der Indexort (521b) ausgewählt ist,
Auswählen eines Aufnahmemodussymbols aus den mehreren Aufnahmemodussymbolen (503) zum Aufnehmen des Indexortes (521b), und
Zuordnen eines Aufnahmemodus entsprechend dem ausgewählten Aufnahmemodussymbol zu dem Indexort (521b), so dass basierend auf dem eingestellten Aufnahmemodus ein Flugsteuerbefehl und ein Aufnahmesteuerbefehl gebildet werden, wenn das unbemannte Luftfahrzeug (10) an dem Indexort (521b) ankommt,
wobei die mehreren Aufnahmemodi mehrere Aufnahmeschemata enthalten zum Aufnehmen eines Aufnahmezielobjekts durch die Kamera des unbemannten Luftfahrzeugs (10) und die mehreren Indexorte (521a, 521b, 521c) mit jeweils einem unterschiedlichen Aufnahmemodus eingestellt sind.

2. Mobiles Endgerät (100) nach Anspruch 1, wobei die Steuereinheit (180) ferner dazu konfiguriert ist, wahlweise einen Blicke zu mir-Modus, in dem die Kamera dazu gesteuert wird, einem Benutzer des mobilen Endgeräts (100) zugewandt zu sein, um den Benutzer basierend auf einem Ort des mobilen Endgeräts (100) aufzunehmen, oder einen Umgebungsmodus zu aktivieren, in dem die Kamera von dem Ort des mobilen Endgeräts (100) entfernt angeordnet ist, um das unbemannte Luftfahrzeug (10) in dem ersten Modus zu drehen.

3. Mobiles Endgerät (100) nach einem der Ansprüche 1 oder 2, wobei die Steuereinheit (108) ferner konfiguriert ist zum:
Übertragen des Flugsteuerbefehls und des Aufnahmesteuerbefehls zum Steuern der Kamera basierend auf dem ausgewählten Aufnahmemodus, wenn das unbemannte Luftfahrzeug (10) an dem Indexort (521b) ankommt.

4. Mobiles Endgerät (100) nach einem der Ansprüche 1 bis 3,
wobei mit den mehreren Aufnahmemodi zusammenhängende Informationen in einer Speichereinheit gespeichert sind oder von einem speziellen Server empfangen werden.

5. Mobiles Endgerät (100) nach einem der Ansprüche 1 bis 3, wobei die Steuereinheit (180) ferner konfiguriert ist zum:
Erfassen der Bewegung des mobilen Endgeräts (100),
Umschalten des Automatiksteuermodus in einen manuellen Steuermodus basierend auf der Bewegung des mobilen Endgeräts (100),
Anzeigen eines Steuersymbols (565) auf einem Aufnahmebild (561), das von der Kamera in dem Automatiksteuermodus aufgenommen und auf dem Berührungsbildschirm (151) angezeigt ist, um den eingestellten Flugweg und die Aufnahmemodi zu ändern, wenn der manuelle Steuermodus aktiviert ist.

6. Mobiles Endgerät (100) nach einem der Ansprüche 1 bis 3, wobei die Steuereinheit (180) ferner konfiguriert ist zum:
Empfangen eines Aufnahmebilds von dem unbemannten Luftfahrzeug (10), während eine Anwendung zum Steuern des unbemannten Luftfahrzeugs (10) sich in einem inaktiven Zustand befindet, und
Anzeigen einer Hinweisinformation zum Hinweisen auf den Empfang des Aufnahmebilds auf dem Berührungsbildschirm (151), wenn das Aufnahmebild empfangen wird.

## Revendications

1. Terminal mobile (100) comprenant :
un écran tactile (151) configuré pour recevoir une saisie tactile ;
une unité de communication sans fil (110) configurée pour exécuter une communication sans fil avec un véhicule aérien non habité (10) ayant une caméra pour capturer un environnement externe durant le vol ;
une unité de détection (140) configurée pour détecter une position et un mouvement du terminal mobile ; et
une commande (180) configurée pour :
régler une trajectoire de vol contenant une pluralité d'emplacements de repère (521a, 521b, 521c) affichés sur l'écran tactile (151) pour faire voler le véhicule aérien non habité (10) dans un mode de commande automatique,
sélectionner un emplacement de repère (521b) parmi la pluralité d'emplacements de repère (521a, 521b, 521c) en réponse à un toucher appliqué sur l'emplacement de repère (521b),
afficher, sur l'écran tactile (151), une pluralité d'icônes de mode de capture (503) correspondant à une pluralité de modes de capture respectivement lorsque l'emplacement de repère (521b) est sélectionné,
sélectionner une icône de mode de capture parmi la pluralité d'icônes de mode de capture (503) pour capturer l'emplacement de repère (521b), et
associer un mode de capture correspondant à l'icône de mode de capture sélectionnée avec l'emplacement de repère (521b) de façon à ce qu'une commande de contrôle de vol et une commande de contrôle de capture soient formées en se basant sur le mode de capture réglé lorsque le véhicule aérien non habité (10) arrive sur l'emplacement de repère (521b),
dans lequel la pluralité de modes de capture inclut une pluralité de schémas de capture pour capturer un objet cible de capture par la caméra du véhicule aérien non habité (10), et la pluralité d'emplacements de repère (521a, 521b, 521c) sont réglés avec un mode de capture différent, respectivement.

2. Terminal mobile (100) selon la revendication 1, dans lequel la commande (180) est en outre configurée pour activer de façon sélective un mode « ciblez-moi » dans lequel la caméra est commandée pour faire face à un utilisateur du terminal mobile (100) pour capturer l'utilisateur en se basant sur un emplacement du terminal mobile (100) ou un mode environnant dans lequel la caméra est disposée à distance de l'emplacement du terminal mobile (100) pour tourner le véhicule aérien non habité (10) dans le premier mode.

3. Terminal mobile (100) selon l'une des revendications 1 ou 2, dans lequel la commande (180) est en outre configurée pour :
transmettre la commande de contrôle de vol et la commande de contrôle de capture pour commander la caméra en se basant sur le mode de capture sélectionné.

4. Terminal mobile (100) selon l'une des revendications 1 à 3, dans lequel des informations associées à la pluralité de modes de capture sont stockées dans une unité de mémoire ou reçues d'un serveur spécifique.

5. Terminal mobile (100) selon l'une des revendications 1 à 3, dans lequel la commande (180) est en outre configurée pour :
détecter le mouvement du terminal mobile (100),
basculer le mode de commande automatique à un mode de commande manuel en se basant sur le mouvement du terminal mobile (100),
afficher une icône de commande (565), sur une image de capture (561) qui est capturée par la caméra dans le mode de commande automatique et affichée sur l'écran tactile (151) pour changer la trajectoire de vol réglée et les modes de capture lorsque le mode de commande manuel est activé.

6. Terminal mobile (100) selon l'une des revendications 1 à 3, dans lequel la commande (180) est en outre configurée pour :
recevoir une image de capture du véhicule aérien non habité (10) tandis qu'une application pour commander le véhicule aérien non habité (10) est dans un état inactif, et
afficher des informations de notification pour notifier la réception de l'image de capture sur l'écran tactile (151).
